(19) Europäisches Patentamt
European Patent Office
Office européen des brevets

(11) **EP 4 660 902 A1**

(12) **EUROPEAN PATENT APPLICATION**
published in accordance with Art. 153(4) EPC

(43) Date of publication:
**10.12.2025 Bulletin 2025/50**

(51) International Patent Classification (IPC):
*G06N 20/00* (2019.01)   *A23L 5/10* (2016.01)
*A47J 44/00* (2006.01)   *B25J 9/22* (2006.01)
*G06Q 10/0633* (2023.01)   *G06Q 50/12* (2012.01)
*B25J 9/16* (2006.01)

(21) Application number: 23919822.9

(22) Date of filing: 25.08.2023

(52) Cooperative Patent Classification (CPC):
G06Q 10/0633; A23L 5/10; A47J 36/321;
B25J 9/1656; G06N 3/008; G06N 3/044;
G06N 3/0442; G06N 3/045; G06N 3/0464;
G06N 3/047; G06N 3/08; G06N 3/084; G06N 3/09;
G06N 20/00; G06Q 50/12;                    (Cont.)

(86) International application number:
**PCT/JP2023/030737**

(87) International publication number:
**WO 2024/161686 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.01.2023 US 202363482085 P**

(71) Applicant: **Sony Group Corporation
Tokyo 108-0075 (JP)**

(72) Inventors:
• **FUJITA Masahiro
Tokyo 108-0075 (JP)**
• **NOMOTO Tomoko
Tokyo 108-0075 (JP)**
• **SHIGA Daizo
Tokyo 108-0075 (JP)**
• **ODA Tomohito
Tokyo 108-0075 (JP)**
• **KAMADA Hidekazu
Tokyo 108-0075 (JP)**
• **AOYAMA Kazumi
Tokyo 108-0075 (JP)**

(74) Representative: **D Young & Co LLP
3 Noble Street
London EC2V 7BQ (GB)**

(54) **INFORMATION PROCESSING DEVICE, INFORMATION PROCESSING METHOD, PROGRAM AND DISTRIBUTION SYSTEM**

(57)    The present technology relates to an information processing apparatus, an information processing method, a program, and a distribution system that make it possible to appropriately reproduce cooking of a certain person.

An information processing apparatus according to one aspect of the present technology generates process data configured to reproduce cooking according to a cooking condition, using a cooking process generation model trained on the basis of the process data of each process of the cooking, action data of a person who is cooking, and sensor data regarding a state of an ingredient. The present technology can be applied to an apparatus that assists in reproducing cooking, using a prediction model generated by learning based on data recording cooking by a professional cook.

FIG. 4

(52) Cooperative Patent Classification (CPC): (Cont.)
G05B 2219/40202

**Description**

TECHNICAL FIELD

The present technology particularly relates to an information processing apparatus, an information processing method, a program, and a distribution system capable of appropriately reproducing cooking of a certain person.

BACKGROUND ART

A technology enabled to convert data of a recipe that can be read by a human and cause a cooking robot to perform a work same as a cooking work described in the recipe has been proposed. In this technology, the cooking robot can be caused to perform the work by remote control (Patent Documents 1 and 2).

In addition, a technology has been proposed in which, by focusing on human sensation regarding food such as taste, aroma, and texture, sensor values of ingredients are recorded using sensors (a taste sensor, an aroma sensor, and a texture sensor) having functions similar to the functions of human sensation. The sensor values during cooking by a professional chef are prerecorded, and the action of the cooking robot is controlled using the recorded information so as to reproduce the sensor values, that is, the taste, aroma, and texture, of a dish made by the chef (Patent Document 3).

There has also been proposed a system that records, as sensor values during cooking by a chef, changes in temperature, time, and weight of ingredients and the like such that cooking of the chef can be reproduced even by ordinary people.

CITATION LIST

PATENT DOCUMENT

Patent Document 1: Japanese Patent Application Laid-Open No. 2020-075301
Patent Document 2: Japanese Patent Application Laid-Open No. 2020-075302
Patent Document 3: Japanese Patent Application Laid-Open No. 2022-063884

SUMMARY OF THE INVENTION

PROBLEMS TO BE SOLVED BY THE INVENTION

If the sensor values during cooking of the chef are prerecorded, there are disadvantages as follows in order to instruct on the next work at an appropriate timing at the time of reproduction.

1. The timing of moving on to the next work and the strength and time of the work are different depending on varieties in the types of ingredients prepared at a reproducing side, the weight and initial temperature of the ingredients, the amount to be made (for one person, for two persons, for three persons, and so forth), and the like, and it is difficult to adapt to these varieties.
2. It is supposed that the quality of reproduction is enhanced by equipping many sensors in a device used to reproduce a dish, but the device will have a larger size. In addition, the price of the device will rise. In particular, it is difficult to adopt sensors for measuring the taste, aroma, and texture because the sensors are expensive.

The present technology has been made in view of such a situation and enables appropriate reproduction of cooking of a certain person.

SOLUTIONS TO PROBLEMS

An information processing apparatus according to a first aspect of the present technology includes a control unit that generates process data configured to reproduce cooking according to a cooking condition, using a cooking process generation model trained on the basis of the process data of each process of the cooking, action data of a person who is cooking, and sensor data regarding a state of an ingredient.

An information processing apparatus according to a second aspect of the present technology includes a training unit that trains a cooking process generation model that generates process data configured to reproduce cooking according to a cooking condition on the basis of the process data regarding each process of the cooking, action data of a person who is cooking, and sensor data regarding a state of an ingredient.

In the first aspect of the present technology, process data configured to reproduce cooking is generated according to a cooking condition, using a cooking process generation model trained on the basis of the process data of each process of the cooking, action data of a person who is cooking, and sensor data regarding a state of an ingredient.

In the second aspect of the present technology, a cooking process generation model is trained that generates process data configured to reproduce cooking according to a cooking condition on the basis of the process data regarding each process of the cooking, action data of a person who is cooking, and sensor data regarding a state of an ingredient.

BRIEF DESCRIPTION OF DRAWINGS

Fig. 1 is a diagram illustrating a flow of reproduction of a dish in a cooking reproduction system according to an embodiment of the present technology.
Fig. 2 is a diagram illustrating a flow of implementation of a cooking assistance system.
Fig. 3 is a diagram illustrating a flow of implementation of the cooking assistance system.
Fig. 4 is a diagram illustrating an example of information included in cooking record data.
Fig. 5 is a diagram illustrating an example of entities that perform reproduction cooking.
Fig. 6 is a diagram illustrating an example of works performed in each process of cooking.
Fig. 7 is a diagram illustrating an example of state changes in ingredients.
Fig. 8 is a diagram illustrating an example of information that can be measured using sensors.
Fig. 9 is a diagram illustrating an example of a relationship among cooking meanings, sensor data, and processes.
Fig. 10 is a diagram illustrating a configuration example of a cooking recording system.
Fig. 11 is a diagram illustrating a configuration example of the cooking assistance system.
Fig. 12 is a block diagram illustrating a configuration example of the cooking reproduction system.
Fig. 13 is a flowchart explaining processing of a cooking recording apparatus.
Fig. 14 is a flowchart explaining cooking process generation model generation processing of a model generation apparatus.
Fig. 15 is a flowchart explaining cooking process data generation processing of the model generation apparatus.
Fig. 16 is a diagram illustrating an example of cooking process data.
Fig. 17 is a flowchart explaining processing of a cooking assistance apparatus.
Fig. 18 is a diagram illustrating a first example of training using the cooking record data.
Fig. 19 is a diagram schematically illustrating a state of recording cooking.
Fig. 20 is a diagram illustrating an example of training using the expression in Fig. 19.
Fig. 21 is a diagram illustrating a recurrent neural network (RNN) to which Parametric Bias (PB) is input.
Fig. 22 is a diagram schematically illustrating a state of reproduction cooking.
Fig. 23 is a diagram illustrating an example of assistance in reproduction cooking using the expression in Fig. 22.
Fig. 24 is a diagram illustrating an example of temperature adjustment for a heater.
Fig. 25 is a diagram illustrating an example of an instruction to adjust the level of a heater.
Fig. 26 is a diagram illustrating an example of control of a stirring work using a stirring stick.
Fig. 27 is a diagram illustrating an example of control in a case where a user and a cooking robot perform work in cooperation.
Fig. 28 is a diagram illustrating a second example of learning using the cooking record data.
Fig. 29 is a diagram illustrating an example of process data rpc1(t).
Fig. 30 is a diagram illustrating an example of learning using the process data rpc1(t).
Fig. 31 is a diagram illustrating an example of assistance in reproduction cooking.
Fig. 32 is a block diagram illustrating a configuration example of an information processing unit.
Fig. 33 is a diagram illustrating an example of a text output by a large language model (LLM).
Fig. 34 is a diagram illustrating an example of a text output by the LLM.
Fig. 35 is a diagram illustrating a configuration example of the cooking assistance apparatus.
Fig. 36 is a diagram illustrating another configuration example of the cooking assistance system.
Fig. 37 is a diagram illustrating a flow of data in the cooking assistance system.
Fig. 38 is a diagram illustrating another flow of data in the cooking assistance system.
Fig. 39 is a diagram illustrating an example of assistance in reproduction cooking.
Fig. 40 is a diagram illustrating a basic configuration of a Transformer.
Fig. 41 is a diagram illustrating an example of input and output of the Transformer.
Fig. 42 is a diagram illustrating an example of assistance in reproduction cooking using the Transformer.
Fig. 43 is a block diagram illustrating a functional configuration example at recording and learning sides.

Fig. 44 is a block diagram illustrating a configuration example of the cooking robot.
Fig. 45 is a block diagram illustrating a configuration example of a computer.
Fig. 46 is a block diagram illustrating a configuration example of a distribution system.

MODE FOR CARRYING OUT THE INVENTION

Hereinafter, modes for carrying out the present technology will be described. The description will be given in the following order.

1. Overview of Present Technology
2. Configuration and Action of Cooking Reproduction System
3. Example Using First Learning
4. Example Using Second Learning (Learning Using Information on Chemical Changes)
5. Example of Using Large Language Model (LLM) and Vision & Language (V&L) Foundation Model to Determine Process Switching Timing
6. About Case Where Reduced Sensors are Provided in Environment at Reproducing Side
7. Example Using Transformer
8. Others

<<Overview of Present Technology>>

<About Cooking Reproduction System>

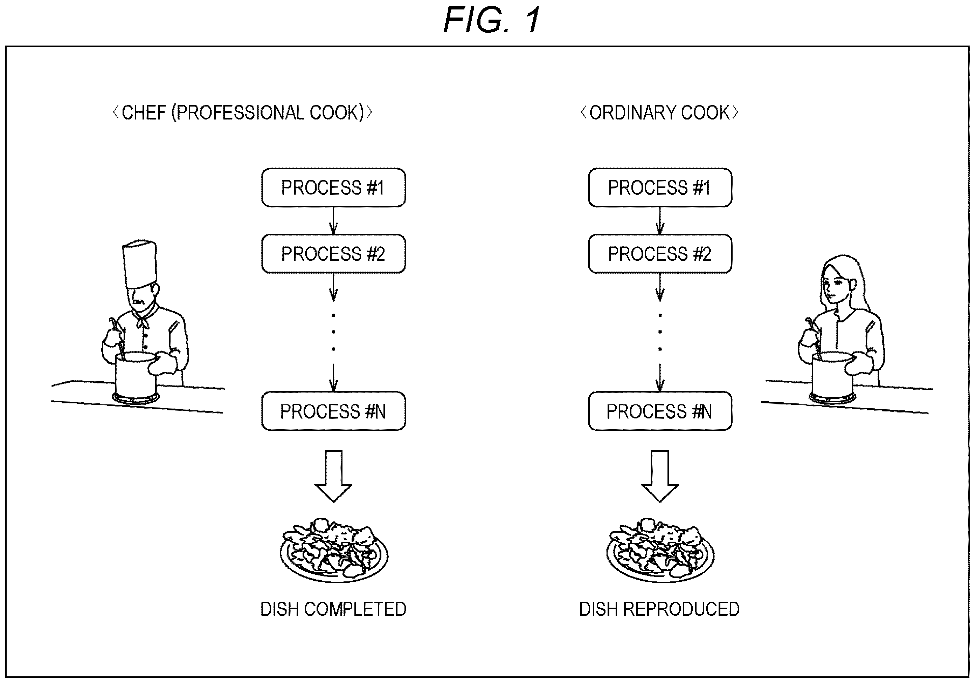

Fig. 1 is a diagram illustrating a flow of reproduction of a dish in a cooking reproduction system according to an embodiment of the present technology.

In the cooking reproduction system, processes each same as the process of cooking performed by a professional cook who makes a certain dish is reproduced by an ordinary cook, and the same dish as the dish made by the professional cook is reproduced.

In the example in Fig. 1, one dish is completed by a chef who is a professional cook performing the work of processes #1 to #N. Meanwhile, the work of processes #1 to #N is performed by an ordinary cook with the assistance of the cooking reproduction system, and a dish same as the dish made by the chef is reproduced.

The cooking reproduction system includes a professional cook side configuration and an ordinary cook side configuration that reproduces a cooking process. As will be described later, each work during cooking by the professional cook to make a dish is recorded using a sensor or the like.

In the following description, it is assumed that a professional cook is a chef as appropriate. The professional cook as a first person includes various sorts of persons who can perform cooking as an original sample, such as a cooking researcher and a teacher of a cooking class.

In addition, the cooking reproduction system is used by an ordinary cook as a second person who is a user to provide a finished dish to another person by imitating the work of the professional cook or to learn the technique of the professional cook by imitating the work. Hereinafter, the ordinary cook will be simply described as a user as appropriate.

Cooking performed by the chef to record work and the like will be referred to as recording cooking, and cooking performed by the user to reproduce a dish will be referred to as reproduction cooking.

In the present technology, the following configurations and functions are implemented.

1: Prediction model capable of coping with a change in condition at a reproducing side, such as the amount of foodstuffs
A plurality of pieces of information on actions during cooking by the chef, and the like are collected. By performing learning using information regarding cooking by various chefs for various dishes, a prediction model (inference model) used to reproduce cooking for making various dishes is generated. By using knowledge such as know-how regarding cooking for learning, a prediction model capable of coping with variations of conditions at the reproducing side, such as the type of dish, the number of dishes to be made (for how many persons), the weight of ingredients, and the initial temperature of ingredients, is generated. By using the prediction model, an action instruction according to the condition at the reproducing side is generated at an appropriate timing and is output to the user who reproduces the dish.

2: Prediction model capable of coping with environment at the reproducing side with few sensors
Various sensors and tools (cooking utensils) are prepared in the environment at a recording side where the chef performs cooking. By reliably recording the cooking of the chef, a prediction model capable of coping with even various changes in conditions is generated. In addition, what information is necessary for instructing the user on the work is analyzed. Even in a case where there are few sensors and tools prepared in the environment at the reproducing side where the user performs cooking, high-quality work instructions can be given.

3: Distribution system to which a rights protection function for model information regarding the prediction model used to generate the process data is added

4: A system in which a person and a cooking robot can perform cooking in cooperation

5: Setting of an initial value and a subgoal, and time series generation of the process data for use in reproduction

6: Output of navigation for the person and control of the cooking robot

7: Generation of the process data with which the work performed by a plurality of chefs can be performed by one user or only by the cooking robot

<Flow of Generation of Cooking Assistance System>

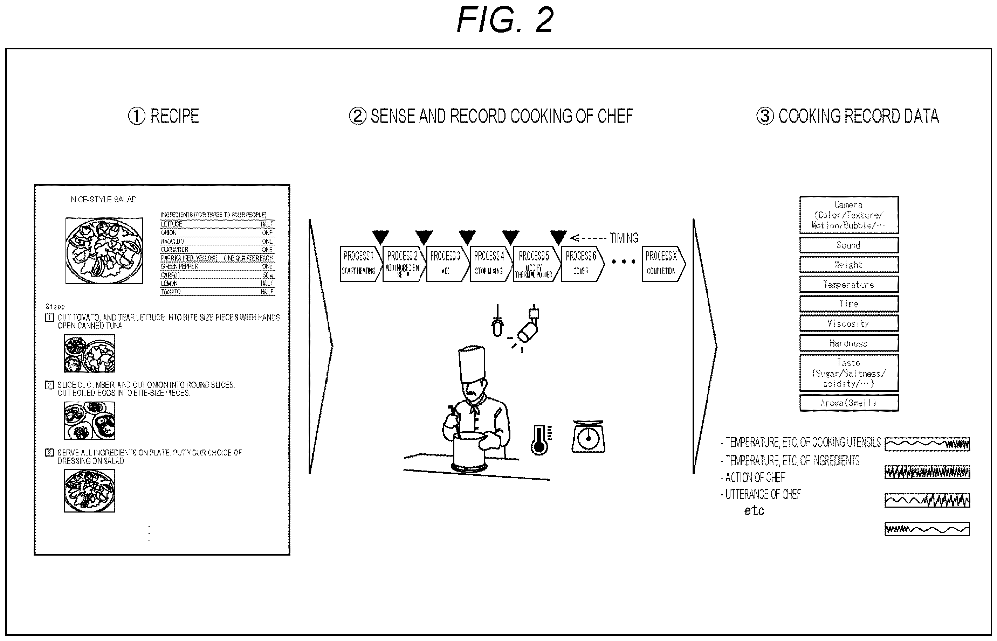

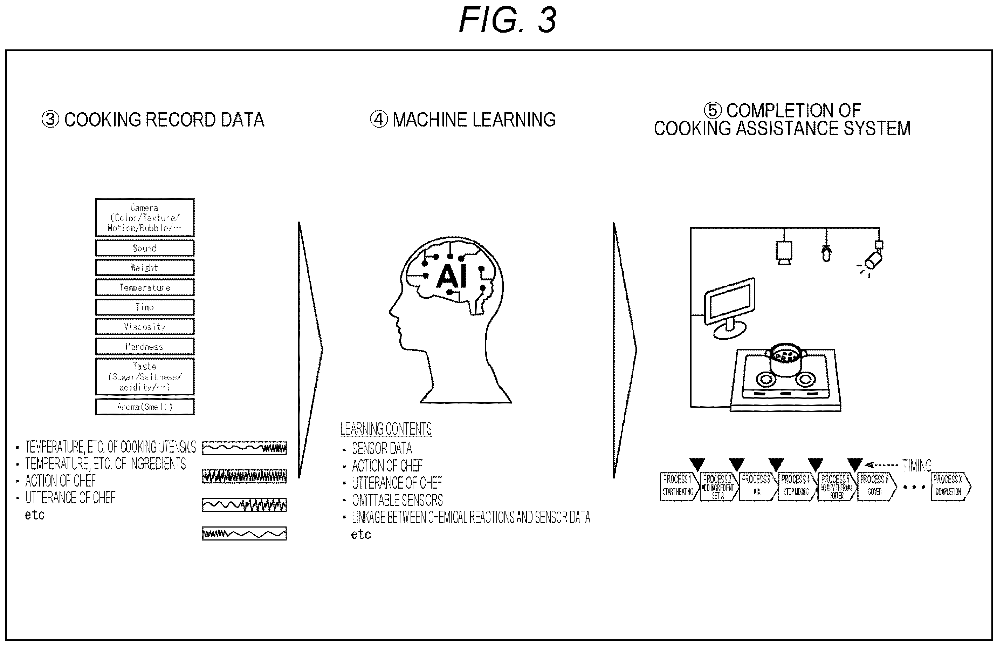

Figs. 2 and 3 are diagrams illustrating a flow of implementation of a cooking assistance system. The cooking assistance system is a system that assists in reproducing cooking of a chef. The cooking assistance system is prepared as a configuration at the reproducing side where the user performs cooking.

As illustrated at the left end of Fig. 2, a recipe for a certain dish is prepared. The recipe is information including text and photographs that can be read and viewed by a person to understand the contents.

As illustrated in the center of Fig. 2, cooking of the chef is sensed, and sensor data as a sensing result is recorded. The cooking of the chef is performed according to the recipe. Information on each process is input at a predetermined timing such as before the start of cooking or while the chef is cooking. In the example in Fig. 2, information on each process starting from a process 1, which is a process of "start heating", is input. The input information includes time information on each process. A process switching timing (switching point) is specified from the time of each process.

Various sorts of sensors such as a camera, a microphone, a weight sensor, and a thermometer are prepared in the environment at the recording side where the chef performs cooking. While the chef is cooking, various sorts of information such as the temperature of cooking utensils, the temperature of ingredients, an action of the chef, and an utterance of the chef are repeatedly sensed at predetermined time intervals, and sensor data as a sensing result is recorded. The sensor data includes time-series data of various sorts of information such as the temperature of cooking utensils and the temperature of ingredients.

As illustrated on the right side of Fig. 2, data including the process data that is information on each process, and the sensor data as a sensing result is generated and recorded as cooking record data.

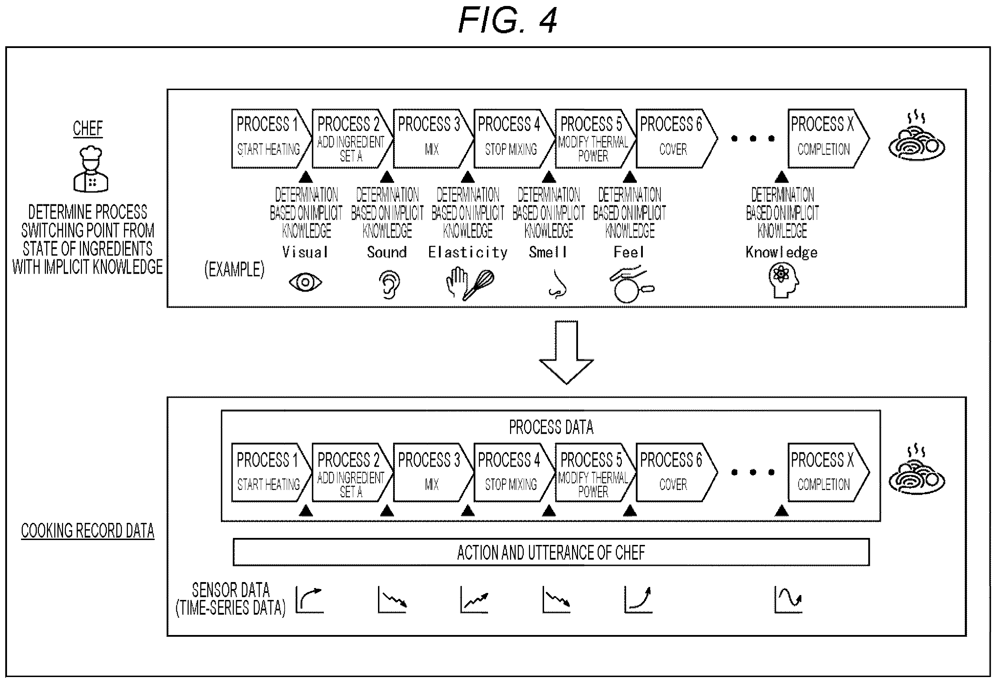

Fig. 4 is a diagram illustrating an example of information included in the cooking record data.

As illustrated in the upper part of Fig. 4, at the time of recording cooking, the chef uses the own experience, knowledge, and the like of the chef and performs work while, for example, determining the switching timing of each process. The determination of the chef is based on implicit knowledge.

In the example in Fig. 4, after the heating of ingredients in the process 1 is started, the chef determines the timing of adding an ingredient set A in a process 2 from the appearance state (Visual) of the ingredients. In addition, after the ingredient set A is added in the process 2, the chef determines the start timing of the work of mixing in a process 3 from the state (Sound) of a sound emitted from the ingredients. Similarly, the chef determines the switching timing of each process on the basis of the elasticity (Elasticity), the aroma (Smell), the sense of touch (Feel), and the knowledge (Knowledge) of the ingredients.

At the time of recording cooking, for example, the switching timing of each process is input by an utterance of the chef, and the process data including time information on each process is generated as illustrated in the lower part of Fig. 4. Instead of being input by using an utterance, the time of each process may be input using another method such as operating a screen displayed on a display.

The process data includes information such as a process identifier (ID), time, and contents of work for each process. The information on the contents of work includes information on the ingredients used in the work. In addition, the information on the contents of work includes information on description of the work such as "heating", "stirring", and "adding ingredients", and information such as a quantitative parameter regarding the work. The quantitative parameter regarding the work is information such as "heating, 100 W" and "rotational stirring, 1 time/sec". The information on the time of each process is also information indicating a process switching timing. The process data may be automatically generated by analyzing a recipe, or may be generated according to an input from a person (including the chef) operating a computer.

The cooking record data in which the process data, the time-series data of the action or utterance of the chef, and the time-series data of the sensor data generated in this manner are synchronized is generated and recorded. In the lower part of Fig. 4, the horizontal direction indicates a time. For example, the time-series data of the action or utterance of the chef illustrated in the horizontally long band shape indicates that the action or utterance observed at each time is synchronized (linked) with the process illustrated above the action or utterance. In addition, a plurality of graphs of the sensor data illustrated side by side indicates that the sensor data measured at each time is synchronized with the process illustrated above the sensor data.

As illustrated in the center of Fig. 3, machine learning is performed with the cooking record data recorded in this manner as learning data, and a prediction model is generated. When learning is performed on the basis of the cooking record data, the prediction model becomes a model capable of predicting the action and the state of ingredients in each process.

In addition, the prediction model becomes a model capable of predicting the contents of each process and the process switching timing on the basis of the state of ingredients, and the like. Navigation for the user to reproduce the work of each process can be output on the basis of the prediction result by the prediction model. The prediction model generated on the basis of the cooking record data is a cooking process generation model capable of generating a process at the time of reproduction cooking.

As illustrated on the right side of Fig. 3, the cooking process generation model is mounted in the environment at the reproducing side, and the cooking assistance system is completed. The cooking assistance system is prepared in various places such as homes, eating and drinking places, and public facilities. An ordinary cook such as a person who makes dishes at home, an employee of an eating and drinking place such as a restaurant, or an employee who provides dishes in a public facility is a user who performs the reproduction cooking.

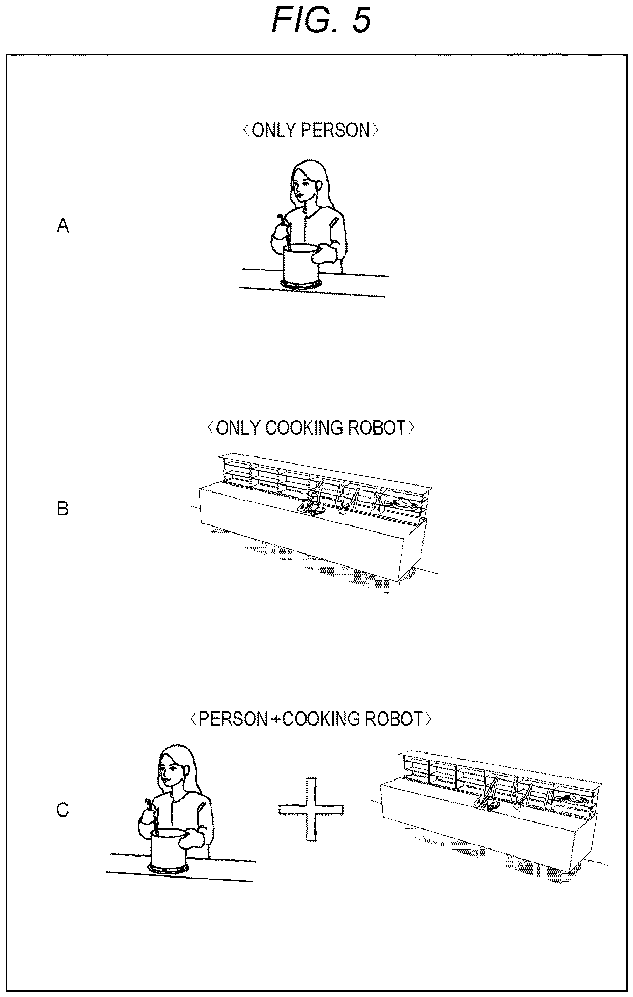

Fig. 5 is a diagram illustrating an example of entities that perform the reproduction cooking.

As illustrated in A to C of Fig. 5, the patterns of the entities that perform the reproduction cooking include a pattern of only a person (user), a pattern of only a cooking robot, and a pattern of a person and a cooking robot. The navigation for the work of each process is output to the person, and a control command for causing the cooking robot to execute the action of the work of each process is output to the cooking robot.

In a case where the entities that perform the reproduction cooking are the person and the cooking robot, the same work or different works are performed in cooperation. In this manner, the entities that perform the reproduction cooking sometimes include a cooking robot as well as a person.

<Premise of Cooking of Chef>

Here, the premise of cooking of the chef will be described.

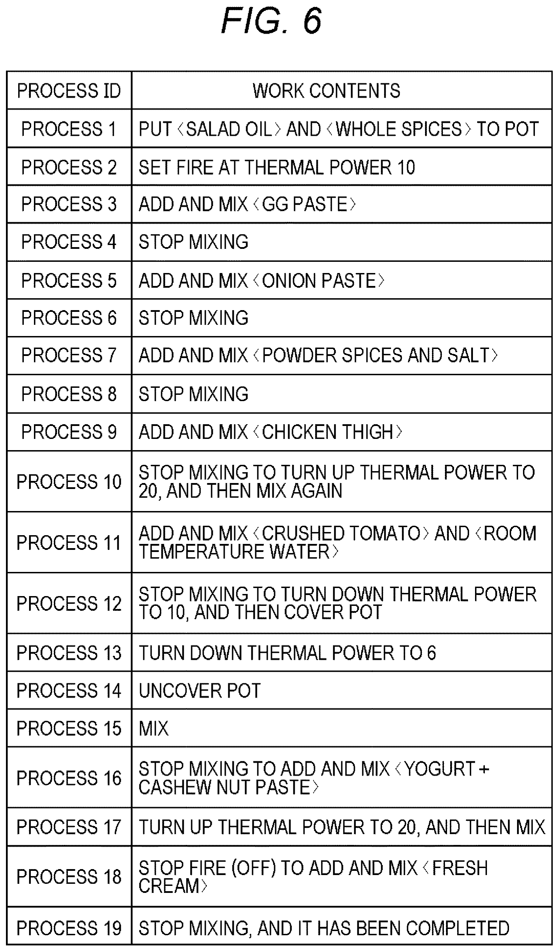

Fig. 6 is a diagram illustrating an example of works performed in each process of cooking.

In cooking for making a certain dish, the chef considers a recipe on the basis of on the own knowledge of the chef and performs actual work. In some cases, a new recipe may be considered with reference to an existing recipe such as a recipe that has been considered in the past by the chef or a recipe that has been considered by another person. Each process of cooking described in a table form is as illustrated in Fig. 6.

A process 1 illustrated in Fig. 6 is a process of "putting salad oil and whole spices to a pot", and a process 2 is a process of "setting fire at thermal power 10". The contents of each work are similarly set for the processes after the process 2. The chef will determine the process switching timing on the basis of a change in the state of the ingredients and advance the work of each process.

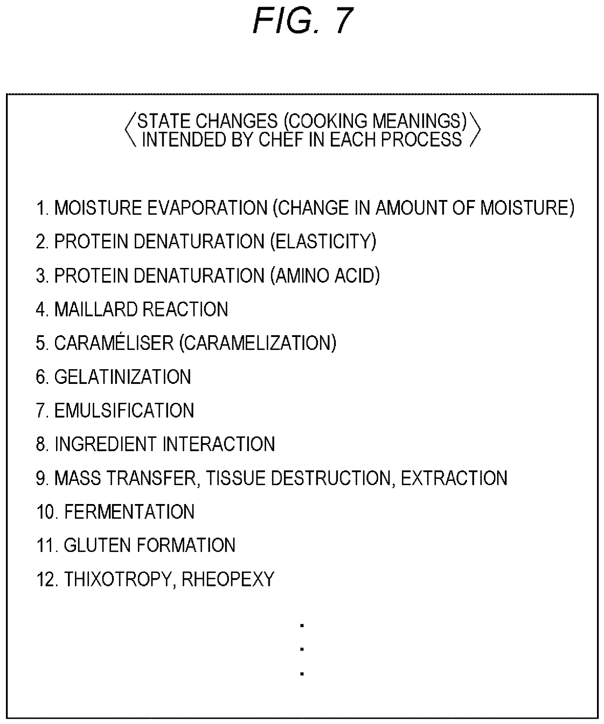

Fig. 7 is a diagram illustrating an example of state changes in ingredients regarding cooking.

As illustrated in Fig. 7, the state changes in ingredients include changes such as moisture evaporation (change in the amount of moisture), protein denaturation (elasticity), protein denaturation (amino acid), Maillard reaction, and caraméliser (caramelization), for example. The chef will perform cooking for each process with the intention that such state changes (chemical changes) will take place in the ingredients.

For example, "adding and mixing an onion paste" illustrated in Fig. 6 as a process 5 is a process intended to allow chemical changes such as a Maillard reaction and caramelization to arise in the onion paste. When the onion is fried, sugar contained in the onion is heated and decomposed, and the sugar is oxidized to have caramelization. This makes the onion sweeter and more brownish. In addition, amino acids and sugar contained in the onion react with each other to have a Maillard reaction, and an aroma and a flavor are produced from the onion. The chemical change of the ingredients intended by the chef can be said to have a meaning in terms of cooking (cooking meaning).

The chef has knowledge in cooking and estimates these chemical changes from information such as "color", "sound", "weight", "temperature", "time" such as heating time, "viscosity", "hardness", "taste" such as sweetness, saltiness, and sourness, and "aroma" (possibly may or may not be conscious). Each piece of information used to estimate a chemical change is information that can be measured by a sensor.

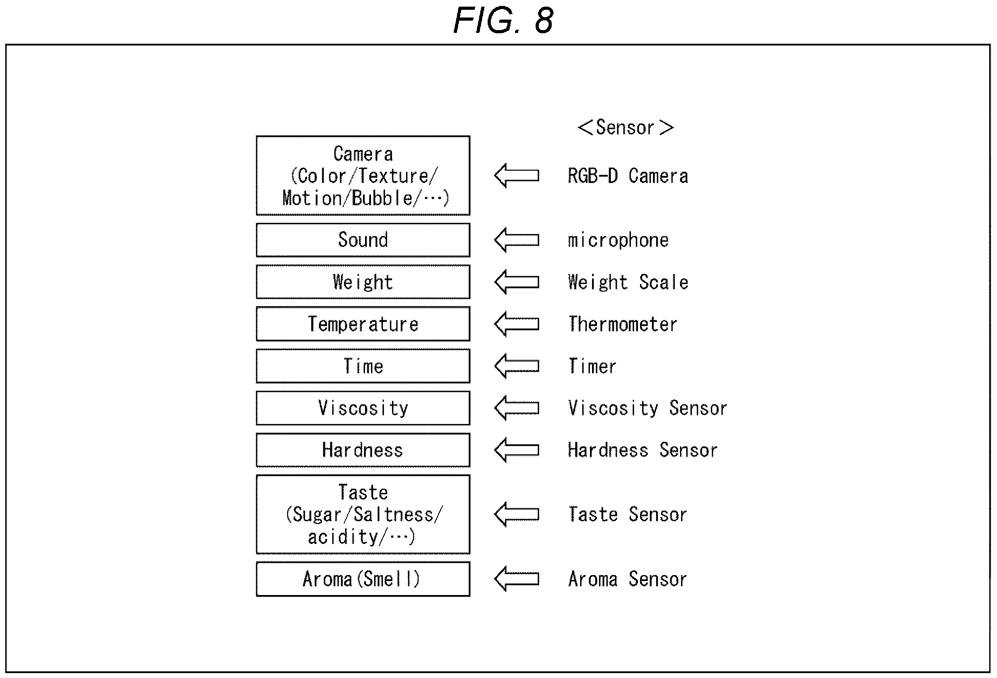

Fig. 8 is a diagram illustrating an example of information that can be measured using sensors.

As illustrated in order from the top, the color, texture, motions, bubbles, and the like of the ingredients can be measured on the basis of an image captured by a red-green-blue-distance (RGB-D) camera capable of capturing an RGB image and a distance image. For example, the color, texture, motions, bubbles, and the like are measured by analyzing an image or using a model generated by machine learning.

The sound emitted from the ingredients can be measured by a microphone. Similarly, the weight, temperature, time, viscosity, hardness, taste, and aroma can be measured by a weight sensor, a temperature sensor, a timer, a viscosity sensor, a hardness sensor, a taste sensor, and an aroma sensor, respectively.

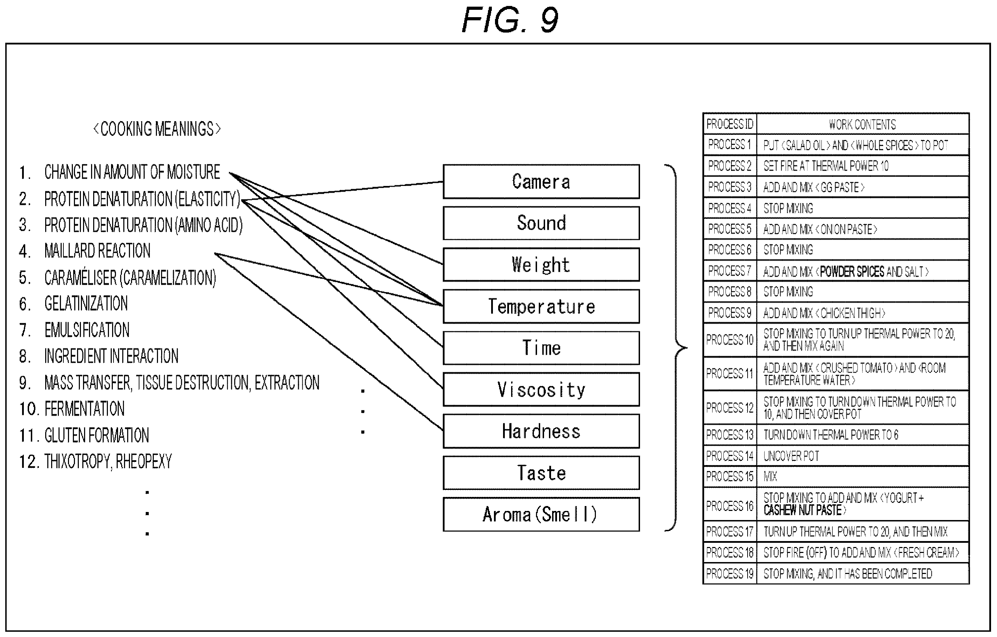

Fig. 9 is a diagram illustrating an example of a relationship among cooking meanings, sensor data, and processes.

As described above, each process of the cooking of the chef has a cooking meaning intended by the chef, and the chef determines the respective cooking meanings on the basis of the state of the ingredients such as the color of the ingredients, and the sound emitted from the ingredients during heating, for example. Meanwhile, the state of the ingredients can be measured using a sensor.

In a case where the chef is performing the work of a certain process, the cooking meaning intended by the chef in that work can be estimated on the basis of the state of the ingredients measured by the sensors as indicated by connecting straight lines on the left side of Fig. 9. For example, the change in the amount of moisture is estimated on the basis of the weight measured by the weight sensor, the temperature measured by the temperature sensor, and the heating time measured by the timer. Similarly, protein denaturation is estimated on the basis of an image captured by the RGB-D camera, the temperature measured by the temperature sensor, and the viscosity measured by the viscosity sensor.

When each process is assumed to have the cooking meaning, the timing at which the cooking meaning is achieved can be determined as the timing to move on to the next process. In the cooking reproduction system, the prediction model that has learned the relationship between the sensor data, the cooking meanings, and the processes is generated as the cooking process generation model.

<<Configuration and Action of Cooking Reproduction System>>

<Environment at Recording Side>

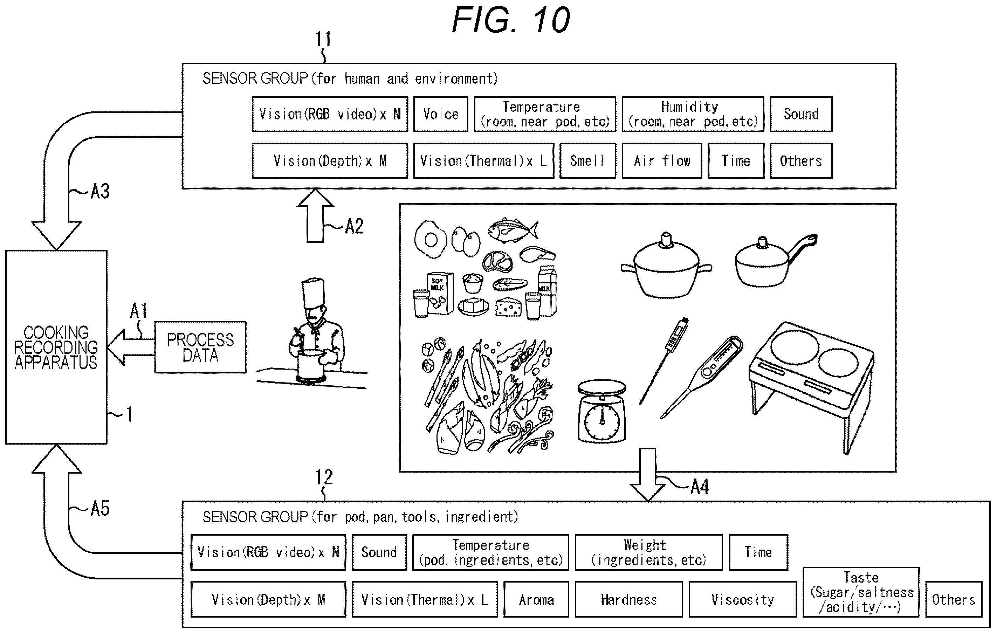

Fig. 10 is a diagram illustrating a configuration example of a cooking recording system provided in the environment at the recording side.

As illustrated in Fig. 10, the cooking recording system used for the recording cooking is provided with a cooking recording apparatus 1, a sensor group 11, and a sensor group 12.

The cooking recording apparatus 1 generates and records the cooking record data by synchronizing each piece of data input during the recording cooking. As indicated by the arrow A1, the process data is input to the cooking recording apparatus 1.

As indicated by the arrow A2, the sensor group 11 is made up of a plurality of sensors used to sense the action of the chef and sense the environment such as a room temperature, humidity, and an airflow.

In the example in Fig. 10, the sensor group 11 includes a plurality of cameras (Vision) for capturing RGB images, a microphone (Voice) for detecting an utterance of the chef, a temperature sensor (Temperature) for measuring a temperature of a room, near pod, or the like, a humidity sensor (Humidity) for measuring humidity of a room, near pod, or the like, and a microphone (Sound) for detecting an environmental sound. The sensor group 11 also includes a plurality of cameras for capturing distance images, a plurality of cameras for capturing thermal images (thermography), a smell sensor (Smell) for measuring a smell of the environment, a sensor (Airflow) for measuring an airflow, a timer for measuring time, and the like.

The sensor data measured by each sensor constituting the sensor group 11 is input to the cooking recording apparatus 1 as indicated by the arrow A3. For example, in a case where the chef makes an utterance with the contents representing a process switching timing, such as "It has now been heated in an excellent state. Next, mix", that utterance is detected by the microphone and input to the cooking recording apparatus 1.

As indicated by the arrow A4, the sensor group 12 is made up of a plurality of sensors used to sense the state of ingredients and sense the state of cooking utensils such as a pot. The ingredients include various sorts of foodstuffs used for cooking, such as water and seasoning, apart from foods such as vegetables, meat, fish, and fruits. The cooking utensils include electrically-driven cooking equipment such as a cooking stove, a heater (induction heating (IH) heater), and a microwave oven, and tools used by the chef, such as a kitchen knife, scissors, and a stirring stick.

In the example in Fig. 10, the sensor group 12 includes a plurality of cameras (Vision) for capturing RGB images, a microphone (Sound) for detecting a sound emitted from ingredients being cooked, a temperature sensor (Temperature) for measuring a temperature of ingredients, a container, or the like, a weight sensor (Weight) for measuring a weight of ingredients or the like, and a timer (Time). For example, a stick-shaped thermometer used in a pierced state into ingredients is provided as the temperature sensor.

In addition, the sensor group 12 includes a plurality of cameras for capturing distance images, a plurality of cameras for capturing thermal images, an aroma sensor (Aroma) for measuring an aroma of ingredients, a hardness sensor (Hardness) for measuring hardness of ingredients, a viscosity sensor (Viscosity) for measuring viscosity of ingredients, and a taste sensor (Tate) for measuring the taste. For example, a sensor capable of measuring basic five tastes ("sweetness", "saltiness" "sourness" "bitterness" and "umami"), such as a sugar meter, a saltiness meter, and an acidometer is provided as the taste sensor.

The sensor data measured by each sensor constituting the sensor group 12 is input to the cooking recording apparatus 1 as indicated by the arrow A5.

Note that a specialized sensor capable of measuring the above-described chemical changes is prepared in the environment at the recording side as a sensor constituting the sensor groups 11 and 12. By using the sensor data measured by these sensors at the time of recording cooking of the chef, learning while examining a logic such as the timing to move on to a next process is enabled. For example, by sensing a color, a temperature, or how bubbles appear by image recognition, for example, and recognizing a chemical reaction such as a Maillard reaction or caraméliser, it becomes possible to train the cooking process generation model capable of appropriately predicting a switching timing of each process. Chemical changes of ingredients include changes in components and changes in physical properties.

<Environment at Reproducing Side>

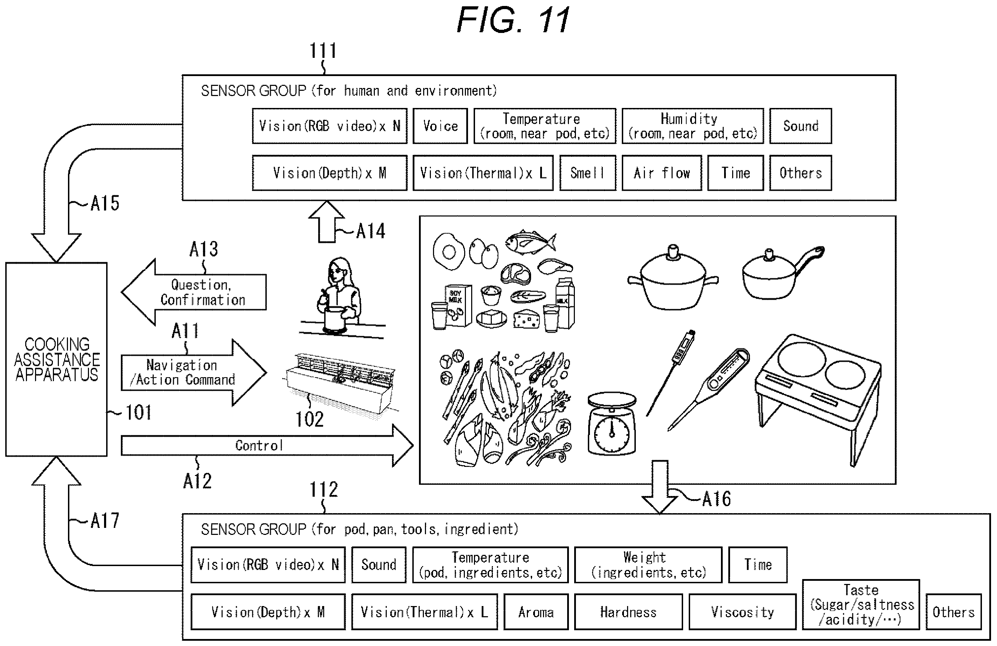

Fig. 11 is a diagram illustrating a configuration example of a cooking assistance system provided in an environment at the reproducing side.

As illustrated in Fig. 11, the cooking assistance system used for the reproduction cooking is provided with a cooking assistance apparatus 101, a sensor group 111, and a sensor group 112.

A cooking process generation model is mounted in the cooking assistance apparatus 101. The cooking assistance apparatus 101 inputs the sensor data measured by sensors constituting the sensor groups 111 and 112 to the cooking process generation model and predicts the next process.

On the basis of the next process predicted using the cooking process generation model, the cooking assistance apparatus 101 outputs at least one of navigation for the user or a control command for a cooking robot 102 as indicated by the arrow A11. The control command is a command used to control movements (actions) of the cooking robot 102.

For example, in a case where the entity that performs the work of the next process is the user, the cooking assistance apparatus 101 presents information indicating the contents of the work to the user. The information is presented to the user, using display on a display prepared in the environment at the reproducing side or voice from a speaker. The display displays information specifically indicating the contents of the work, using characters, graphs, moving images, and the like. In addition, a voice such as "Stop the fire after five seconds. Five, four, three, two, one, stop now." is output from the speaker.

The navigation may be performed using a head-mounted display (HMD) or a wearable device worn by the user. The wearable device worn by the user is provided with a tactile device that gives a stimulus to the user's body, and navigation is performed using the tactile device.

In addition, in a case where the entity that performs the work of the next process is the cooking robot 102, the cooking assistance apparatus 101 outputs a control command according to the contents of the work and controls the action of the cooking robot 102. As will be described later, the cooking robot 102 is an apparatus capable of reproducing the same action as the action of the chef by executing the control command to drive a robot arm. For example, a plurality of robot arms is equipped in the cooking robot 102. Cooking equipment such as a cooking stove, a heater, and a microwave oven may be equipped in the cooking robot 102.

In a case where the work of the next process is a work performed by the user and the cooking robot 102 in cooperation, the cooking assistance apparatus 101 presents navigation to the user and outputs a control command to the cooking robot 102.

As indicated by the arrow A12, the cooking assistance apparatus 101 directly controls the cooking equipment such as a cooking stove, a heater, or a microwave oven according to the contents of the predicted next process as appropriate. This can lessen the work burden of the user. As indicated by the arrow A13, a voice of the user is also input to the cooking assistance apparatus 101. For example, the user inputs a voice for inquiry and confirmation about the contents of the work.

As indicated by the arrow A14, the sensor group 111 is made up of a plurality of sensors used to sense the action of the user and sense the environment such as a room temperature, humidity, and an airflow.

In the example in Fig. 11, the sensor group 111 includes a camera for capturing an RGB image, a microphone for detecting an utterance of the user, a temperature sensor, a humidity sensor, and a microphone for detecting an environmental sound. The sensor group 111 also includes a camera for capturing a distance image, a plurality of cameras for capturing thermal images, a smell sensor for measuring a smell of the environment, a sensor for measuring an airflow, a timer, and the like. The sensor data measured by each sensor constituting the sensor group 111 is input to the cooking assistance apparatus 101 as indicated by the arrow A15.

As indicated by the arrow A16, the sensor group 112 is made up of a plurality of sensors used to sense ingredients and sense cooking utensils such as a pot.

In the example in Fig. 11, the sensor group 112 includes a camera for capturing an RGB image, a microphone for detecting a sound emitted from ingredients being cooked, a temperature sensor, a weight sensor, and a timer. The sensor group 112 also includes a camera for capturing a distance image, a camera for capturing a thermal image, an aroma sensor, a hardness sensor, a viscosity sensor, a taste sensor, and the like. The sensor data measured by each sensor constituting the sensor group 112 is input to the cooking assistance apparatus 101 as indicated by the arrow A17.

In this example, the same sensors as the sensors constituting the sensor groups 11 and 12 are provided as the sensors constituting the sensor groups 111 and 112, respectively. A sensor group that is not as full as the sensor groups at the recording side may be provided as the sensor groups 111 and 112 at the reproducing side. For example, sensors of a fewer types (Reduced sensors) than the sensors at the recording side are provided as the sensors at the reproducing side. A smaller number of sensors or sensors with low accuracy may be provided at the reproducing side as the Reduced sensors. As will be described later, the cooking process generation model is trained such that the next process can be predicted also by using the sensor data measured by the Reduced sensors.

<Configuration of Cooking Reproduction System>

· System Configuration

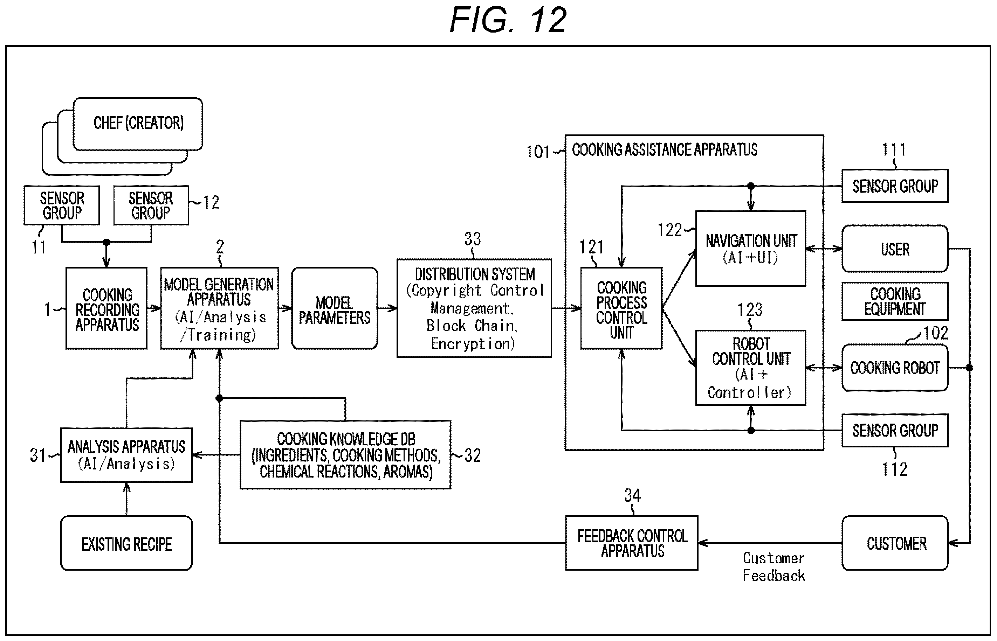

Fig. 12 is a block diagram illustrating a configuration example of the cooking reproduction system. The same constituents as the constituents described above are designated by the same reference signs. Redundant description will be omitted as appropriate. This similarly applies to the description of the other drawings. The apparatuses are connected to each other via a network such as the Internet or a local area network (LAN).

The cooking recording apparatus 1 generates and records the cooking record data on the basis of the sensor data and the like supplied from the sensor groups 11 and 12. In the cooking recording apparatus 1, the cooking record data in which situations of the recording cooking by various chefs are recorded is generated. The recording cooking is performed by various chefs while altering conditions such as the type of dish, the number of dishes to be made (for how many persons), the types of ingredients, the weight of ingredients, the initial temperature of ingredients, and the number of chefs. The cooking record data recorded in the cooking recording apparatus 1 is supplied to a model generation apparatus 2.

The model generation apparatus 2 is an information processing apparatus that performs machine learning with the cooking record data supplied from the cooking recording apparatus 1 as learning data and generates the cooking process generation model. For example, a prediction model such as a recurrent neural network (RNN) or a Transformer is trained, and a prediction model having predetermined performance is generated as the cooking process generation model. Training by the model generation apparatus 2 is performed using information recorded in a cooking knowledge database (DB) 32 as appropriate.

An analysis apparatus 31 analyzes an existing recipe and generates information used to train the cooking process generation model by, for example, referring to information recorded in the cooking knowledge DB 32. For example, chemical reactions occurring in ingredients in each process described in the existing recipe are analyzed and supplied to the model generation apparatus 2 as information used for training.

The cooking knowledge DB 32 is a DB (Cooking Domain Knowledge DB) in which information serving as various pieces of knowledge regarding cooking, such as ingredients, cooking methods, chemical changes, and aromas, is recorded. The information recorded in the cooking knowledge DB 32 is read by the model generation apparatus 2 and the analysis apparatus 31 as appropriate.

A distribution system 33 is a system having a Copyright Control Management function, a ledger management function using a Block Chain network, and an Encryption function. The distribution system 33 uses these functions to distribute model parameters of the cooking process generation model generated by the model generation apparatus 2 to the reproducing side.

The Copyright Control Management function makes it possible to prevent a copy of the model parameters and to manage copyright rights about the model parameters, for example. By using the ledger management function for the Block Chain network, it is possible to prevent falsification of the model parameters and manage owner information about the model parameters, for example. The model parameters can be kept confidential by encryption using the Encryption function.

Although not illustrated, cooking process data is distributed to the cooking assistance apparatus 101 via the distribution system 33 at a predetermined timing such as the start of the reproduction cooking. The cooking process data includes at least the process data corresponding to a dish to be reproduced. The cooking process data may be distributed using the Copyright Control Management function, the ledger management function using the Block Chain network, and the Encryption function described above. In the following description, it is assumed that the cooking process data is generated by the model generation apparatus 2.

A feedback apparatus 34 acquires information on evaluation by a person who has eaten the dish reproduced by the reproduction cooking, such as a customer. For example, the customer inputs an evaluation regarding the reproduced dish, such as evaluation of the taste and evaluation of the texture of the dish, and the feedback apparatus 34 acquires the evaluation. The evaluation acquired by the feedback apparatus 34 is supplied to the model generation apparatus 2 and used for retraining or the like of the cooking process generation model.

The cooking assistance apparatus 101 is an information processing apparatus having a configuration including a cooking process control unit 121, a navigation unit 122, and a robot control unit 123. The cooking process generation model is mounted in the cooking process control unit 121 on the basis of the model parameters distributed via the distribution system 33.

The cooking process control unit 121 sets conditions for the reproduction cooking. The conditions for the reproduction cooking include the type of ingredients prepared at the reproducing side, the weight of ingredients, and the number of dishes to be made (for one person or three persons). In addition, the conditions for the reproduction cooking include information (type, number, accuracy) on sensors prepared in the environment at the reproducing side and information (the number of users, the presence or absence of the cooking robot 102) regarding the entities that perform the reproduction cooking. Information not only on the presence or absence of the cooking robot 102 but also on the functions that the cooking robot 102 has may be included in the conditions for the reproduction cooking, or information on cooking facilities such as the type of the cooking robot 102 and the type of cooking equipment may be included in the conditions for the reproduction cooking. The conditions for the reproduction cooking include at least one piece of information regarding the type of ingredients, the weight of ingredients, the number of dishes to be cooked, the sensors prepared in the cooking environment, the facilities in which cooking is performed, or the person who performs cooking.

The condition may be set at a distributing side. In this case, for example, the cooking process control unit 121 acquires the information (the number of users, the presence or absence or functions of the cooking robot 102, and the like) regarding the entities that perform the reproduction cooking, according to an operation by the user. The information acquired by the cooking process control unit 121 is transmitted to the distribution system 33 and supplied to the model generation apparatus 2. In the model generation apparatus 2, the cooking process generation model appropriate for the cooking assistance apparatus 101 is generated on the basis of the information regarding the entities that perform the reproduction cooking, and the model parameters of the appropriate cooking process generation model are distributed to the cooking assistance apparatus 101 via the distribution system 33.

Since the model parameters of the cooking process generation model matching the conditions at the cooking assistance apparatus 101 side are transmitted from the model generation apparatus 2, calculation resources regarding the setting of the cooking process generation model do not have to be prepared at the cooking assistance apparatus 101 side. In addition, model generation in accordance with resources at the cooking assistance apparatus 101 side, such as the users, the cooking robot 102, and the cooking utensils, is enabled. Meanwhile, in a case where the navigation unit 122 and the robot control unit 123 can undertake to cope with in accordance with the resources at the cooking assistance apparatus 101 side, the model parameters distributed to the cooking assistance apparatus 101 side are enough to be common. This also leads to dispersion of calculation resources.

In addition, the cooking process control unit 121 acquires the cooking process data including process data according to the setting by the cooking process control unit 121.

The cooking process control unit 121 generates processes of the reproduction cooking on the basis of the cooking process data and the sensor data supplied from the sensor groups 111 and 112. The generation of the processes by the cooking process control unit 121 is performed, for example, so as to generate a process after one unit of time from the process of which the work is currently being performed. For example, the next process is generated on the basis of the prediction result output by inputting the sensor data supplied from the sensor groups 111 and 112 to the cooking process generation model.

The cooking process control unit 121 has a function as a Coordinator that adjusts which work (task) included in the next process is performed by the user and which work is performed by the cooking robot 102. As described above, there are a pattern in which only the user performs the work, a pattern in which only the cooking robot 102 performs the work, and a pattern in which the user and the cooking robot 102 perform the work in cooperation. The cooking process control unit 121 has a function of setting the work of the predicted process as a work to be performed by the user, a work to be performed by the cooking robot 102, or a work to be performed by the user and the cooking robot 102 in cooperation. The cooking process control unit 121 outputs information on the work performed by the user to the navigation unit 122 and outputs information on the work performed by the cooking robot 102 to the robot control unit 123.

The cooking process control unit 121 monitors the progress of the cooking process on the basis of the sensor data supplied from the sensor groups 111 and 112, and the like and performs control such that appropriate feedback is performed on the user and the cooking robot 102. In Fig. 12, the sensor data output from the sensor group 111 is input to the cooking process control unit 121 and the navigation unit 122, and the sensor data output from the sensor group 112 is input to the cooking process control unit 121 and the robot control unit 123. However, the sensor data output from the sensor group 111 is also input to the robot control unit 123 as appropriate. Conversely, the sensor data output from the sensor group 112 is also input to the navigation unit 122 as appropriate.

The navigation unit 122 performs navigation for the user on the basis of the information supplied from the cooking process control unit 121 and the sensor data supplied from the sensor groups 111 and 112. The navigation for the user is performed using artificial intelligence (AI) (a prediction model generated in advance by machine learning) as appropriate.

The robot control unit 123 generates a control command on the basis of the information supplied from the cooking process control unit 121 and the sensor data supplied from the sensor groups 111 and 112 and outputs the generated control command to the cooking robot 102. Control of the cooking robot 102 is performed using AI as appropriate.

The function of a certain apparatus illustrated in Fig. 12 may be mounted in another apparatus. For example, the function of the model generation apparatus 2 can be provided in the cooking recording apparatus 1. In addition, the function of the analysis apparatus 31 can be provided in the model generation apparatus 2.

· About Navigation for User and Control of Cooking Robot

As a navigation for the user, an instruction such as "mix more around" or "apply more heat" is given. Such an instruction is made by the cooking process control unit 121 via the navigation unit 122 while comparing the sensor data at the time of recording cooking learned as the cooking process generation model with the sensor data sensed by the sensor groups 111 and 112. The cooking process control unit 121 controls the cooking robot 102 via the robot control unit 123.

In a case where the user and the cooking robot 102 perform the work in cooperation, navigation via the navigation unit 122 and control via the robot control unit 123 are performed by the cooking process control unit 121 while comparing the progress of the respective works of the user and the cooking robot 102. For example, the sensing result for the work performed by the user and the cooking robot 102 in cooperation (including an action sensing result) is used for navigation by the navigation unit 122 and development of an algorithm of control by the robot control unit 123.

As a technology relating to a person and control of a robot, for example, there is a technology disclosed in Japanese Patent Application Laid-Open No. 2020-057331 by the present applicants. A technology similar to the above technology is also adopted for control by the cooking process control unit 121.

For example, the entity of each work is set by the cooking process control unit 121 on the basis of information on the cooking robot 102 such as what task can be executed by the robot disposed in the environment at the reproducing side or whether or not there is no robot, and information on the next process. Information on the work that the user is to be in charge of is output to the navigation unit 122, and information on the work that the cooking robot 102 is to be in charge of is output to the robot control unit 123. The information on the work is output in consideration of a difference from the exemplar cooking work of the chef, and the like.

The assignment of tasks to the user and the cooking robot 102 can be readjusted according to the progress of the work, and the like. For example, in a case where it becomes difficult for the user to take charge of a task supposed to be taken charge by the user for some reason, the cooking process control unit 121 performs control to cause the cooking robot 102 to take charge of that task, according to the intent of the user.

In this manner, the task that can be taken charge by the cooking robot 102 can be delegated to the cooking robot 102 from the user. The task is delegated by the user performing an operation using voice, an operation using a touch panel, a gesture operation, or the like and causing the cooking process control unit 121 to recognize the performed operation. Information regarding assignment of tasks to the user and the cooking robot 102 is displayed, with which the user can perform an operation for substituting for the entity in charge.

The dynamic substitution of the task assignment is implemented by the cooking process control unit 121 exchanging information with the navigation unit 122 and the robot control unit 123. For example, the cooking process control unit 121 causes the navigation unit 122 to present a notification that "the next task is to be performed by the robot" to the user and also causes the robot control unit 123 to output a control command for causing the cooking robot 102 to execute the next task.

Conversely, a task supposed to be taken charge by the cooking robot 102 can also be delegated to the user. For example, in a case where the immediately preceding task of the cooking robot 102 takes more time than scheduled, the user is substituted for the entity in charge of the next work that has been planned to be taken charge by the cooking robot 102.

For example, information indicating the progress of the tasks of the user and the cooking robot 102 is displayed, with which the user can determine whether or not it is better for the user to take charge of the task of the cooking robot 102. In a case where the user who has determined that the progress of the work of the cooking robot 102 is behind schedule performs an operation for substituting for the entity in charge, the cooking process control unit 121 causes the navigation unit 122 to present a notification of substitution for the entity in charge, to the user and also outputs information indicating that the entity in charge of the next task has been substituted by the user, to the robot control unit 123.

By enabling dynamic substitution in assigning tasks, the entire work can be efficiently advanced.

<Action of Cooking Reproduction System>

Here, an action of each apparatus of the cooking reproduction system will be described.

· Action of Cooking Recording Apparatus 1

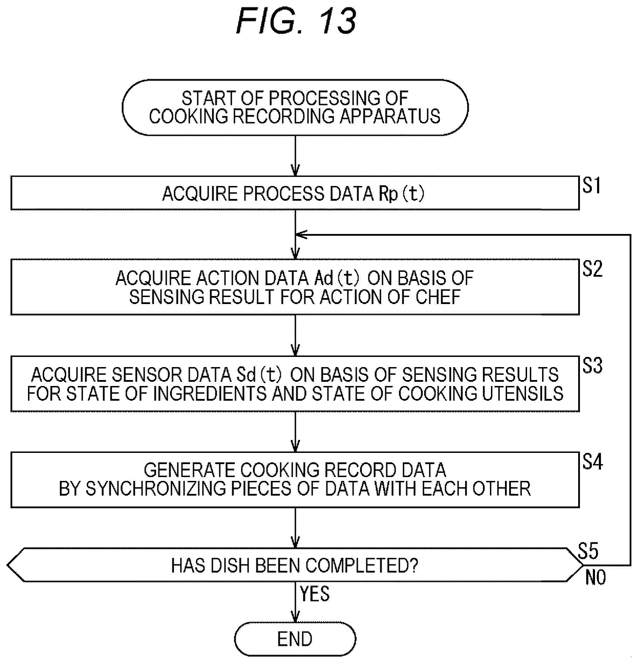

Processing of the cooking recording apparatus 1 for generating the cooking record data will be described with reference to the flowchart in Fig. 13. The processing in Fig. 13 is started, for example, when the chef instructs to perform the recording cooking and the process data including information as described with reference to Fig. 6 is input.

In step S1, the cooking recording apparatus 1 acquires process data Rp(t) input by the chef.

In step S2, the cooking recording apparatus 1 acquires action data Ad(t) on the basis of the sensing result for the action of the chef.

In step S3, the cooking recording apparatus 1 acquires sensor data Sd(t) on the basis of the sensing results for the state of ingredients and the state of the cooking utensils.

In step S4, the cooking recording apparatus 1 records pieces of data synchronously with each other and generates the cooking record data.

In step S5, the cooking recording apparatus 1 verifies whether or not the dish has been completed. In a case where it is verified that the dish has not been completed, the processing returns to step S2, and the processing in step S2 and the subsequent steps is repeated.

In a case where it is verified in step S5 that the dish has been completed, the processing in Fig. 13 ends. The above processing is executed every time the recording cooking is performed by the chef. In a DB of the cooking recording apparatus 1, the cooking record data of various dishes generated by the recording cooking by various chefs is recorded.

· Action of Model Generation Apparatus 2

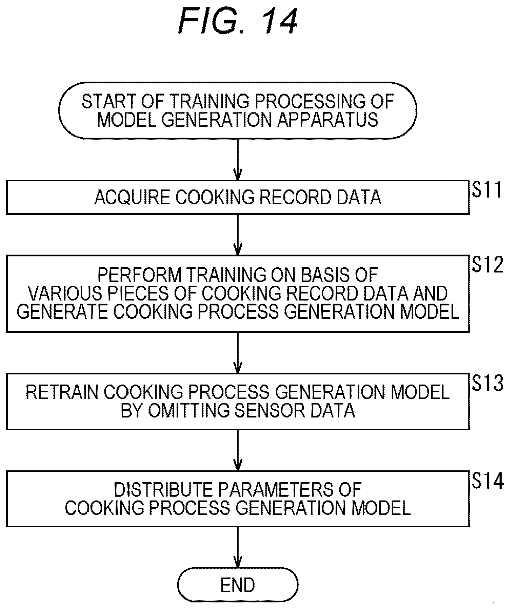

The processing of the model generation apparatus 2 for generating the cooking process generation model will be described with reference to the flowchart in Fig. 14.

In step S11, the model generation apparatus 2 acquires the cooking record data generated as learning data from the cooking recording apparatus 1.

In step S12, the model generation apparatus 2 performs training on the basis of various pieces of the cooking record data and generates the cooking process generation model.

In step S13, the model generation apparatus 2 retrains the cooking process generation model by omitting the sensor data. The retraining performed here is processing for generating the cooking process generation model capable of coping with the Reduced sensors.

In step S14, the model generation apparatus 2 distributes the model parameters of the cooking process generation model and ends the processing. Details of training of the cooking process generation model will be described later.

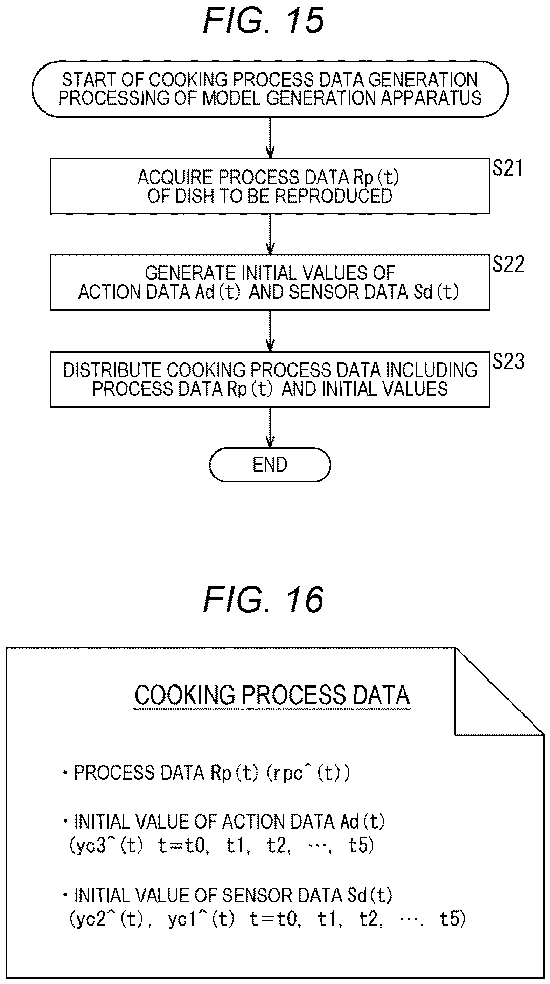

Next, processing of the model generation apparatus 2 for generating the cooking process data will be described with reference to the flowchart in Fig. 15. The cooking process data is information including information used in the cooking assistance apparatus 101 as an initial value of the input to the cooking process generation model.

In step S21, the model generation apparatus 2 acquires the process data Rp(t) according to conditions set at the reproducing side, such as the type of dish to be reproduced. The process data Rp(t) is data generated according to the input by the chef, as described above. The process data Rp(t) may be generated by the analysis apparatus 31 by analyzing an existing recipe, for example.

In step S22, the model generation apparatus 2 generates initial values of the action data Ad(t) and the sensor data Sd(t).

In step S23, the model generation apparatus 2 generates the cooking process data including the process data Rp(t) and the initial values and distributes the generated cooking process data to the cooking assistance apparatus 101.

Fig. 16 is a diagram illustrating an example of the cooking process data.

As illustrated in Fig. 16, the cooking process data includes the process data Rp(t), the initial value of the action data Ad(t), and the initial value of the sensor data Sd(t).

As will be described later, the process data Rp(t) included in the cooking process data is represented as $rpc^{\wedge}(t)$. In addition, the action data Ad(t) included in the cooking process data is represented as $yc3^{\wedge}(t)$. The sensor data Sd(t) is represented as $yc2^{\wedge}(t)$ and $yc1^{\wedge}(t)$. As the initial values of the action data Ad(t) and the sensor data Sd(t), for example, information for several steps, such as $t = t0, t1, t2, ..., t5$, is included in the cooking process data.

· Action of Cooking Assistance Apparatus 101

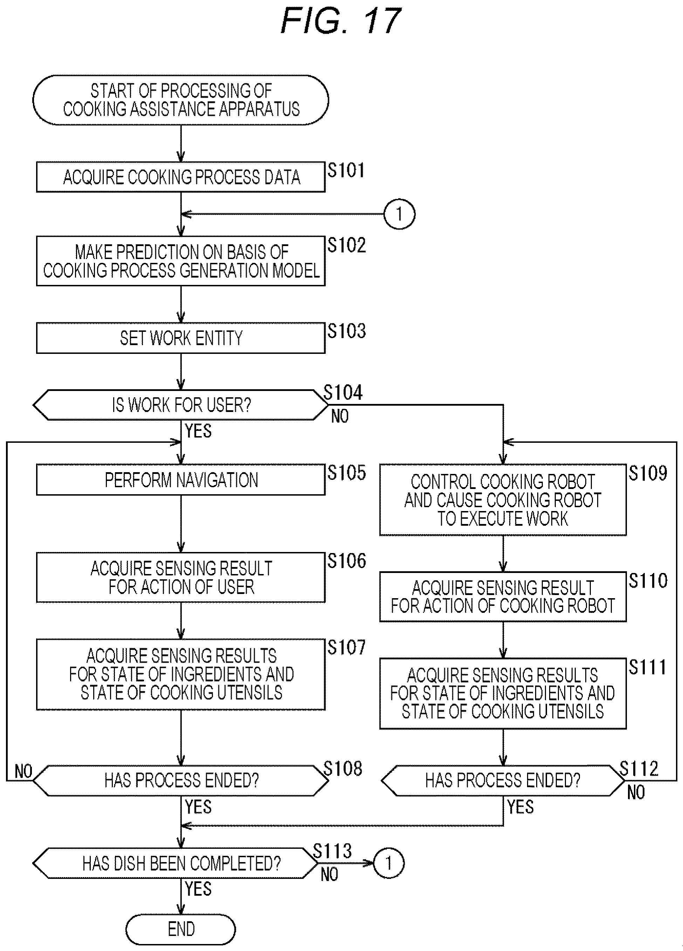

Processing of the cooking assistance apparatus 101 for assisting in the reproduction cooking will be described with reference to the flowchart in Fig. 17.

In step S101, the cooking process control unit 121 acquires the cooking process data generated by the model generation apparatus 2.

In step S102, the cooking process control unit 121 makes prediction on the basis of the cooking process generation model and generates a process after one unit of time. At the start of the prediction, the initial value of the action data Ad(t) and the initial value of the sensor data Sd(t) are used as inputs to the cooking process generation model together with the process data Rp(t). An initial state regarding the state of ingredients and the like and a final state that is a subgoal are set for each process.

In step S103, the cooking process control unit 121 sets a work entity. The entity is set for each work included in the process, such as a work performed by the user, a work performed by the cooking robot 102, and a work performed by the user and the cooking robot 102 in cooperation.

In step S104, the cooking process control unit 121 verifies whether or not the work is for the user.

In a case where it is verified in step S104 that the work is for the user, information on the work is output to the navigation unit 122, and the processing proceeds to step S105.

In step S105, the navigation unit 122 performs work navigation for the user.

In step S106, the cooking process control unit 121 acquires a sensing result for the action of the user on the basis of the sensor data supplied from the sensor group 111.

In step S107, the cooking process control unit 121 acquires sensing results for the state of ingredients and the state of the cooking utensils on the basis of the sensor data supplied from the sensor group 112.

In step S108, the cooking process control unit 121 verifies whether or not the process has ended. Here, for example, it is verified whether or not the process being worked on has ended, on the basis of whether or not the sensing result for the state of ingredients has reached the final state set as a subgoal. The sensing result for the action of the user and the sensing result for the state of the cooking utensils may be separately compared with the prediction results of the cooking process generation model, with which it may be verified whether or not the process being worked on has ended.

In a case where it is verified in step S108 that the process being worked on has not ended, the processing returns to step S105, and the processing in step S105 and the subsequent steps is repeated. In step S105, navigation for instructing a work for bringing the sensing result for the state of ingredients closer to the state of the subgoal is presented to the user. In this manner, the sensor data output from the sensor groups 111 and 112 is acquired by the navigation unit 122 and used for navigation as appropriate.

On the other hand, in a case where it is verified in step S104 that the work is not for the user, that is, the work is for the cooking robot 102, information on the work is output to the robot control unit 123, and the processing proceeds to step S109.

In step S109, the robot control unit 123 controls the cooking robot 102, using the control command, and causes the cooking robot 102 to execute the action for the work.

In step S110, the cooking process control unit 121 acquires a sensing result for the action of the cooking robot 102 on the basis of the sensor data supplied from the sensor group 111.

In step S111, the cooking process control unit 121 acquires sensing results for the state of ingredients and the state of the cooking utensils on the basis of the sensor data supplied from the sensor group 112.

In step S112, the cooking process control unit 121 verifies whether or not the process has ended. Here, for example, it is verified whether or not the process being worked on has ended, on the basis of whether or not the sensing result for the state of ingredients has reached the final state set as a subgoal. The sensing result for the action of the cooking robot 102 and the sensing result for the state of the cooking utensils may be separately compared with the prediction results of the cooking process generation model, with which it may be verified whether or not the process being worked on has ended.

In a case where it is verified in step S112 that the process being worked on has not ended, the processing returns to step S109, and the processing in step S109 and the subsequent steps is repeated. In step S109, a control command for causing the cooking robot 102 to execute an action of bringing the sensing result for the state of ingredients closer to the state of the subgoal is output to the cooking robot 102. In this manner, the sensor data output from the sensor groups 111 and 112 is acquired by the robot control unit 123 and used to control the cooking robot 102 as appropriate.

Note that, in a case where the work is set to be performed by the user and the cooking robot 102 in cooperation in step S103, the processing in steps S105 to S108 arranged for the user and the processing in steps S109 to S112 arranged for the cooking robot 102 are performed in parallel or sequentially.

In a case where it is verified in step S108 or step S112 that the process has ended because, for example, the sensing result for the state of ingredients has reached the state of the subgoal, the cooking process control unit 121 verifies in step S113 whether or not the dish has been completed. For example, in a case where all the processes have ended, it is verified that the dish has been completed.

In a case where it is verified in step S113 that the dish has not been completed, the processing returns to step S102, and processing in step S102 and the subsequent steps is performed. In step S102, sensing results by the sensor groups 111 and 112, and the like are used as inputs to the cooking process generation model. In a case where it is verified in step S113 that the dish has been completed, the processing in Fig. 17 ends.

Through the above series of pieces of processing, the model generation apparatus 2 can generate the cooking process generation model capable of appropriately predicting a process for reproducing cooking of the chef. In addition, the cooking assistance apparatus 101 can appropriately predict a process for reproducing cooking of the chef, using the cooking process generation model. The user is allowed to appropriately reproduce cooking of the chef.

<<Example Using First Learning>>

<About Learning>

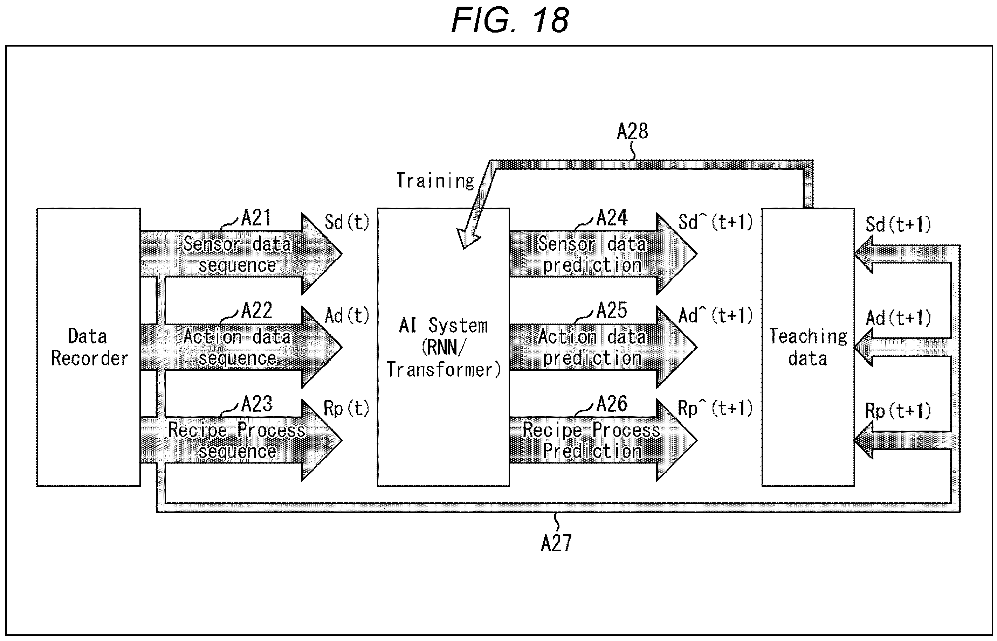

Fig. 18 is a diagram illustrating a first example of training using the cooking record data. The training by the model generation apparatus 2 is performed according to the flow illustrated in Fig. 18.

As indicated by the arrows A21 to A23, sequence data (time-series data) of the sensor data Sd(t), the action data Ad(t), and the process data Rp(t) included in the cooking record data is supplied to an AI System from a Data Recorder. The AI System is a system that is implemented in the model generation apparatus 2 and has a prediction model training function.

The sensor data Sd(t) is a sensing result for the state of ingredients, the state of the cooking utensils, and the like at each time included in the cooking record data. The action data Ad(t) is a sensing result for the action of the chef at each time included in the cooking record data.

The process data Rp(t) is process data included in the cooking record data. As described above, the process data is information including information such as the process ID, time of each process, ingredients used in each process, and contents of the work of each process.

The AI System trains the prediction model such as an RNN or a Transformer. The AI System makes prediction by inputting the sensor data Sd(t), the action data Ad(t), and the process data Rp(t) to the prediction model and outputs sensor data $Sd^{\wedge}(t+1)$, action data $Ad^{\wedge}(t+1)$, and process data $Rp^{\wedge}(t+1)$ that are predicted values after one unit of time as indicated by the arrows A24 to A26.

The sensor data $Sd^{\wedge}(t+1)$, the action data $Ad^{\wedge}(t+1)$, and the process data $Rp^{\wedge}(t+1)$ are used for training of the prediction model together with sensor data Sd(t+1), action data Ad(t+1), and process data Rp(t+1) indicated at the tip of the arrow A27. The sensor data Sd(t+1), the action data Ad(t+1), and the process data Rp(t+1) included in the cooking record data are teaching data.

As indicated at the tip of the arrow A28, the AI System performs training with each parameter on the basis of the learning data so as to decrease respective errors between the sensor data $Sd^{\wedge}(t+1)$ and the sensor data Sd(t+1), between the action data $Ad^{\wedge}(t+1)$ and the action data Ad(t+1), and between the process data $Rp^{\wedge}(t+1)$ and the process data Rp(t+1), for example.

By performing training using a large amount of cooking record data, a prediction model capable of outputting the sensor data $Sd^{\wedge}(t+1)$, the action data $Ad^{\wedge}(t+1)$, and the process data $Rp^{\wedge}(t+1)$, which are predicted values after one unit of time, with high accuracy on the basis of the sensor data Sd(t), the action data Ad(t), and the process data Rp(t) is acquired. The prediction model generated in this manner is provided to the cooking assistance apparatus 101 as a cooking process generation model.

In Fig. 18, the data included in the cooking record data has been described as the sensor data Sd(t), the action data Ad(t), and the process data Rp(t), but these pieces of data will be decomposed into elements constituting a cooking process and described. The cooking process can be considered as being decomposed into elements of "ingredients" as items to be controlled, "cooking utensils" that control the "ingredients", and "person" or "robot" (cooking robot 102) that controls the "cooking utensils".

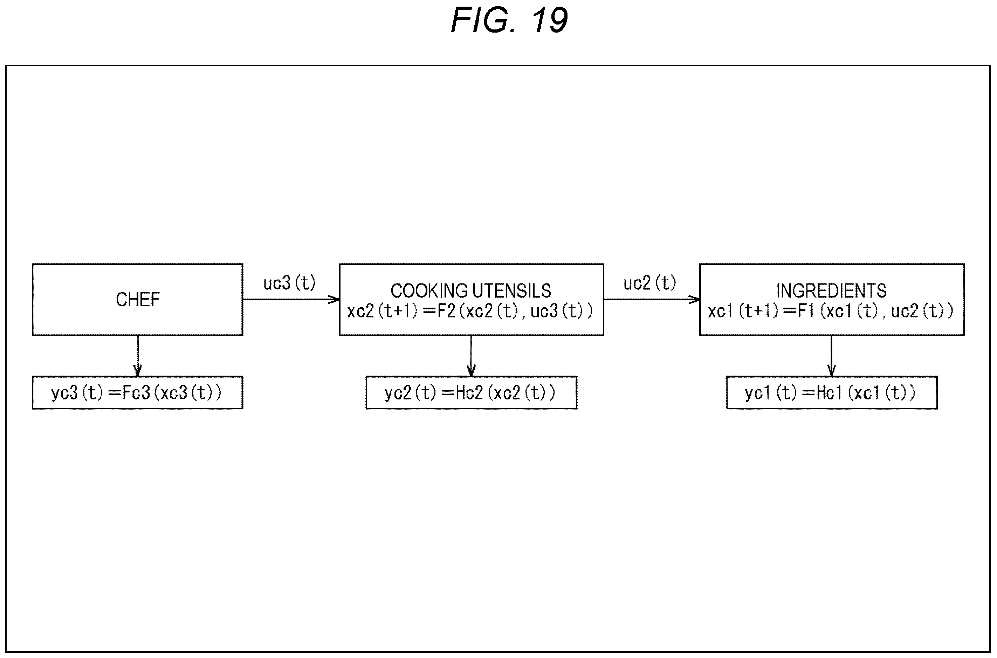

Fig. 19 is a diagram schematically illustrating states of ingredients, cooking utensils, and a person (chef) in the recording cooking. The correspondence between the above-described symbols and the symbols illustrated in Fig. 19 is as follows.

The sensor data Sd(t) is expressed using symbols yc1(t), yc2(t), and yc3(t) in a state where the chef is performing the recording cooking (or during training). As illustrated in Fig. 19, yc1(t) represents a sensing result for the state of the ingredients, and yc2(t) represents a sensing result for the state of the cooking utensils. A sensing result for the state of the chef or the environment is represented by yc3(t). For example, yc1(t) and yc2(t) are measured by each sensor constituting the sensor group 12. For example, yc3(t) is measured by each sensor constituting the sensor group 11.

The action data Ad(t) is expressed using symbols uc2(t) and uc3(t) in a state where the chef is performing the recording cooking (or during training). As illustrated in Fig. 19, uc2(t) represents control of the ingredients by the cooking utensils, and uc3(t) represents control of the cooking utensils by the chef. Here, in order to handle the above data as learning data for machine learning, the data needs to have observable information. Information that can be converted from yc1(t), yc2(t), and yc3(t) that are observable information are contained in uc2(t) and uc3(t).

The process data Rp(t) is expressed using a symbol rpc(t) as exemplar data generated on the basis of the cooking process performed by the chef.

As illustrated in Fig. 19, changes in internal dynamics of the ingredients, the cooking utensils, and the chef or the environment are assumed as xc1(t), xc2(t), and xc3(t), respectively. These internal dynamics are information that is not directly observable.

The sensing result yc1(t) for the state of the ingredients, the sensing result yc2(t) for the state of the cooking utensils, and the sensing result yc3(t) for the state of the chef or the environment observed via the sensor data are represented by following Formulas (1), (2), and (3), respectively.

[Mathematical Formula 1]

$$yc1(t) = Hc1(xc1(t)) \qquad \cdots (1)$$

[Mathematical Formula 2]

$$yc2(t) = Hc2(xc2(t)) \qquad \cdots (2)$$

[Mathematical Formula 3]

$$yc3(t) = Fc3(xc3(t)) \qquad \cdots (3)$$

The internal state xc1(t) of the ingredients and the sensing result yc1(t) for the state of the ingredients have a relationship found using a function Hc1. Similarly, the internal state xc2(t) of the cooking utensils and the sensing result yc2(t) for the state of the cooking utensils have a relationship found using a function Hc2.

The internal state xc3(t) of the chef or the environment is the intention of the chef in cooking, or the like, and this is also non-observed information. The observable information is the action, utterance contents, or the like of the chef, and this is included in the sensing result yc3(t) for the chef or the environment. However, it is assumed that cooking of the chef is basically performed on the basis of the process data rpc(t). The information on the recipe may be used as the process data rpc(t).

Note that the control uc2(t) to be given to the ingredients corresponds to heating by a cooking utensil, stirring by a cooking utensil, addition of the ingredients or the seasoning from a container, and the like.

The control uc3(t) to be given to the cooking utensils corresponds to turning on or off of heating as an action on a cooking utensil, control of the amount of heat, covering (steaming or the like), application of a force for stirring, and the like. However, the control uc3(t) is represented in consideration of both of the sensing result yc3(t) for the observed action of the chef (mainly the motion of the hand or arm, for example) and the motion of a cooking utensil or the turning-on or off state of heating, that is, the sensing result yc2(t) for the cooking utensils.

The action of the chef is basically on the cooking utensils and control is given to the ingredients via the cooking utensils. In general, there is, for example, a work of kneading ingredients by directly touching the ingredients, but such a work is also formulated as being performed via a cooking utensil. The control uc3(t) of the cooking utensils is found from the internal state xc2(t) that is non-observed in terms of a formula, but is predicted from both of the sensing result yc3(t) for the action of the chef that can be observed and the sensing result yc2(t) for the state of the cooking utensils such as the stirring stick.

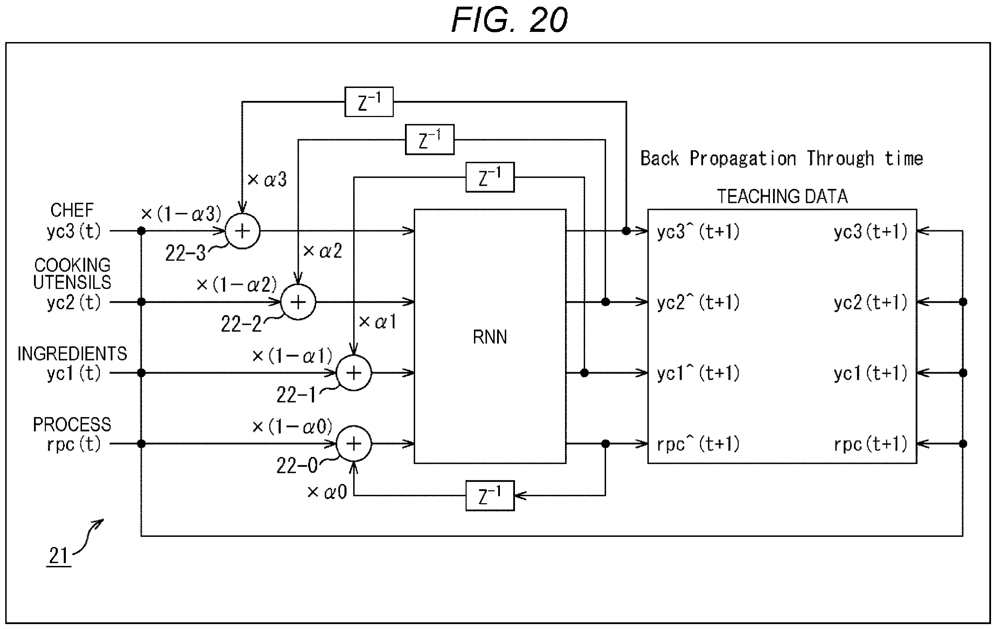

Fig. 20 is a diagram illustrating an example of training using the expression in Fig. 19. In the model generation apparatus 2, the training unit 21 is implemented by executing a predetermined program. Here, an example using an RNN will be described, but a Transformer can also be used as a prediction model.

The process data rpc(t), the sensing result yc1(t) for the state of the ingredients, the sensing result yc2(t) for the state of the cooking utensils, and the sensing result yc3(t) for the state of the chef or the environment are input to addition units 22-0 to 22-3, respectively. For convenience of description, yc3(t) will be described as a sensing result for the action of the chef as appropriate.

A predicted value rpc^(t+1) of the process data, a predicted value yc1^(t+1) of the state of the ingredients, a predicted value yc2^(t+1) of the state of the cooking utensils, and a predicted value yc3^(t+1) of the action of the chef output by the RNN are input to the addition units 22-0 to 22-3 after being delayed, respectively.

The addition unit 22-0 adds the predicted value rpc^(t+1) multiplied by $\alpha0$ to the process data rpc(t) and inputs the addition result to the RNN. The addition unit 22-1 adds the predicted value yc1^(t+1) multiplied by $\alpha1$ to the sensing result yc1(t) for the state of the ingredients and inputs the addition result to the RNN. The addition unit 22-2 adds the predicted value yc2^(t+1) multiplied by $\alpha2$ to the sensing result yc2(t) for the state of the cooking utensils and inputs the addition result to the RNN. The addition unit 22-3 adds the predicted value yc3^(t+1) multiplied by $\alpha3$ to the sensing result yc3(t) for the action of the chef and inputs the addition result to the RNN.

Here, $0 \leq \alpha0, \alpha1, \alpha2, \alpha3 \leq 1$ holds. At the time of training, $\alpha0, \alpha1, \alpha2,$ and $\alpha3$ are often set to zero. A feedback loop of the predicted values to the RNN implements control to bring each predicted value closer to the state of the chef at the time of recording cooking.

The RNN makes prediction with the information supplied from the addition units 22-0 to 22-3 as inputs and outputs the predicted value rpc^(t+1) of the process data, the predicted value yc1^(t+1) of the state of the ingredients, the predicted value yc2^(t+1) of the state of the cooking utensils, and the predicted value yc3^(t+1) of the action of the chef.

Meanwhile, sensing results yc1(t+1), yc2(t+1), and yc3(t+1) that are actual observed values of the state of the ingredients, the state of the cooking utensils, and the action of the chef are obtained together with process data rpc(t+1). The training of the RNN is performed with these pieces of data as teaching data.

During the recording cooking, the chef regularly takes control of the change in the state of ingredients or the like to put the ingredients into a desired state in order to successfully cook. The RNN is trained so as to be able to output a predicted value configured to perform control for correcting an error included in the input.

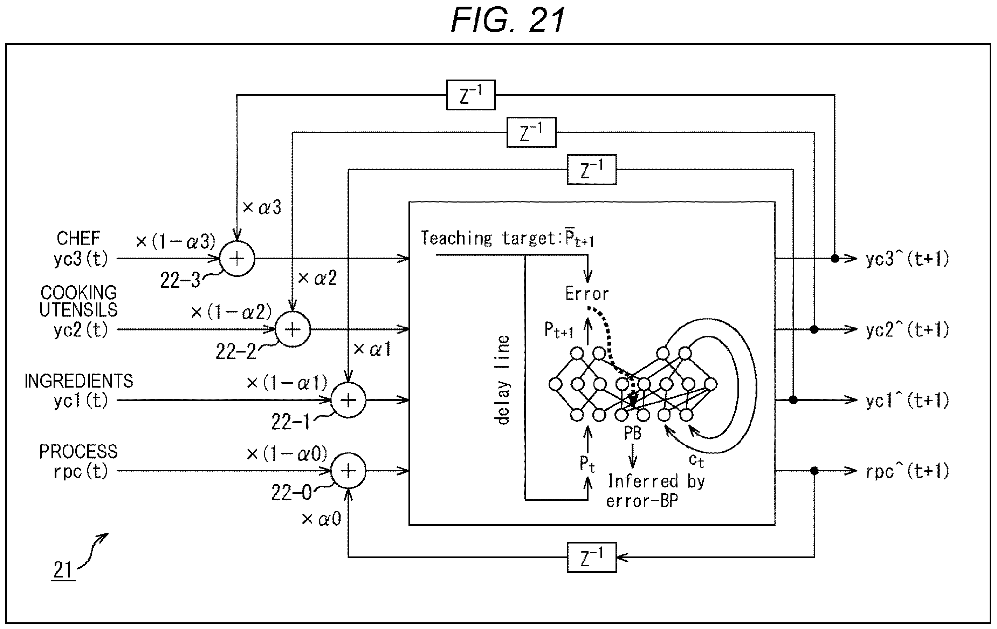

Note that the RNN is a neural network often used for prediction of time-series data. An RNN with an input called Parametric Bias (PB) is illustrated in Fig. 21. The PB is information used to control a space expressing dynamics. By altering the PB, models in spaces expressing different dynamics can be trained. The PB is directly set from the outside and is learned by supervised learning. In the example in Fig. 21, supervised learning based on the process data rpc(t) is performed. The PB may be set by self-organization using output error propagation.

The training unit 21 may train an RNN having a simple structure instead of an RNN to which the PB is input.

As described above, the training unit 21 is an AI System that performs training on the basis of the cooking record data in which the process data that is information on each process of cooking by the chef, the action data that is a sensing result for the action of the chef during cooking, and the sensor data including a sensing result for a state of ingredients used for cooking are at least synchronized with each other and generates the cooking process generation model.

The training unit 21 performs training that does not require teaching data in which a special label is set. Note that the process data rpc(t) is data including, for example, information on the time of the process and the contents of the work analyzed by an expert such as a chef. As for the process data, supervised learning is involved.

When learning is performed on the basis of the cooking record data generated by the recording cooking based on various recipes, Generalization arises, and the cooking process generation model capable of predicting the same time-series data of the sensor data and the action data as in a case where cooking is performed on the basis of each recipe is generated. In addition, the cooking process generation model capable of coping with changes in the types of ingredients and the amount of ingredients is generated.

<Assistance in Reproduction Cooking>

An example of assistance in the reproduction cooking using the cooking process generation model constituted by the RNN generated by training as described above will be described.

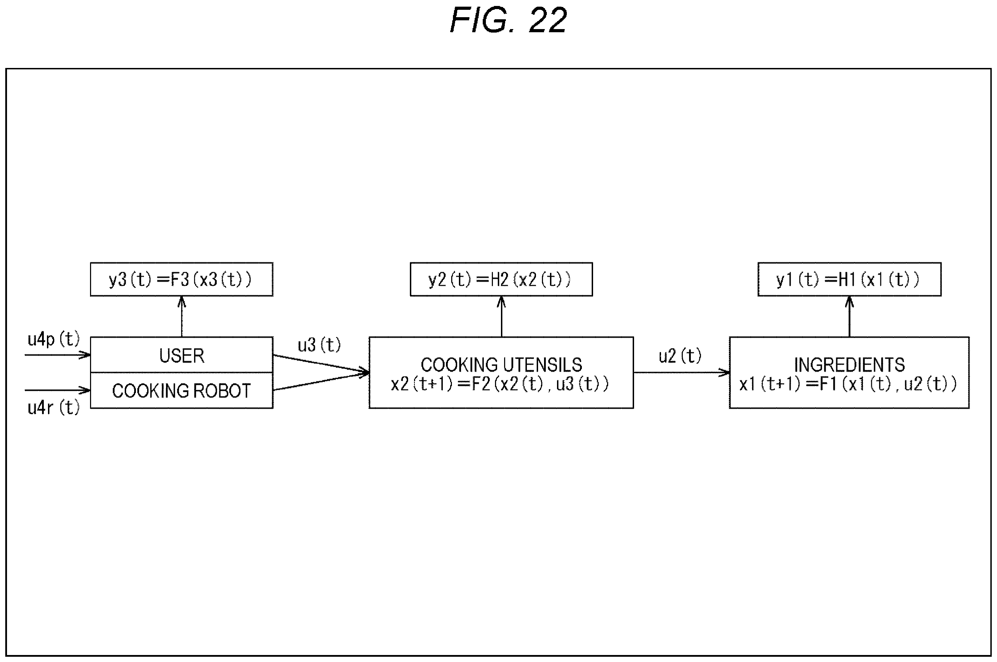

Fig. 22 is a diagram schematically illustrating states of ingredients, cooking utensils, and a user or cooking robot in the reproduction cooking. The description of the same symbols as the symbols described above will be omitted as appropriate.

In a state where the user or cooking robot is performing the reproduction cooking, the sensing result for the state of the ingredients, the sensing result for the state of the cooking utensils, and the sensing result for the state of the user or cooking robot or the environment are expressed using symbols y1(t), y2(t), and y3(t), respectively. For example, y1(t) and y2(t) are measured by each sensor constituting the sensor group 112. For example, y3(t) is measured by each sensor constituting the sensor group 111.

Control of the ingredients by the cooking utensils is represented by u2(t), and control of the cooking utensils by the user or cooking robot is represented by u3(t).

As illustrated in Fig. 22, changes in the internal dynamics of the ingredients, the cooking utensils, the user or cooking robot or the environment are assumed as x1(t), x2(t), and x3(t), respectively.

The sensing result y1(t) for the state of the ingredients, the sensing result y2(t) for the state of the cooking utensils, and the sensing result y3(t) for the state of the user or cooking robot or the environment observed via the sensor data are represented by following Formulas (4), (5), and (6), respectively.

[Mathematical Formula 4]

$$y1(t) = H1(x1(t)) \qquad \cdots (4)$$

[Mathematical Formula 5]

$$y2(t) = H2(x2(t)) \qquad \cdots (5)$$

[Mathematical Formula 6]

$$y3(t) = F3(x3(t)) \qquad \cdots (6)$$

The internal state x1(t) of the ingredients and the sensing result y1(t) for the state of the ingredients have a relationship found by conversion using a function H1. Similarly, the internal state x2(t) of the cooking utensils and the sensing result y2(t) for the state of the cooking utensils have a relationship found by conversion using a function H2.

At the time of reproduction cooking, the process data Rp(t) is expressed using a symbol rp(t). According to the output of the cooking process generation model with the process rp(t) as an input, the user or cooking robot will perform the work of each process.

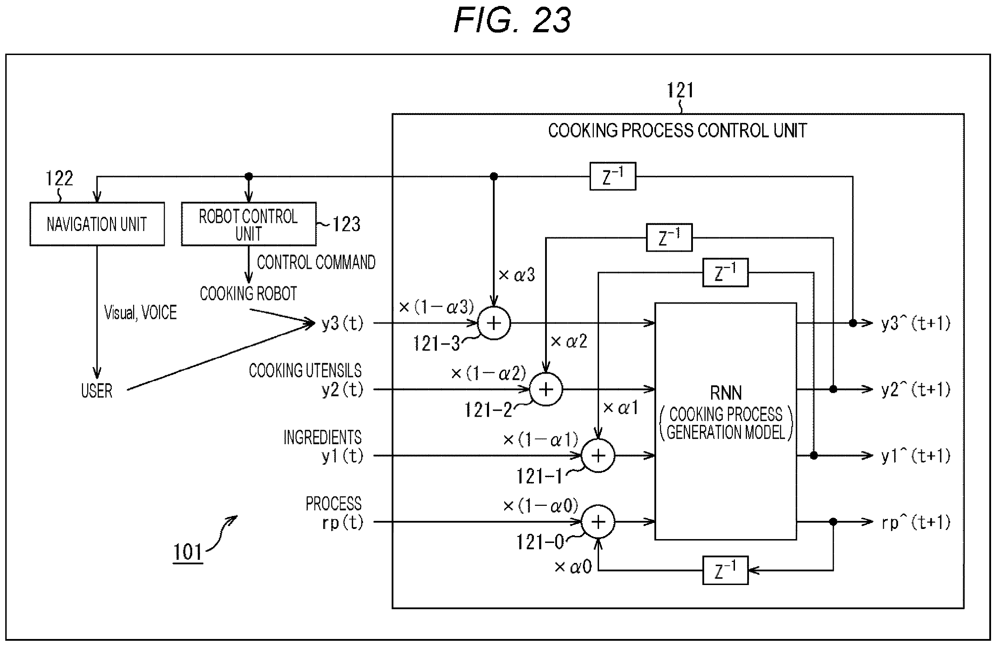

Fig. 23 is a diagram illustrating an example of assistance in the reproduction cooking using the expression in Fig. 22. The prediction illustrated in Fig. 23 is made in the cooking process control unit 121. Here, an example using an RNN will be described, but a Transformer can also be used as a prediction model.

It is assumed that the same ingredients as the ingredients used by the chef for the recording cooking and the same cooking utensils as the cooking utensils used for the recording cooking are prepared at the reproducing side. In addition, it is assumed that the same sensors as the sensors prepared in the environment at the recording side are also prepared in the environment at the reproducing side. The same sensor data as the sensor data measured in the environment at the recording side can also be measured in the environment at the reproducing side. It is assumed that the process data rp(t) is the same data as the process data rpc(t).

The process data rp(t), the sensing result y1(t) for the state of the ingredients, the sensing result y2(t) for the state of the cooking utensils, and the sensing result y3(t) for the state of the user or cooking robot or the environment are input to addition units 121-0 to 121-3, respectively. For convenience of description, y3(t) will be described as a sensing result for the action of the user or cooking robot. Regardless of the sensing result yc1(t) for the state of the ingredients and the sensing result yc2(t) for the state of the cooking utensils at the time of recording cooking, the sensing result y1(t) for the state of the ingredients and the sensing result y2(t) for the state of the cooking utensils at the time of reproduction cooking correspond to other sensor data. In addition, regardless of the sensing result yc3(t) for the state of the user or cooking robot or the environment at the time of recording cooking, the sensing result y3(t) for the state of the user or cooking robot or the environment at the time of reproduction cooking corresponds to other action data.

A predicted value rp^(t+1) of the process data, a predicted value y1^(t+1) of the state of the ingredients, a predicted value y2^(t+1) of the state of the cooking utensils, and the predicted value y3^(t+1) of the action of the user or cooking robot output by the RNN are input to the addition units 121-0 to 121-3 after being delayed, respectively.

The addition unit 121-0 adds the predicted value rp^(t+1) multiplied by $\alpha 0$ to the process data rp(t) and inputs the addition result to the RNN. The addition unit 121-1 adds the predicted value y1^(t+1) multiplied by $\alpha 1$ to the sensing result y1(t) for the state of the ingredients and inputs the addition result to the RNN. The addition unit 121-2 adds the predicted value y2^(t+1) multiplied by $\alpha 2$ to the sensing result y2(t) for the state of the cooking utensils and inputs the addition result to the RNN. The addition unit 121-3 adds the predicted value y3^(t+1) multiplied by $\alpha 3$ to the sensing result y3(t) for the action of the user or cooking robot and inputs the addition result to the RNN.

The RNN makes prediction with the information supplied from the addition units 121-0 to 121-3 as inputs and outputs the predicted value rp^(t+1) of the process data, the predicted value y1^(t+1) of the state of the ingredients, the predicted value y2^(t+1) of the state of the cooking utensils, and the predicted value y3^(t+1) of the action of the user or cooking robot. The prediction by the RNN is made so as to output the predicted value y3^(t+1) for bringing each of the predicted value y1^(t+1) of the state of the ingredients and the predicted value y2^(t+1) of the state of the cooking utensils closer to the learned state at the time of recording cooking. The predicted value y3^(t+1) of the action of the user or cooking robot is supplied to the navigation unit 122 and the robot control unit 123. The predicted value rp^(t+1) of the process data, the predicted value y1^(t+1) of the state of the ingredients, and the predicted value y2^(t+1) of the state of the cooking utensils are also supplied to the navigation unit 122 and the robot control unit 123 as appropriate and used to output navigation and control the cooking robot 102.

In this manner, the cooking process control unit 121 functions as a control unit that predicts a process of the reproduction cooking that reproduces the recording cooking by the chef (generates the process data), using the cooking process generation model generated by performing learning on the basis of the cooking record data.

The predicted value rp^(t+1) that is a prediction result of the cooking process control unit 121 includes information such as the process ID, the time, and the contents of the work of the process at a time t+1. The contents predicted by the cooking process control unit 121 also include information indicating the time of the process, that is, a process switching timing.

The navigation unit 122 performs navigation for the user on the basis of the predicted value y3^(t+1). For example, the navigation unit 122 outputs an instruction for the user to perform the same action as the action represented by the predicted value y3^(t+1). The instruction for the user is output as visual information such as screen display using a display or auditory information using voice from a speaker. The instruction may be output using both of the visual information and the auditory information.

The robot control unit 123 controls the action of the cooking robot 102 on the basis of the predicted value y3^(t+1). For example, the robot control unit 123 outputs, to the cooking robot 102, a control command for performing the same action as the action represented by the predicted value y3^(t+1). Control is performed on the cooking robot 102 for which the sensing result y3(t) has been observed such that the predicted value y3^(t+1) is observed. In addition, Model Predictive Control (MPC) is performed such that a predicted value y3^(T) that is a predicted value of the final state is reached from the sensing result y3(t) as a starting point. The predicted value y3^(T) denotes the same state as the final state of the action of the chef at the time of recording cooking.

Here, a relationship among the control u3(t) of the cooking utensils, the sensing result y3(t) for the action of the user or cooking robot, and the sensing result y2(t) for the state of the cooking utensils will be described. In practice, the user or cooking robot wants to perform the control u3(t). For this purpose, the user moves hands and feet, and the cooking robot 102 makes an action with the robot arm or the like. The action of the user and the action of the cooking robot 102 are observed as the sensing result y3(t). Conversely, it can be deemed that the purpose (intention) of the sensing result y3(t) is the control u3(t).

Therefore, control u4r(t) of the cooking robot 102 or control (navigation) u4p(t) of the user needs to be output including this intention. For this reason, not only the predicted value y3^(t+1) but also the predicted value y2^(t+1) is input to the navigation unit 122 and the robot control unit 123. Furthermore, since the original purpose is to control the state of the ingredients, the predicted value y1^(t+1) is input.

For example, the navigation unit 122 acquires the predicted value y3^(t+1) including information on a motion of the hand of the user turning the stirring stick and the predicted value y2^(t+1) including information on a motion of the stirring stick that is a cooking utensil. The navigation unit 122 compares the acquired predicted value with the sensing result y3(t) and the sensing result y2(t), or more previous sensing results than those sensing results and presents a voice instruction such as "Turn the stirring stick faster" to the user.

In addition, in a case where the temperature of the heater is lower than expected, that is, in a case where the sensing result y2(t) for the temperature of the heater is lower than the predicted value y2^(t+1), the navigation unit 122 presents a voice instruction such as "Set the level to 2.2 to increase the temperature of the heater" to the user.

Meanwhile, the robot control unit 123 acquires the predicted value y3^(t+1) and the predicted value y2^(t+1). The robot control unit 123 outputs a control command for controlling a joint angle such that the sensing result y3(t) including information on the current posture of the cooking robot 102 and the sensing result y2(t) including information on the posture of the cooking utensil (stirring stick) approach the predicted value y3^(t+1) and the predicted value y2^(t+1), respectively. A relationship between the joint angle and the posture of the cooking robot 102 (particularly, an end effector attached to the arm) is found by Jacobian. The robot control unit 123 generates a control command for controlling the joint angle to an appropriate angle by solving inverse dynamics. In addition, after controlling the cooking robot 102 with the control command, the robot control unit 123 confirms whether or not the action according to the control command has been appropriately performed, on the basis of whether or not the state of the stirring stick coincides with the state represented by the predicted value y2^(t+1).

Note that control of the temperature of the heater is also implemented by causing the cooking robot 102 to operate a slide lever for regulating the temperature provided in the heater. The temperature of the heater may be controlled by electronic control from the computer of the cooking robot 102 via the application programming interface (API).

<Specific Examples of Navigation and Control>

· Example of Temperature Adjustment

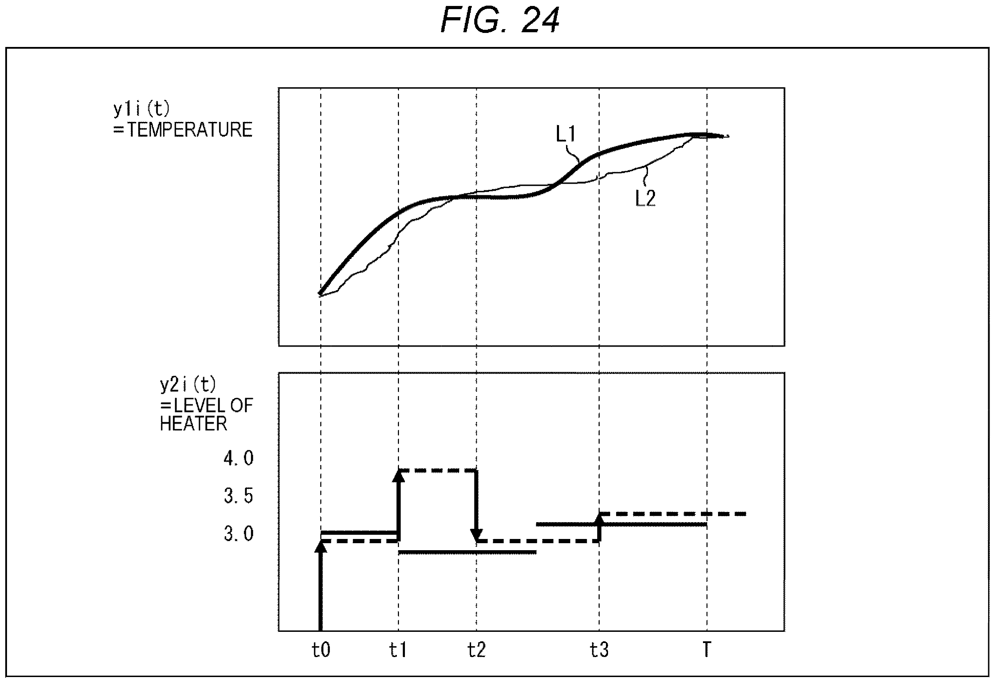

Fig. 24 is a diagram illustrating an example of temperature adjustment for a heater.
The horizontal axis of the graph in the upper part of Fig. 24 indicates the time, and the vertical axis indicates the temperature of ingredients to be cooked. The curve L1 indicates changes in a temperature yc1i(t) of the ingredients in the recording cooking. The curve L2 indicates changes in a temperature y1i(t) of the ingredients in the reproduction cooking. Here, the sensing result y1(t) for the state of the ingredients is a vector indicating measurement results by a plurality of sensors. A change in the temperature of the ingredients is indicated by y1i(t) that is the i-th element of the sensing result y1(t).
The horizontal axis of the graph in the lower part of Fig. 24 indicates the time, and the vertical axis indicates the level of the heater. The solid lines indicate changes in a level yc2i(t) of the heater in the recording cooking. The broken lines indicate changes in a level y2i(t) of the heater in the reproduction cooking. The level represents the thermal power (amount of heat) of the heater. It is also possible to define the temperature of the heater that is a cooking utensil as y2i(t), but here, the level of the heater is used to simplify the description. Normally, the heater has a function of maintaining constant thermal power when a level is set. Control of the temperature of the heater is an action of setting a level at each timing. The arrows in the graph of the lower part of Fig. 24 indicate actions of setting levels.
The level of the heater is adjusted at each timing such that the temperature y1i(t) indicated by the curve L2 in the upper part approaches the temperature yc1i(t) indicated by the curve L1. In the example in Fig. 24, the temperature y1i(t) is lower than the temperature yc1i(t) from a time t0 to a time t1, and the temperature y1i(t) becomes higher than the temperature yc1i(t) in the middle of the period from the time t1 to a time t2. Similarly, the temperature y1i(t) becomes lower than the temperature yc1i(t) in the middle of the period from the time t2 to a time t3, and the temperature y1i(t) gradually approaches the temperature yc1i(t) in the period from the time t3 to a time T. The temperature yc1i(t) at the time T is a subgoal of the process including the temperature adjustment work for the heater.

In this case, the level of the heater at each timing is adjusted as follows.

> y2i(t0) = Level 3.0
> y2i(t1) = Level 4.0
> y2i(t2) = Level 3.0
> y2i(t3) = Level 3.5

In a case where the user adjusts the level of the heater, the navigation unit 122 instructs the user by outputting voices as follows at each timing.

> t0: "Set the heater level to 3.0"
> t1: "Set the heater level to 4.0"
> t2: "Set the heater level to 3.0"
> t3: "Set the heater level to 3.5"

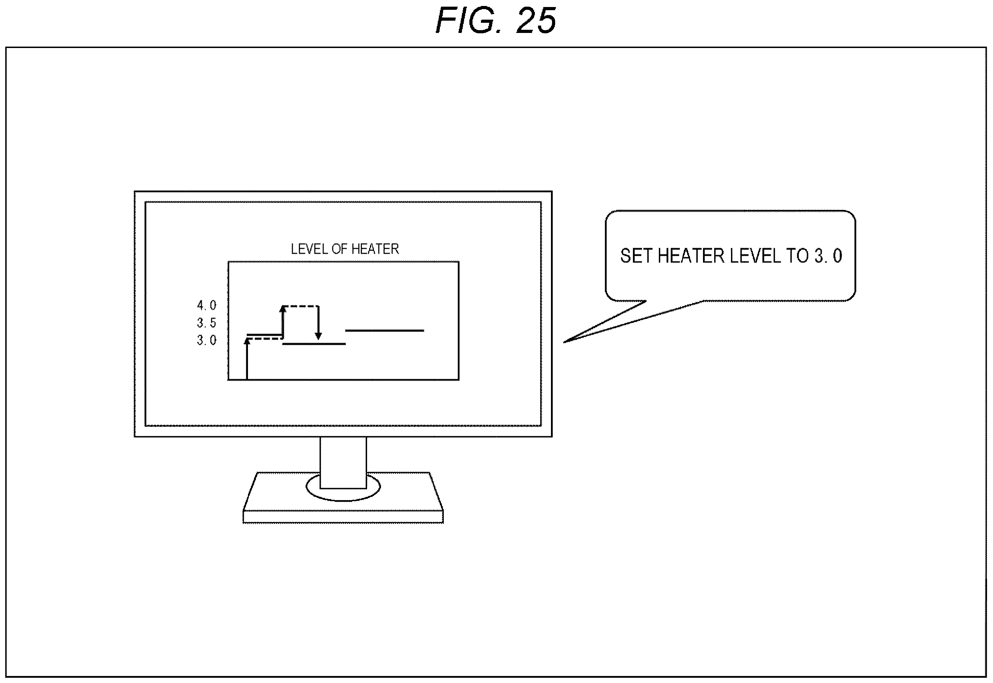

Fig. 25 is a diagram illustrating an example of an instruction to adjust the level of the heater.

As illustrated in the balloon in Fig. 25, for example, a voice instructing to adjust the level of the heater to 3.0 is output at the timing of the time t2. The display displays a graph indicating changes in levels until then. The user will adjust the level of the heater to 3.0 according to the instructions from the navigation unit 122.

Meanwhile, in a case where the cooking robot 102 adjusts the level of the heater, the robot control unit 123 outputs a control command for adjusting the level of the heater at each timing.

· Example of Stirring Work Using Stirring Stick

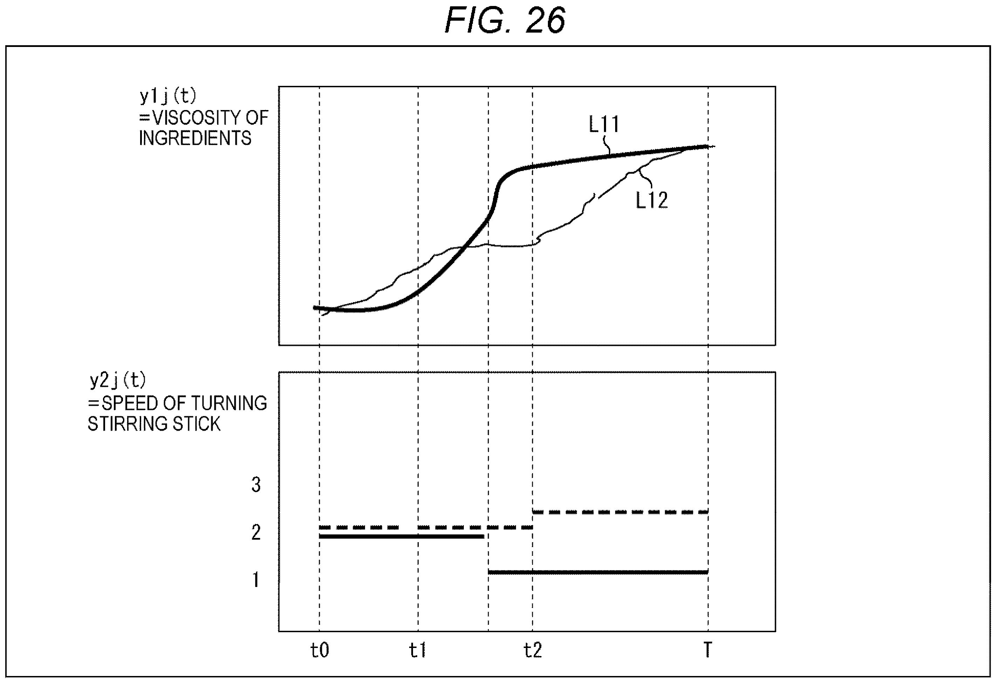

Fig. 26 is a diagram illustrating an example of control of a stirring work using a stirring stick.

The horizontal axis of the graph in the upper part of Fig. 26 indicates the time, and the vertical axis indicates the viscosity of ingredients to be cooked. The curve L11 indicates changes in viscosity yc1j(t) of the ingredients in the recording cooking. The curve L12 indicates changes in viscosity y1j(t) of the ingredients in the reproduction cooking. A change in viscosity of the ingredients is indicated by y1j(t) that is the j-th element of the sensing result y1(t) for the state of the ingredients.

For example, a viscosity sensor is equipped in the stirring stick, and the viscosity yc1j(t) and the viscosity y1j(t) can be quantified. The viscosity properties are controlled by physically operating the stirring stick to move the ingredients put in a pot or the like around.

In the graph in the lower part of Fig. 26, the horizontal axis indicates the time, and the vertical axis indicates the speed of turning the stirring stick. The solid line indicates changes in speed yc2j(t) of the stirring stick in the recording cooking. The broken line indicates changes in speed y2j(t) of the stirring stick in the reproduction cooking. A larger number represents a faster speed of turning the stirring stick. It can be referred to as the speed y2j(t) that the chef is turning the stirring stick at a speed such as two rotations per second.

The speed of turning the stirring stick is adjusted at each timing such that the viscosity y1j(t) indicated by the curve L12 approaches the viscosity yc1j(t) indicated by the curve L11 in the upper part. In the example in Fig. 26, the viscosity y1j(t) is higher than the viscosity yc1j(t) from a time t0 to a time t1, and the viscosity y1j(t) becomes lower than the viscosity yc1j(t) in the middle of the period from the time t1 to a time t2. The viscosity y1j(t) gradually approaches the viscosity yc1j(t) in the period from the time t2 to a time T. The viscosity yc1j(t) at the time T is a subgoal of the process including the work of turning the stirring stick.

In a case where the user performs the work of turning the stirring stick, the navigation unit 122 instructs the user by outputting voices as follows at each timing.

> t0: "Stir about twice per second"
> t2: "Speed up the rotation to 2.5 times per second"

A graph as illustrated in Fig. 26 may be displayed on the display, and the user may be instructed by outputting the following voices. A moving image in which the ingredients are actually mixed at a target rotation speed may be displayed on the display.

t0: "Rotate about twice per second so as to match the graph"
t2: "Rotate about 2.5 times per second so as to match the graph"

Meanwhile, in a case where the cooking robot 102 performs the work of turning the stirring stick, the robot control unit 123 outputs a control command for adjusting the speed of turning the stirring stick at each timing.

t0: About twice per second
t2: 2.5 times per second

The cooking robot 102 executes the control command supplied from the robot control unit 123 and controls actuators of the robot arm and the end effector so as to perform stirring at a speed of twice per second at the time t0 and to raise the speed of turning the stirring stick to 2.5 times per second at the time t2. The work by the cooking robot 102 is performed by mixing the ingredients around with the end effector having the stirring stick.

· Example in which User and Robot Perform Work in Cooperation

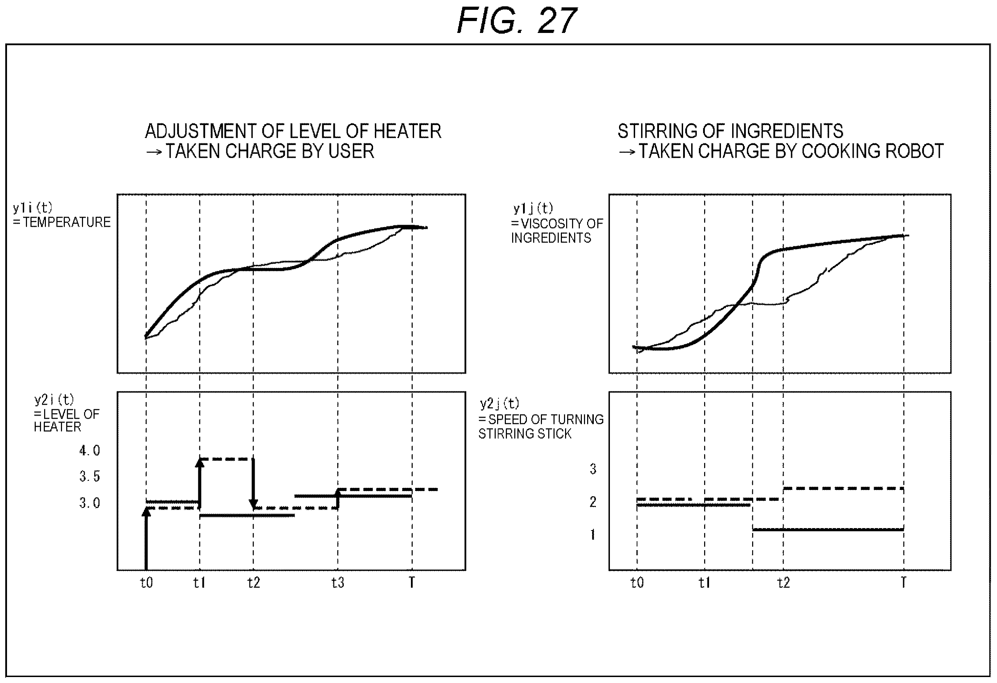

Fig. 27 is a diagram illustrating an example of control in a case where the user and the cooking robot 102 perform work in cooperation.
In the example in Fig. 27, works are assigned such that the user is in charge of the work of setting the level of the heater and the cooking robot 102 is in charge of the work of stirring the ingredients. The navigation unit 122 outputs an instruction to set the level of the heater to the user as described above. The robot control unit 123 outputs a control command for controlling the speed of turning the stirring stick to the cooking robot 102 as described above.
In this manner, in a case where both of the work of adjusting the level of the heater and the work of turning the stirring stick are performed in a certain process, the burden particularly on the user can be lessened by allocating each work to one of the user and the cooking robot 102. A plurality of works performed in one process may be performed in parallel, or may be performed by shifting time such that one work is performed first and the other work is performed later.
In this manner, the presentation of the work by the navigation unit 122 is performed in order to bring the state of the ingredients observed according to the work by the user closer to the state of the ingredients at the time of recording cooking by the chef. Similarly, control of the cooking robot 102 by the robot control unit 123 is also performed in order to bring the state of the ingredients observed according to the work by the cooking robot 102 closer to the state of the ingredients at the time of recording cooking by the chef.

<<Example Using Second Learning (Learning Using Information on Chemical Changes)>>

<About Learning>

By using a sensor capable of confirming a chemical change such as a Maillard reaction or caraméliser at the time of recording cooking, learning while examining logic in cooking such as timing of moving on to the next process is enabled. In this case, for example, learning is performed using teaching data including an annotation by a human.

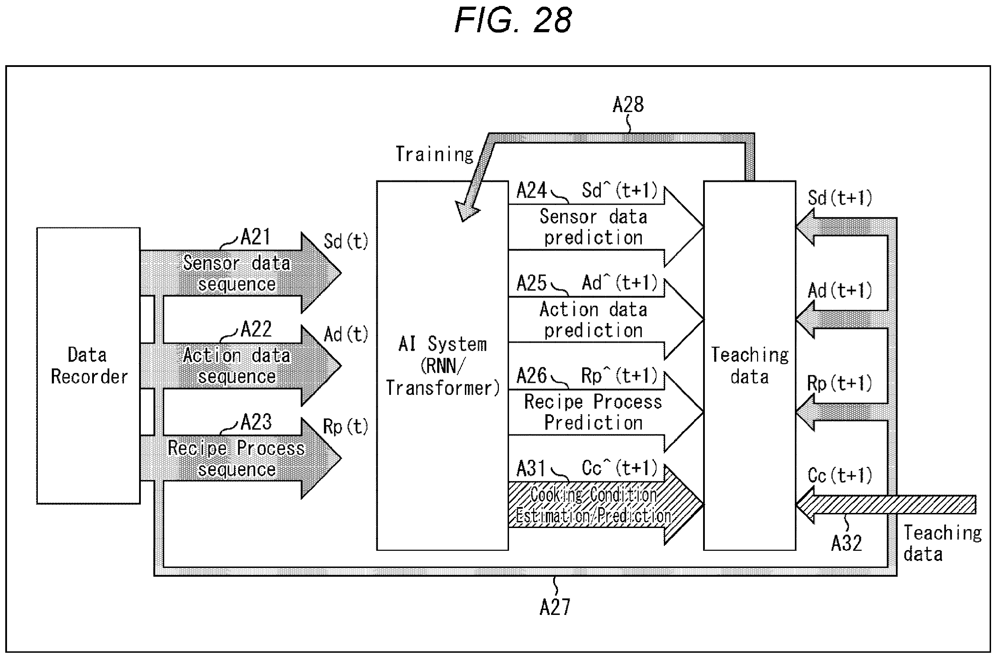

Fig. 28 is a diagram illustrating a second example of learning using the cooking record data. Description of the same contents as the contents described with reference to Fig. 18 and the like will be omitted as appropriate. In the configuration illustrated in Fig. 28, learning using information on chemical changes occurring in ingredients in the course of cooking is performed.
An AI System in Fig. 28 makes prediction by inputting the sensor data $Sd(t)$, the action data $Ad(t)$, and the process data $Rp(t)$ to a prediction model and outputs the sensor data $Sd^\wedge(t+1)$, the action data $Ad^\wedge(t+1)$, and the process data $Rp^\wedge(t+1)$ as indicated by the arrows A24 to A26. In addition, the AI System outputs chemical reaction data $Cc^\wedge(t+1)$ as indicated by the arrow A31 together with these predicted values. The chemical reaction data $Cc^\wedge(t+1)$ is a predicted value of a chemical reaction occurring in ingredients at the time $t+1$.
As indicated by the arrow A32, chemical reaction data $Cc(t+1)$ is included in the teaching data and used to train the RNN or the like. The chemical reaction data $Cc(t+1)$ is teaching data of a chemical reaction occurring in ingredients at the time $t+1$ and is set as, for example, an annotation by a human. The chemical reaction data $Cc(t+1)$ may be generated by the analysis apparatus 31 and supplied to the model generation apparatus 2.
The learning by the AI System is performed so as to decrease an error between the chemical reaction data $Cc^\wedge(t+1)$ and the chemical reaction data $Cc(t+1)$ in addition to respective errors between the sensor data $Sd^\wedge(t+1)$ and the sensor data $Sd(t+1)$, between the action data $Ad^\wedge(t+1)$ and the action data $Ad(t+1)$, and between the process data $Rp^\wedge(t+1)$ and the process data $Rp(t+1)$ described above.

Here, the process data rp^(t+1) is information used for navigation for the user or control of the cooking robot 102 by dividing the entire cooking for each process and predicting a subgoal state of each process. Information indicating chemical reactions such as water evaporation, protein denaturation (elasticity), protein denaturation (amino acid), and Maillard reaction described with reference to Fig. 7 is added to the process data rpc(t) and used for learning.

The process data rpc(t) includes information such as the time of each process, ingredients used in each process, and contents of the work of each process, apart from the process ID. Information obtained by adding information indicating a chemical reaction occurring in ingredients and information indicating a progress status of the chemical reaction to the process data rpc(t) is defined as process data rpc1(t).

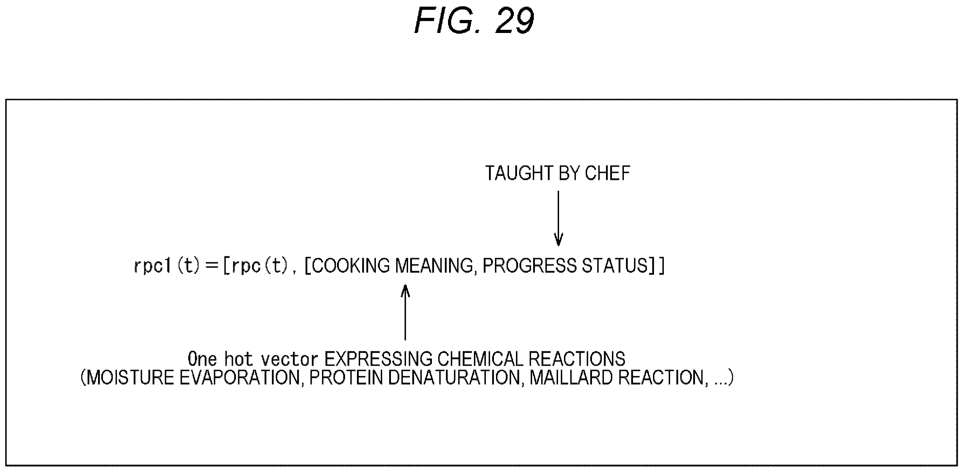

Fig. 29 is a diagram illustrating an example of the process data rpc1(t).

As illustrated in Fig. 29, the process data rpc1(t) is represented by adding, to the process data rpc(t), information indicating a chemical reaction (cooking meaning) occurring in ingredients and information indicating a progress status of the chemical reaction. The chemical reaction is represented by, for example, a One-hot vector. In addition, the progress status of the chemical reaction is set by being taught by an expert such as a chef.

For example, it is assumed that a process 1 is a process of inducing evaporation of moisture in ingredients, and a process 2 is a process of adding new ingredients and inducing a Maillard reaction in the ingredients. In this case, the process data rpc1(t) of each of the processes 1 and 2 includes information indicating the following contents.

Process 1: t = 0 to T1, Cooking Meaning = Moisture Evaporation, Progress Status (0 at t =0, 1.0 at t = T1)
Process 2: t = T1 to T2, Cooking Meaning = Maillard Reaction, Progress Status (0 at t = T1, 1.0 at t = T2)

Note that "t = 0 to T1" included in the process data rpc1(t) of the process 1 denotes the time of the process 1 and is included in the process data rpc(t) of the process 1. "t =T1 to T2" included in the process data rpc1(t) of the process 2 denotes the time of the process 2 and is included in the process data rpc(t) of the process 2.

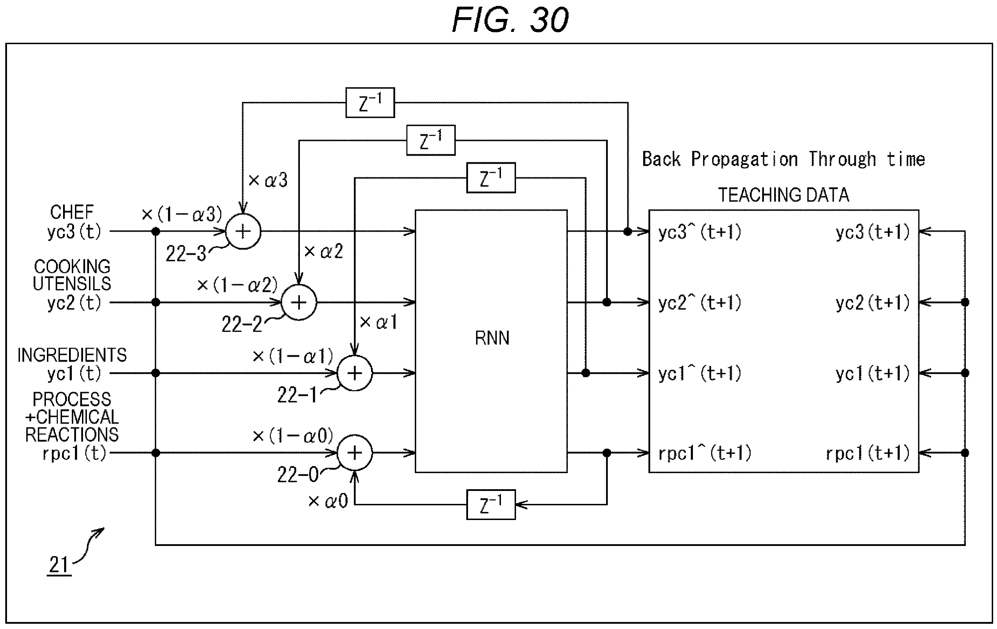

Fig. 30 is a diagram illustrating an example of learning using the process data rpc1(t). The same constituents as the constituents described with reference to Fig. 20 are designated by the same reference signs.

The process data rpc1(t) to which information on a chemical reaction has been added is input to the addition unit 22-0. The addition unit 22-0 adds the predicted value rpc1^(t+1) multiplied by $\alpha$0 to the process data rpc1(t) and inputs the addition result to the RNN.

The RNN makes prediction with the information supplied from the addition units 22-0 to 22-3 as inputs and outputs the predicted value rpc1^(t+1) of the process data, the predicted value yc1^(t+1) of the state of the ingredients, the predicted value yc2^(t+1) of the state of the cooking utensils, and the predicted value yc3^(t+1) of the action of the chef.

By the learning as described above, learning is enabled by including a chemical reaction (cooking meaning) and the progress status in the sensor data, and a prediction model capable of predicting these chemical reaction (cooking meaning) and progress status can be generated.

In addition, the accuracy of determining the process switching timing, determining the progress status, and the like can be increased. For example, the timing at which the progress status included in the predicted value rpc1^(t+1) becomes "1.0" is determined as the timing of the completion of the chemical reaction. When chemical reactions are intended for each process, the timing of completion of the chemical reaction can be determined as the timing of completion of the current process, that is, the timing of switching to the next process.

<Assistance in Reproduction Cooking>

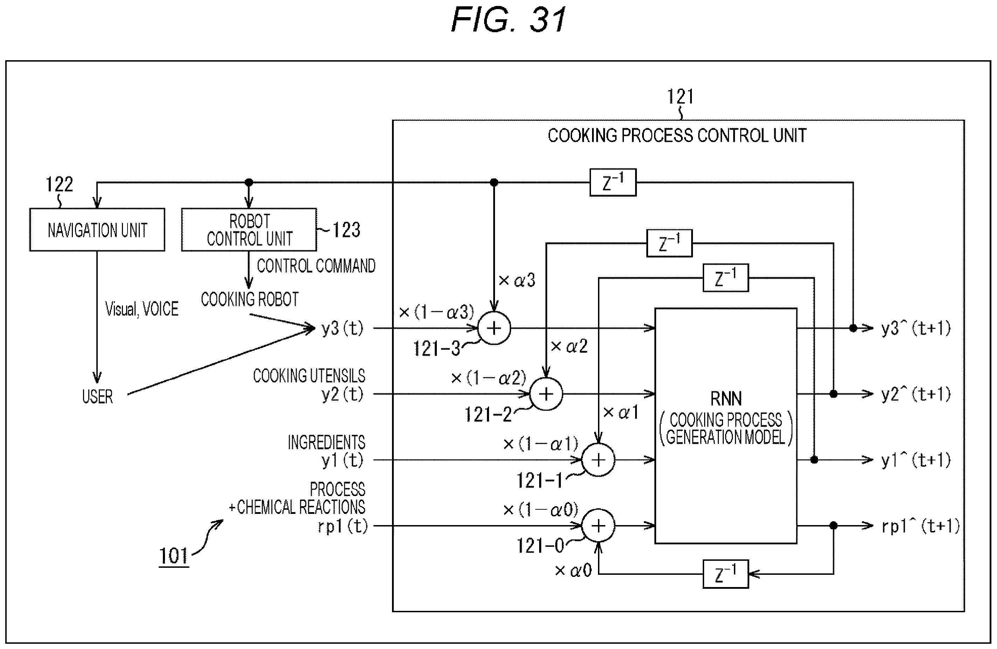

Fig. 31 is a diagram illustrating an example of assistance in the reproduction cooking using a prediction model generated by training using the process data rpc1(t). The same constituents as the constituents described with reference to Fig. 23 are designated by the same reference signs.

The process data rp1(t) to which information on a chemical reaction has been added is input to the addition unit 121-0. It is assumed that the process data rp1(t) is the same data as the process data rpc1(t). The addition unit 121-0 adds the predicted value rp1^(t+1) multiplied by $\alpha$0 to the process data rp1(t) and inputs the addition result to the RNN.

The RNN makes prediction with the information supplied from the addition units 121-0 to 121-3 as inputs and outputs the predicted value rp1^(t+1) of the process data, the predicted value y1^(t+1) of the state of the ingredients, the predicted value y2^(t+1) of the state of the cooking utensils, and the predicted value y3^(t+1) of the action of the user or cooking robot.

The predicted value rp1^(t+1) output from the RNN is supplied to the navigation unit 122 via a path (not illustrated) and used for navigation for the user. For example, information on a chemical reaction occurring in a process being worked on and a graph indicating a progress status are presented to the user using display on a screen of a display. In addition, the switching timing to the next process is presented.

Advancing cooking while understanding the meaning of the work leads to a sense of satisfaction of the user and is effective. Since the information is presented on the basis of the predicted value rp1^(t+1), the user who performs the reproduction cooking can confirm what kind of cooking meaning is in the work that the user is performing and can perform effective cooking.

<<Example of Using LLM and V&L Foundation Model to Determine Process Switching Timing>>

It is also possible to estimate the progress status of a process in a language space using a large language model (LLM) or a foundation model of vision & language (V&L). For example, such estimation is performed using the cooking knowledge DB 32 (Fig. 12) or the like that is a knowledge database of information regarding cooking.

For example, the end timing of the chemical reaction is estimated, and the end timing of the chemical reaction is determined as the process switching timing. It is estimated from the following viewpoint whether or not the process being worked on is a process that induces a chemical reaction. These estimations are possible by a method using the RNN or a method using a Transformer and a multilayer perceptron (MLP) to be described later.

(1) Whether or not necessary chemical components are contained in the ingredients
(2) Whether or not the contents of the work induce a chemical reaction

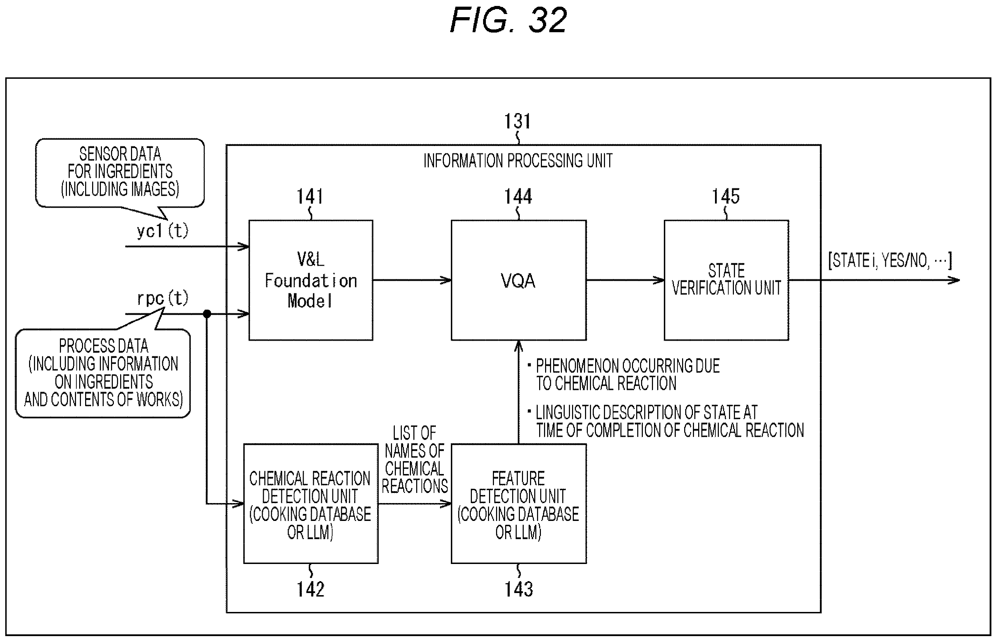

Fig. 32 is a block diagram illustrating a configuration example of an information processing unit 131 that estimates a progress status of a process. The configuration illustrated in Fig. 32 is provided in the model generation apparatus 2.

The information processing unit 131 is constituted by a V&L Foundation Model 141, a chemical reaction detection unit 142, a feature detection unit 143, a Visual Question and Answer (VQA) 144, and a state verification unit 145. The sensing result $yc1$ for the state of the ingredients included in the cooking record data is input to the V&L Foundation Model 141. The sensing result $yc1$ includes an image of the ingredients captured by the camera. In addition, the process data $rpc(t)$ is input to the V&L Foundation Model 141 and the chemical reaction detection unit 142. The process data $rpc(t)$ includes a text indicating ingredients to be used in the process and a text that is an explanation of the contents of the work.

The V&L Foundation Model 141 is a Foundation Model including a V&L Encoder. Examples of the V&L Encoder include Contrastive Language-Image Pre-training (CLIP) (Document 1) and GLIPv2 (Document 2).

Document 1: "A. Radford et.al., "Learning Transferable Visual Models From Natural Language Supervision", CoRR, Mar., 2021", (https://arxiv.org/abs/2103.00020)
Document 2: "H. Zhang, et.al., "GLIPv2: Unifying Localization and Vision-Language Understanding", arXiv 2022", (https://arxiv.org/abs/2206.05836)

GLIPv2 is a model generated by learning a correspondence relationship between an object detected from an image and a text serving as an explanation. The V&L Foundation Model 141 having GLIPv2 or the like detects ingredients appearing in the image of the sensing result $yc1$, using a Bounding Box, and outputs a text describing the ingredients to the VQA 144 together with the image of the ingredients.

The chemical reaction detection unit 142 includes a cooking database or an LLM. The cooking database included in the chemical reaction detection unit 142 is a database describing a chemical reaction or the like occurring in a cooking process, such as the cooking knowledge DB 32. The LLM is an LLM such as ChatGPT (registered trademark).

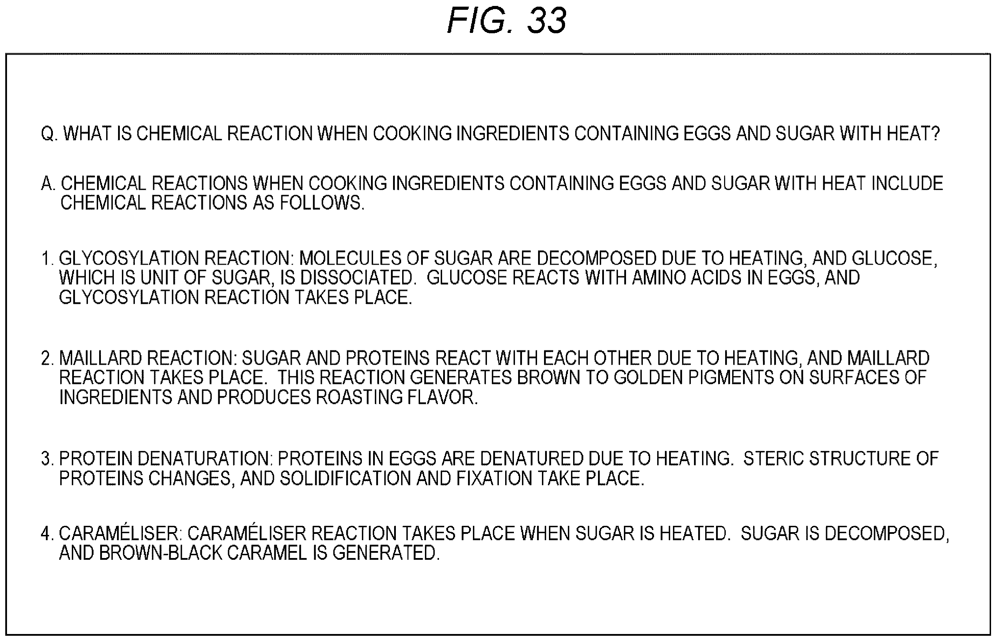

On the basis of the ingredients included in the process data and the text related to the contents of the work, the chemical reaction detection unit 142 detects a chemical reaction occurring in the ingredients by that work. For example, in a process of heating ingredients containing eggs and sugar, a glycosylation reaction, a Maillard reaction, protein denaturation, and caraméliser are detected as chemical reactions occurring in the ingredients. In a case where a prompt having the contents for inquiring a type of a chemical reaction occurring when the eggs and the sugar are heated as the ingredients is input, for example, a text as illustrated in Fig. 33 is output from the LLM. Information on the list of chemical reactions detected by the chemical reaction detection unit 142 is supplied to the feature detection unit 143.

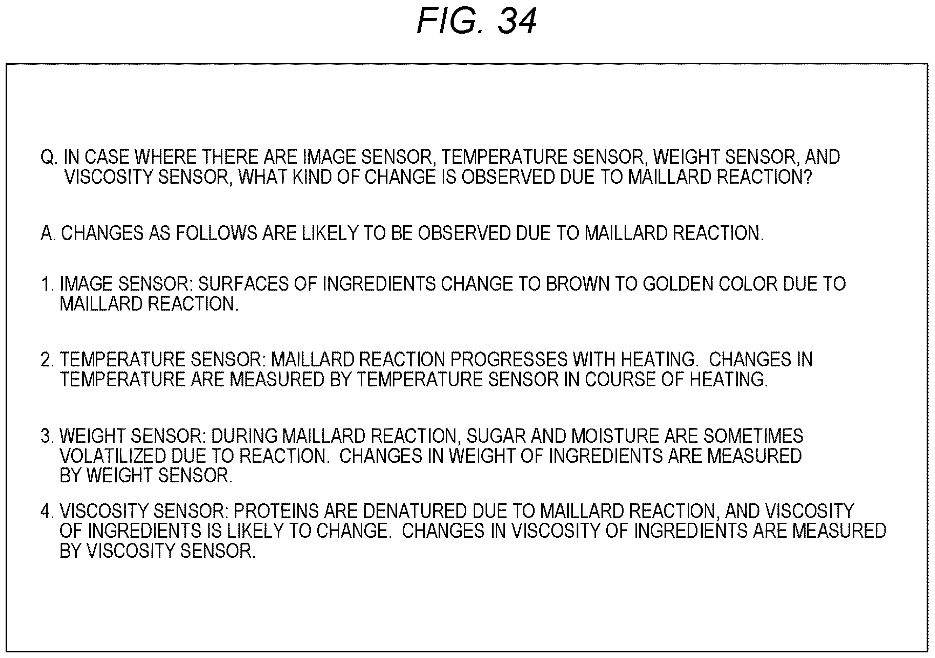

The feature detection unit 143 includes a cooking database or an LLM. The feature detection unit 143 detects a feature of sensor data when each chemical reaction is completed on the basis of the list of chemical reactions supplied from the chemical reaction detection unit 142. For example, in a case where there are an image sensor, a temperature sensor, a weight sensor, and a viscosity sensor, for example, a text as illustrated in Fig. 34 is output from the LLM in a case where a prompt having the contents for inquiring features of the sensor data when the Maillard reaction is completed is input.

Information regarding the features detected by the feature detection unit 143 is supplied to the VQA 144. The information output from the feature detection unit 143 includes a phenomenon that occurs due to a chemical reaction and a text regarding a feature of the sensor data when the chemical reaction is completed.

Note that a type of a chemical reaction of each ingredient and each work, a phenomenon observable by a sensor when the chemical reaction has occurred, and a state (including a temporal change) of the sensor data indicating a completion timing of the chemical reaction may be formed into a database and described in the cooking database. A cooking database in which such contents are described is prepared in the chemical reaction detection unit 142 and the feature detection unit 143.

In addition, the output of LLM may be restricted so as to output a name of a chemical reaction and a linguistic description of a change in the sensor data that occurs due to each chemical reaction. This can increase the accuracy of the output of the LLM. The LLM whose output is restricted in this manner is prepared in the chemical reaction detection unit 142 and the feature detection unit 143.

The VQA 144 determines the progress status of the chemical reaction occurring in the ingredients on the basis of the image and the text regarding the ingredients supplied from the V&L Foundation Model 141 and the text supplied from the feature detection unit 143. The VQA is a model that answers a question about the content of an image. For example, the VQA 144 is generated by performing Fine Tuning of the Foundation Model, using information regarding chemical reactions during cooking described in the cooking database.

Changes in image of the Maillard reaction in cooking eggs and sugar with heat include the following changes.

1. Surface color: Changed from brown to a golden color
2. Surface texture: Changed to a crisp texture. Subtle unevenness appears.

The features at the completion of the Maillard reaction include the following features.

1. Surface color: The entire surface of the ingredients becomes uniformly brown or color of caraméliser.
2. Surface texture: Crisp caraméliser. Small unevenness appears.

The VQA 144 outputs answers to each of a state 1 (surface color) and a state 2 (surface texture) to the state verification unit 145 on the basis of, for example, an image as the sensor data. The processing by the VQA 144 is performed using the sensor data of other sensors such as a temperature sensor and a weight sensor as appropriate.

The state verification unit 145 verifies whether or not the chemical reaction has been completed, on the basis of the information supplied from the VQA 144, and outputs information indicating the progress status related to each state of changes in image. For example, in a case where the surface color (state 1) satisfies the features at the time of completion regarding the Maillard reaction, the state verification unit 145 outputs information ("YES") indicating the fact. In addition, in a case where the surface texture satisfies the features at the time of completion, the state verification unit 145 outputs information indicating the fact.

The training unit 21 of the model generation apparatus 2 trains the prediction model such as the RNN, using the chemical reaction completion timing estimated as described above as process switching timing.

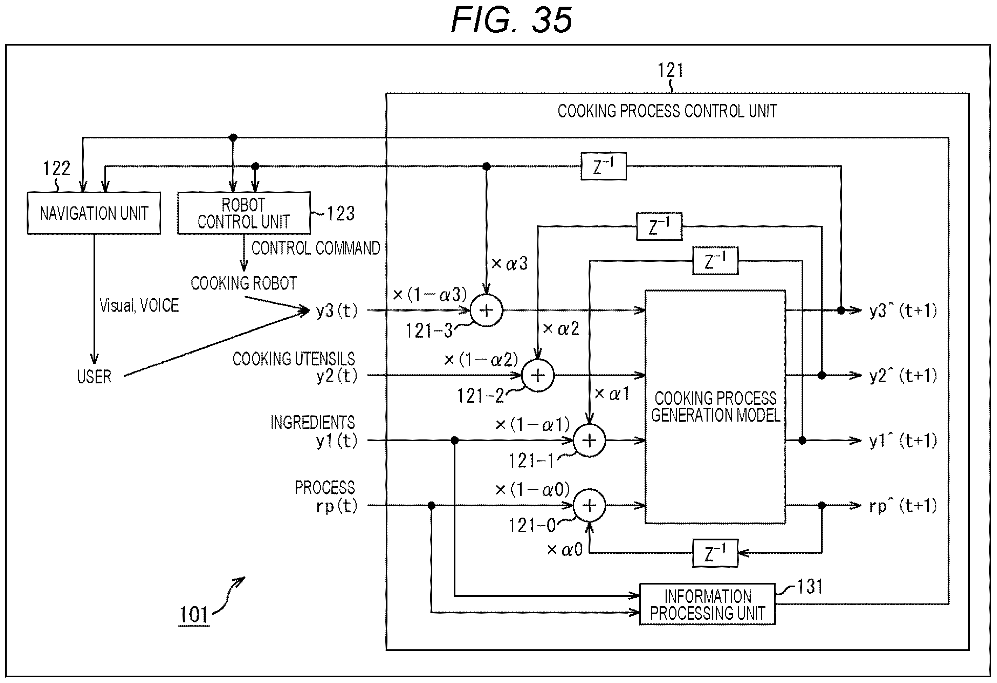

Fig. 35 is a diagram illustrating a configuration example of the cooking assistance apparatus 101 that estimates a progress status of a process in a language space and uses an estimation result for assisting in the reproduction cooking.

The configuration illustrated in Fig. 35 is the same as the configuration in Fig. 32 except that the information processing unit 131 having the configuration in Fig. 23 is additionally provided in the cooking process control unit 121. Instead of the sensing result yc1(t) for the state of ingredients and the process data rpc(t), the sensing result y1(t) for the state of ingredients and the process data rp(t) are input to the information processing unit 131 of the cooking process control unit 121. The process data rp(t) includes information regarding chemical reactions occurring in ingredients in each process.

The information processing unit 131 of the cooking process control unit 121 verifies whether or not each chemical reaction has been completed as described above on the basis of the sensing result y1(t) and the process data rp(t) and outputs a verification result. Note that, since the process data rp(t) includes information regarding chemical reactions in each process, the estimation (estimation of the chemical reaction) using the LLM in the chemical reaction detection unit 142 (Fig. 32) is not performed. The features of the sensor data when the chemical reaction indicated by the information included in the process data rp(t) is completed are detected by the feature detection unit 143 and used for verifying the progress status of the chemical reaction. The verification result by the cooking process control unit 121 is supplied to the navigation unit 122 and the robot control unit 123.

In the navigation unit 122, the verification result by the information processing unit 131 is used for navigation for the user. In the robot control unit 123, the verification result by the information processing unit 131 is used to control the cooking robot 102. For example, the verification result by the information processing unit 131 is used to determine whether or not the process being worked on is to be continued. By using the verification result by the information processing unit 131, for example, the accuracy of the process switching timing to be presented to the user can be improved.

<<About Case Where Reduced Sensors are Provided in Environment at Reproducing Side>>

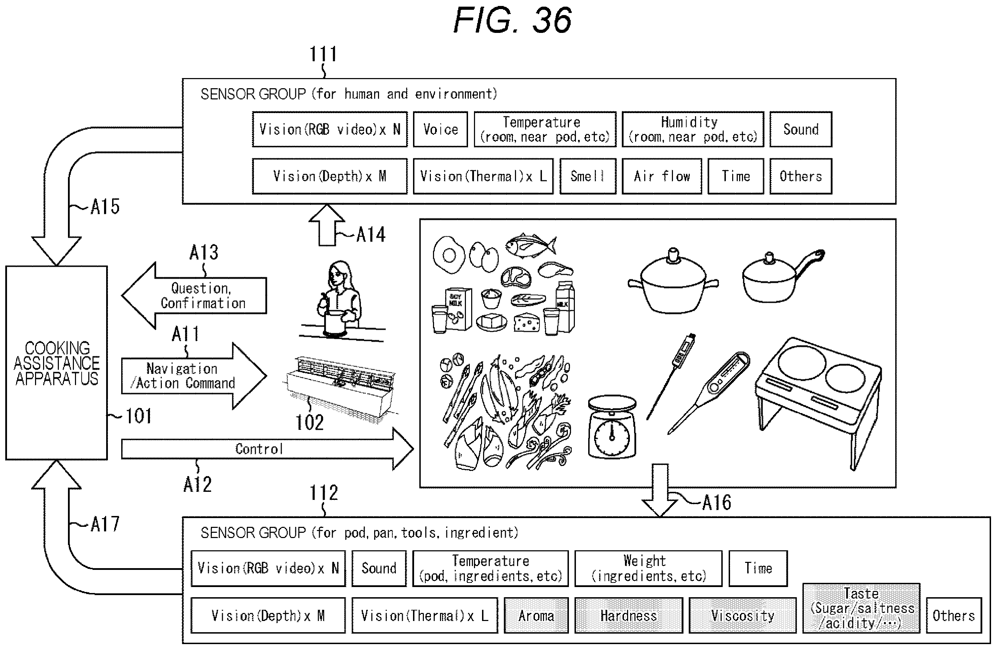

Fig. 36 is a diagram illustrating another configuration example of the cooking assistance system provided in an environment at the reproducing side.

A sensor group 112 illustrated in Fig. 36 has Reduced sensors having fewer types than the sensors constituting the sensor group 12 at the recording side. The fact that the Aroma sensor and the like are grayed out indicates that these sensors are not prepared.

There is a case where the same sensors as those in the environment at the recording side are not prepared in the environment at the reproducing side, and an AI system capable of making prediction with high accuracy even in such a case is required. The AI system capable of making prediction with high accuracy even in a case where the Reduced sensors are used is implemented, for example, by performing retraining of the cooking process generation model (step S13 in Fig. 14).

The retraining of the cooking process generation model is performed by omitting the sensor data of a predetermined sensor and performing interpolation using a predicted value of the sensor data instead of the actually measured sensor data. For example, the sensor data of the Aroma sensor included in the cooking record data is omitted, and instead, training is performed using interpolated sensor data.

Which sensor can be omitted is confirmed at the time of retraining, for example, by changing the ratio of interpolation or changing the type of sensor data to be interpolated. In a case where a prediction result by a prediction model generated in a state where a certain sensor is omitted is within a predetermined range of an error with respect to a prediction result of a prediction model generated in a state where the sensor is not omitted, the certain sensor is determined as a sensor that can be omitted.

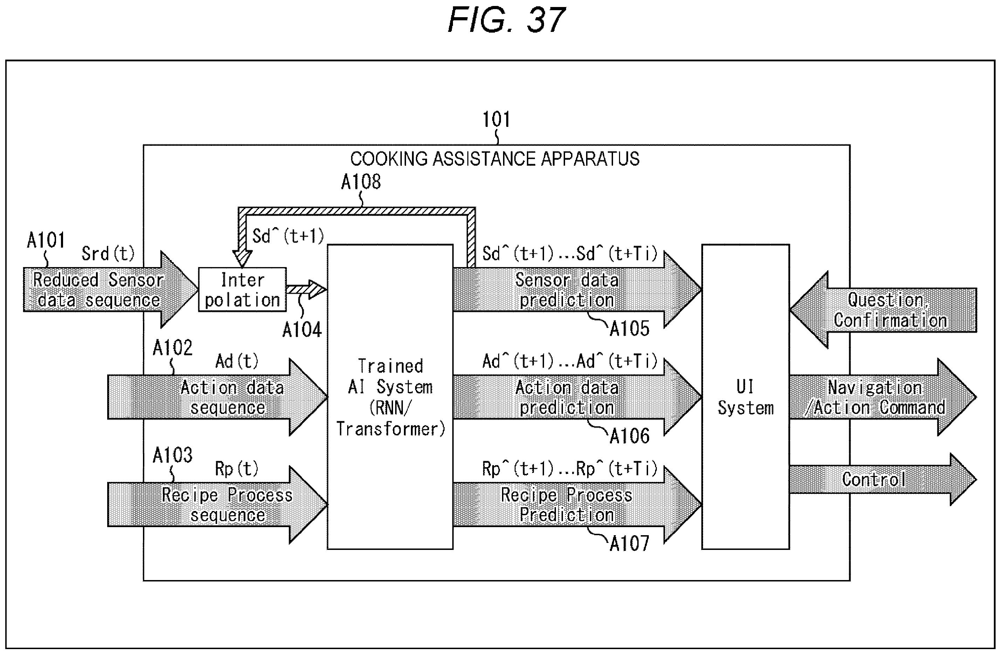

Fig. 37 is a diagram illustrating a flow of data in the cooking assistance system using the Reduced sensors.

As indicated by the arrows A101 to A103, sequence data of sensor data Srd(t) that is a sensing result of the Reduced sensors, as well as sequence data of the action data Ad(t) and the process data Rp(t), are input to the cooking assistance apparatus 101. Interpolation is performed on the sensor data Srd(t), and the sensor data after the interpolation is input to the RNN as indicated by the arrow A104.

In a case where the dimension of the sensing result yc1(t) for the state of ingredients at the recording side is assumed as Nc1 and the dimension of the sensing result y1(t) at the reproducing side is assumed as N1, a relationship of Nc1 > N1 is established. Here, the elements (data) from the first dimension to the N1-th dimension included in the sensing result y1(t) are the same elements as the elements from the first dimension to the N1-th dimension included in the sensing result yc1(t). Zeros are padded (interpolated) as elements after the N1-th dimension of the sensing result y1(t). In this manner, the sensing result y1(t) after 0-padding, which is Nc1-dimensional vector data, is input to the RNN.

The sensing result y1(t) after 0-padding is data having the same dimensions as the sensing result yc1(t) and can be added to and subtracted from the sensing result yc1(t).

That is, in a case where the sensing result yc1(t) and the sensing result y1(t) are represented by following Formulas (7) and (8), respectively, the Nc1-dimensional vector data represented by Formula (9) is generated by 0-padding and used as an input to the RNN.

[Mathematical Formula 7]

$$\mathrm{yc1}(t) = [\mathrm{yc1}[0], \mathrm{yc1}[1], \cdot \cdot \cdot, \mathrm{yc1}[\mathrm{Nc1}-1]] \quad (\text{Nc1-Dimensional}) \cdot \cdot \cdot (7)$$

[Mathematical Formula 8]

$$\mathrm{y1}(t) = [\mathrm{y1}[0], \mathrm{y1}[1], \cdot \cdot \cdot, \mathrm{y1}[\mathrm{N1}-1]] \quad (\text{N1 (< Nc1)-Dimensional}) \cdot \cdot \cdot (8)$$

[Mathematical Formula 9]

$$\mathrm{y1}(t) = [\mathrm{y1}[0], \mathrm{y1}[1], \cdot \cdot \cdot, \mathrm{y1}[\mathrm{N1}-1], 0, 0, \cdot \cdot \cdot, 0] \quad (\text{Nc1-Dimensional})$$

$$\cdot \cdot \cdot (9)$$

The interpolation is similarly performed on the sensing results y2(t) and y3(t).

The Trained AI system in Fig. 37 constituted by the RNN or the like is mounted in the cooking process control unit 121 as a cooking process generation model. The cooking process generation model makes prediction with the sensor data Sd(t) including the interpolated sensing result y1(t), the action data Ad(t), and the process data Rp(t) as inputs and outputs the sensor data Sd^(t+1), the action data Ad^(t+1), and the process data Rp^(t+1) as indicated by the arrows A105 to A107.

After prediction using the sensor data Sd(t) after interpolation by 0-padding is made, interpolation of the sensor data Sd(t) is performed using the sensor data Sd^(t+1) as indicated by the arrow A108. For example, instead of zeros used for interpolation, the value of the sensor data Sd^(t+1) is set as the value of each element. Although the conversion from a small dimension to a large dimension is illustrated as "Interpolation" in Fig. 37, in practice, Interpolation will be performed via the RNN by performing 0-padding.

A user interface (UI) system performs navigation for the user and control of the cooking robot 102 on the basis of the sensor data Sd^(t+1), the action data Ad^(t+1), and the process data Rp^(t+1). The UI system is implemented by the navigation unit 122 and the robot control unit 123.

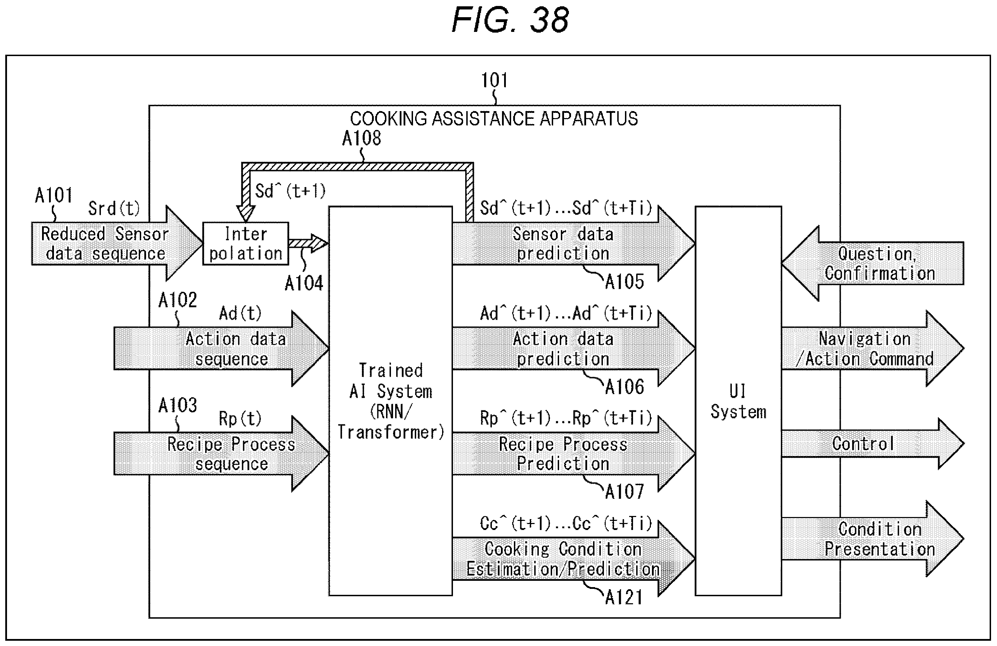

Fig. 38 is a diagram illustrating another flow of data in the cooking assistance system provided with the Reduced sensors. Among constituents illustrated in Fig. 38, the same constituents as the constituents illustrated in Fig. 37 are designated by the same reference signs.

The data flow illustrated in Fig. 38 is the same as the flow of data described with reference to Fig. 37 except that prediction of the chemical reaction data Cc^(t+1) is made in the Trained AI system. The chemical reaction data Cc^(t+1) that is an output of the Trained AI system is used by the UI system for navigation for the user, and the like.

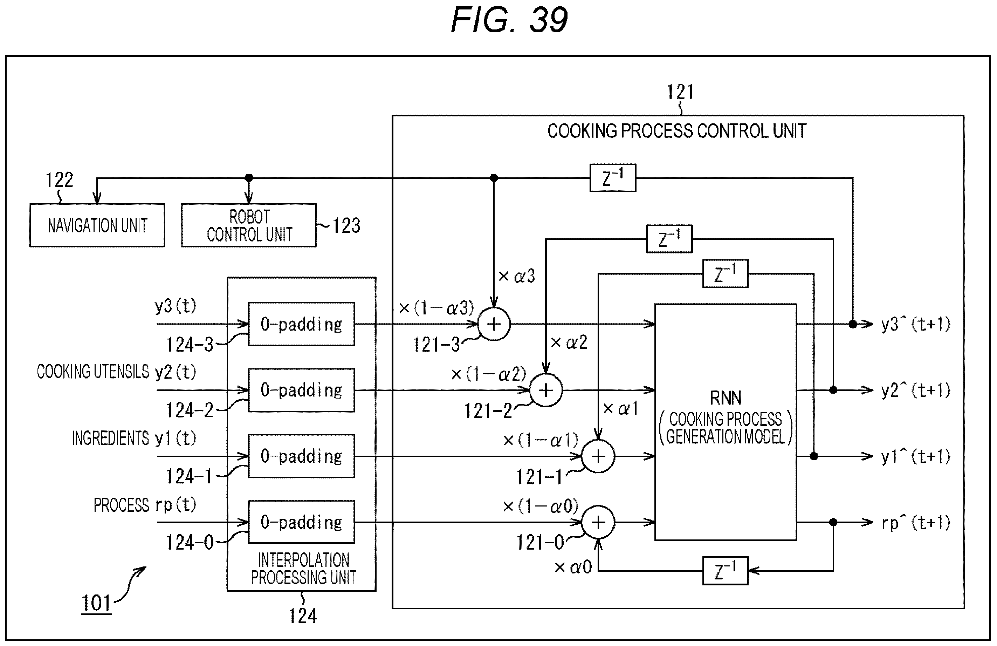

Fig. 39 is a diagram illustrating an example of assistance in the reproduction cooking.

The configuration illustrated in Fig. 39 is different from the configuration illustrated in Fig. 23 in that 0-padding units 124-0 to 124-3 are provided in preceding stages of the addition units 121-0 to 121-3, respectively. The 0-padding units 124-0 to 124-3 constitute an interpolation processing unit 124.

The process data rp(t), the sensing result y1(t) for the state of ingredients, the sensing result y2(t) for the state of the cooking utensils, and the sensing result y3(t) of the state of the user or cooking robot are input to the 0-padding units 124-0 to 124-3, respectively. Interpolation by 0-padding is performed on the process data rp(t), and the sensing results y1(t), y2(t), and y3(t) separately by the 0-padding units 124-0 to 124-3, and data after 0-padding is output. The processing after 0-padding is similar to the processing described with reference to Fig. 23.

<<Example Using Transformer>>

Although a case where the cooking process generation model is constituted by the RNN has been mainly described, the cooking process generation model may be constituted by a Transformer.

Although the model has been originally developed for the purpose of language processing, the principle of the Transformer can also be used for other modalities such as image processing and robot control (Documents 3, 4, and 5).

Document 3 : "Ashish Vaswani, et.al., "Attention is All You Need", Jun., 2017",(https://arxiv.org/abs/1706.03762)
Document 4 : "Alexey Dosxoviskiy, wt. al., "An Image is Worth 16x16 Words", Oct. 2022", (https://arxiv.org/abs/2010.11929)
Document 5 : "Anthony Brohan, et.al., "RT-1:Robotics Transformer for Real-World Control at Scale"," (https://robotics-transformer.github.io/)

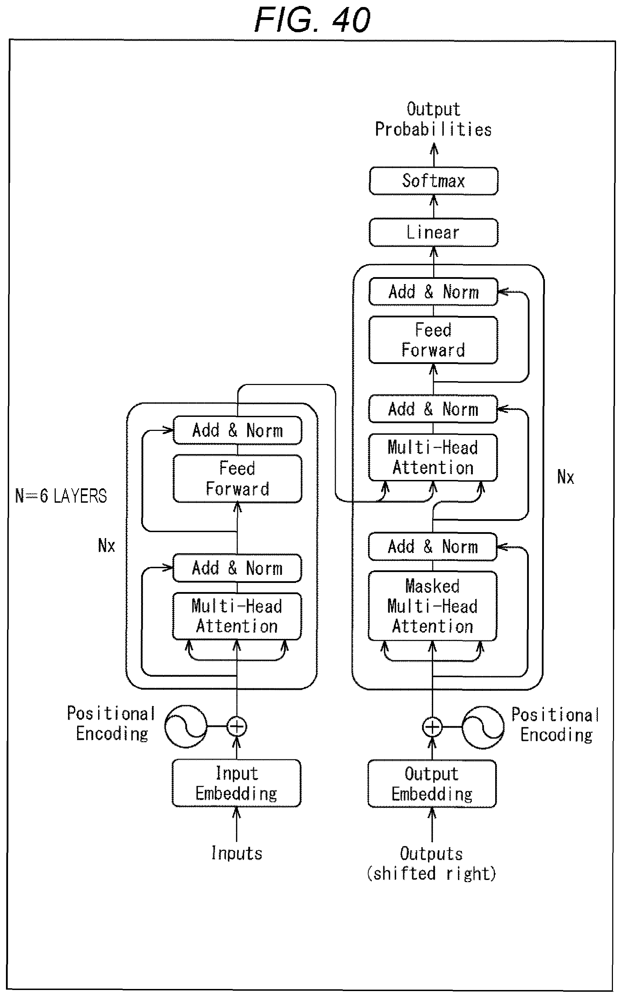

Fig. 40 is a diagram illustrating a basic configuration of the Transformer.

In the Transformer, Attention for verifying which word (vector) is to be emphasized is implemented by a search function using Query, Key, and Value. As an example of using the Transformer for command control for a robot, there is Robotics Transformer 1 (RT-1). According to the RT-1, a time series of control commands for a motor of the robot can be generated with motion commands for the robot and an image time series as inputs.

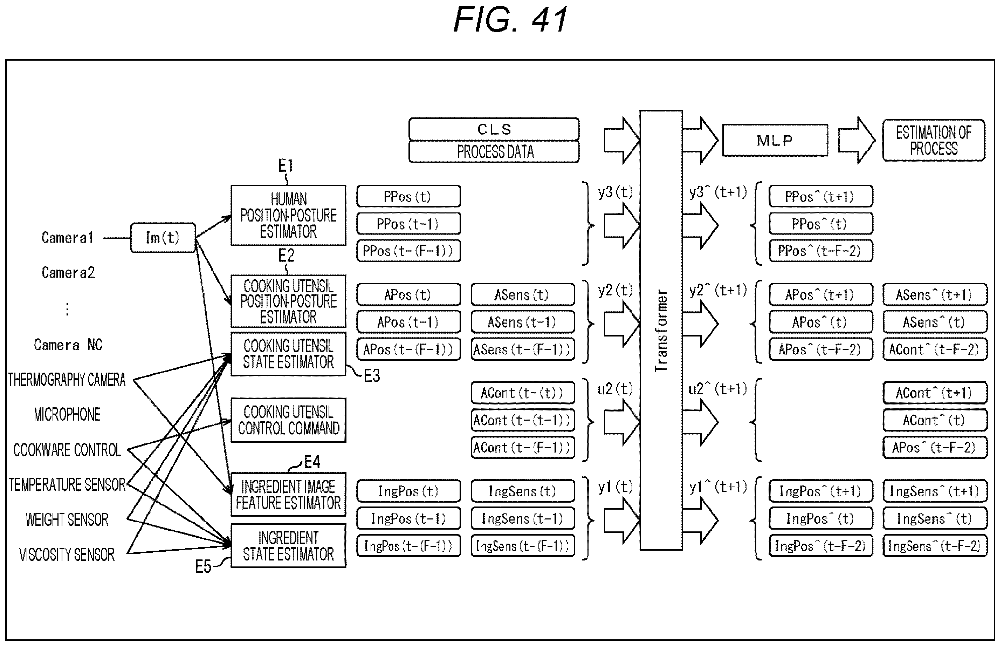

Fig. 41 is a diagram illustrating an example of input and output of the Transformer. Here, input and output at the time of reproduction cooking will be described.

As illustrated in Fig. 41, a human position-posture estimator E1, a cooking utensil position-posture estimator E2, a cooking utensil state estimator E3, an ingredient image feature estimator E4, and an ingredient state estimator E5 are provided in a preceding stage of the Transformer. Each piece of the sensor data and estimated values are time-series data, and an action or a change is estimated by processing the time-series data at a time. It is assumed that a plurality of cameras (cameras 1 to NC) are provided as the cameras constituting the sensor groups 111 and 112.

The human position-posture estimator E1, for example, estimates the posture of the user on the basis of images captured by the cameras. As illustrated in Fig. 41, the Skeleton structure is estimated (posture estimation) instead of directly Embedding the image, and a result of analyzing the action of the user is input to the Transformer as the sensing result y3(t). Note that the posture to be estimated includes information for action estimation.

The cooking utensil position-posture estimator E2, for example, estimates the postures of the cooking utensils on the basis of images captured by the cameras. The postures of the cooking utensils are estimated by object recognition. The estimation result by the cooking utensil position-posture estimator E2 is input to the Transformer as the sensing result y2(t).

The cooking utensil state estimator E3 estimates a state of the cooking utensils on the basis of images captured by the cameras. For example, the surface temperature of the frying pan or the pot is estimated on the basis of the thermal image captured by a thermography camera. In addition, the weight and a change in weight of the cooking utensil are estimated on the basis of the measurement result by the weight sensor installed in the heater. The estimation result by the cooking utensil state estimator E3 is input to the Transformer as the sensing result y2(t).

The ingredient image feature estimator E4 estimates a feature of ingredients appearing in images captured by the cameras. The features such as the posture of the ingredients is estimated by object recognition, and the estimation result is input to the Transformer as the sensing result y1(t).

The ingredient state estimator E5 estimates a state of the ingredients appearing in images captured by the cameras. For example, the ingredient state estimator E5 estimates the surface temperature of the ingredients on the basis of the thermal image captured by the thermography camera. In addition, the ingredient state estimator E5 estimates the temperature inside the ingredients on the basis of the measurement result by a stick-shaped temperature sensor and estimates the weight or a change in weight of the ingredients added to the cooking utensil on the basis of the measurement result by the weight sensor installed in the heater. In addition, the ingredient state estimator E5 quantifies the viscosity of the ingredients on the basis of the measurement result by the viscosity sensor. The ingredient state estimator E5 quantifies a sound emitted from the ingredients being cooked on the basis of the sound collected by the microphone. Besides, the ingredient state estimator E5 also estimates, for example, taste based on a salt content, sugar content, and the like. The estimation result for the state of the ingredients by the ingredient state estimator E5 is input to the Transformer as the sensing result y1(t).

Analysis of the voice of the chef (explanation of work, or the like) and sensing of the state of the environment such as the temperature and humidity are also performed as appropriate. A command indicating the control contents on the cooking utensils is detected and input to the Transformer as a control signal u2(t).

The process data relating to the cooking process is input to the Transformer and used for estimation. The output of the Transformer in response to the input of the process data is output as a process estimation result via the multilayer perceptron (MLP). The learning using the process data is performed by supervised learning.

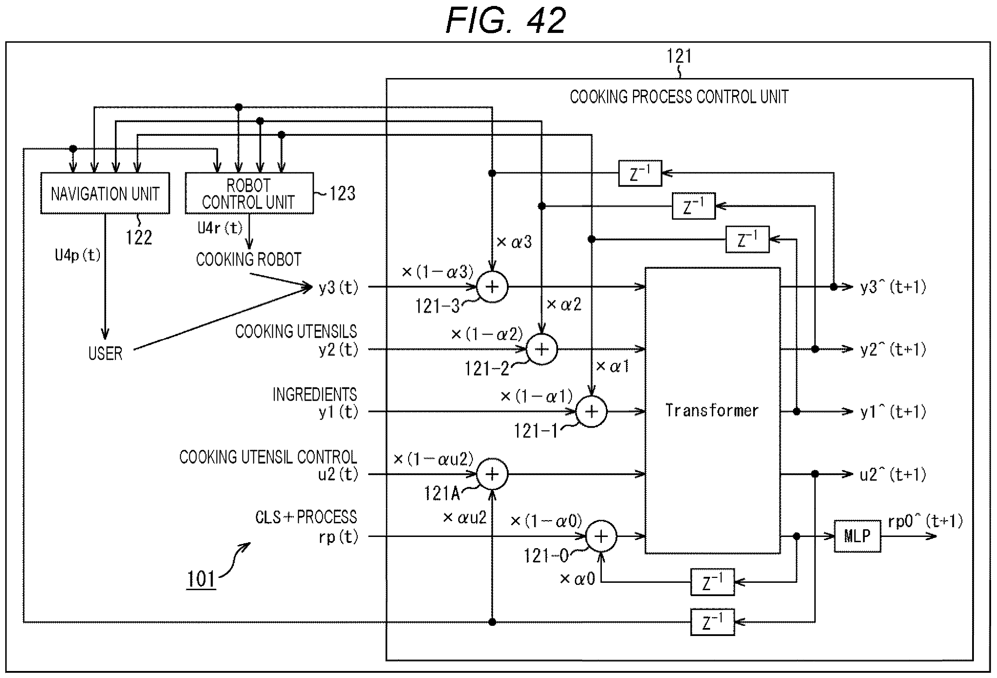

Fig. 42 is a diagram illustrating an example of assistance in the reproduction cooking using the Transformer. The same constituents as the constituents described with reference to Fig. 23 are designated by the same reference signs.

In a preceding stage of the Transformer, an addition unit 121A is provided, apart from the addition units 121-0 to 121-3. The control signal u2(t) is input to the addition unit 121A. The addition unit 121A adds a predicted value u2^(t+1) multiplied by $\alpha u2$ to the control signal u2(t) and inputs the addition result to the Transformer.

The Transformer makes prediction with the information supplied from the addition units 121-0 to 121-3 and the addition unit 121A as inputs and outputs the predicted value rp1^(t+1) of the process data, the prediction value y1^(t+1) of the state of the ingredients, the predicted value y2^(t+1) of the state of the cooking utensils, the predicted value y3^(t+1) of the action of the user or cooking robot, and the predicted value u2^(t+1) of the control signal.

The predicted value u2^(t+1) output from the Transformer is supplied to the navigation unit 122 and used for navigation for the user. In addition, the predicted value u2^(t+1) is supplied to the robot control unit 123 and used to control the cooking robot 102.

As described above, the cooking process generation model constituted by the Transformer can be generated and used for assistance in the reproduction cooking.

<<Others>>

<Configuration Examples>

· Configurations at Recording and Learning Sides

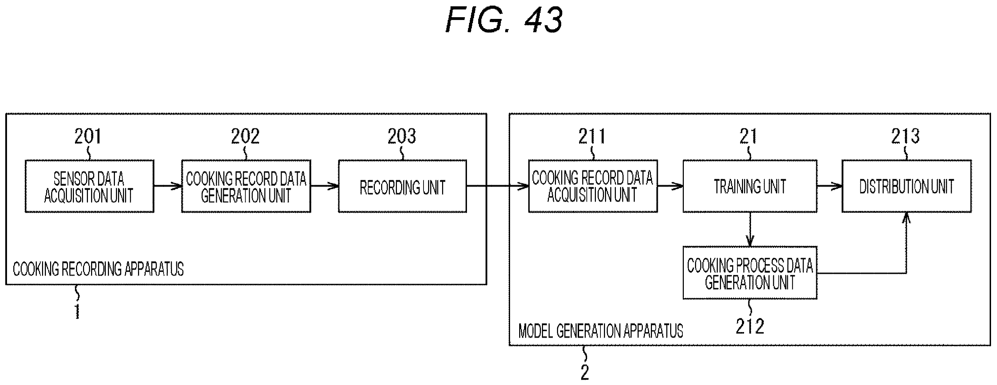

Fig. 43 is a block diagram illustrating a functional configuration example of the cooking recording apparatus 1 and the model generation apparatus 2 that are configurations at the recording and learning sides.

The cooking recording apparatus 1 and the model generation apparatus 2 are each constituted by a computer such as a personal computer (PC). Each functional unit illustrated in Fig. 43 is implemented by a central processing unit (CPU) constituting a computer by executing a predetermined program.

The cooking recording apparatus 1 is constituted by a sensor data acquisition unit 201, a cooking record data generation unit 202, and a recording unit 203.

The sensor data acquisition unit 201 acquires the sensor data measured by each sensor constituting the sensor groups 11 and 12 and outputs the acquired sensor data to the cooking record data generation unit 202.

The cooking record data generation unit 202 acquires the sensor data supplied from the sensor data acquisition unit 201 and the process data input at a predetermined timing such as the start of the recording cooking and generates the cooking record data by synchronizing the respective pieces of data with each other. The cooking record data generated by the cooking record data generation unit 202 is supplied to and recorded in the recording unit 203.

The recording unit 203 records the cooking record data generated by the cooking record data generation unit 202. A large amount of cooking record data recorded in the recording unit 203 is supplied to the model generation apparatus 2 as learning data.

In the processing illustrated in Fig. 13, the processing in steps S1 and S4 is processing performed by the cooking record data generation unit 202. The processing in steps S2 and S3 is processing performed by the sensor data acquisition unit 201.

As illustrated in Fig. 43, the model generation apparatus 2 is constituted by the training unit 21, a cooking record data acquisition unit 211, a cooking process data generation unit 212, and a distribution unit 213.

The cooking record data acquisition unit 211 acquires the cooking record data supplied from the cooking recording apparatus 1 as learning data and outputs the cooking record data to the training unit 21. Data Recorder in Fig. 18 is implemented by the cooking record data acquisition unit 211.

The training unit 21 trains the prediction model such as the RNN or the Transformer on the basis of the cooking record data supplied from the cooking record data acquisition unit 211 as described above. The training unit 21 treats the prediction model completed by training as a cooking process generation model and outputs the model parameters of the cooking process generation model to the distribution unit 213. The information on the cooking process generation model is also supplied to the cooking process data generation unit 212.

The cooking process data generation unit 212 generates the cooking process data (Fig. 16) at a predetermined timing such as the start of the reproduction cooking. For example, the cooking process data generation unit 212 reads and acquires the process data according to a condition set at the reproducing side from a database (not illustrated). In addition, the cooking process data generation unit 212 generates an initial value of each of the action data Ad(t) and the sensor data Sd(t), using the cooking process generation model generated by the training unit 21. The cooking process data generation unit 212 generates the cooking process data including the process data, the initial value of the action data Ad(t), and the initial value of the sensor data Sd(t) and outputs the generated cooking process data to the distribution unit 213.

The distribution unit 213 distributes the model parameters of the cooking process generation model generated by the training unit 21 via the distribution system 33. In addition, the distribution unit 213 distributes the cooking process data generated by cooking process data generation unit 212. The data distributed by the distribution unit 213 is received by the cooking process control unit 121 of the cooking assistance apparatus 101.

· Configuration of Cooking Robot 102

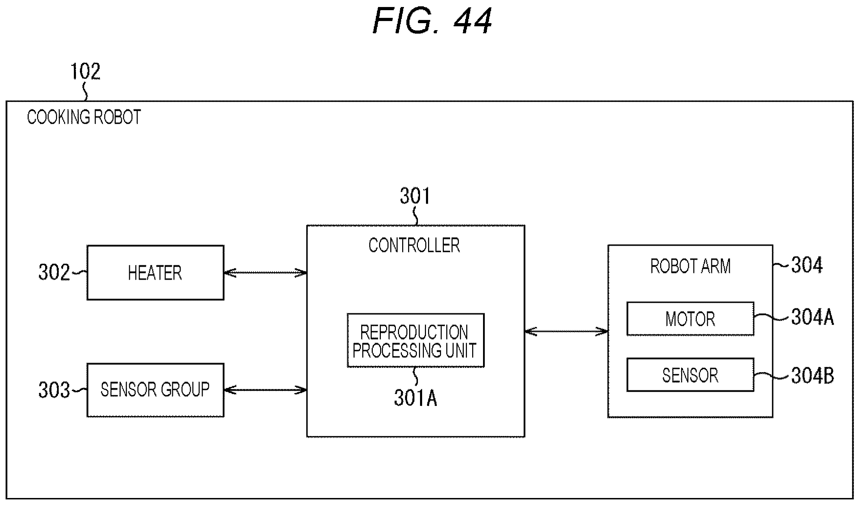

Fig. 44 is a block diagram illustrating a configuration example of the cooking robot 102.

The cooking robot 102 is configured by connecting a heater 302, a sensor group 303, and a robot arm 304 to a controller 301.

The controller 301 is constituted by a computer including a CPU, a read only memory (ROM), a random access memory (RAM), a flash memory, and the like. The controller 301 executes a predetermined program with the CPU to control the overall action of the cooking robot 102. In the controller 301, a reproduction processing unit 301A is implemented by executing a predetermined program.

For example, the reproduction processing unit 301A executes a control command supplied from the robot control unit 123 to drive the robot arm 304. The work assigned to the cooking robot 102 is performed by driving the robot arm 304. Various sorts of data such as the sensor data measured by sensors constituting the sensor group 303 are used to control the robot arm 304.

The heater 302 is constituted by an IH cooking stove or the like and heats a cooking utensil such as a pot. For example, the heater 302 is provided at a predetermined position on a top plate of a housing of the cooking robot 102. Besides apart the heater, various sorts of cooking utensils such as a microwave oven may be provided in the cooking robot 102.

The sensor group 303 is constituted by various sorts of sensors such as a camera, a distance sensor, a touch sensor, and a microphone. The sensor data measured by the sensors constituting the sensor group 303 is used to control the cooking robot 102. The sensors constituting the sensor groups 111 and 112 may be provided in the cooking robot 102 as the sensors constituting the sensor group 303. Conversely, the sensors constituting the sensor group 303 may be used as the sensors constituting the sensor groups 111 and 112.

For example, the camera constituting the sensor group 303 captures an image of circumstances around the cooking robot 102 and outputs the image obtained by the capturing to the controller 301. The camera is provided at various positions such as the front of the housing of the cooking robot 102 and a tip of the robot arm 304.

The robot arm 304 is provided with a motor 304A and a sensor 304B. For example, a plurality of robot arms 304 is provided. A detachable end effector is attached to the tip of the robot arm 304, for example. The end effector is replaced according to the work.

The motor 304A is provided at each joint portion of the robot arm 304. The motor 304A performs a rotational action around an axis under the control of the controller 301. An encoder that quantifies the amount of rotation of the motor 304A, a driver that adaptively controls rotation of the motor 304A on the basis of a quantification result by the encoder, and the like are also provided at each joint portion.

The sensor 304B is constituted by, for example, a gyro sensor, an acceleration sensor, a touch sensor, and the like. The sensor 304B quantifies an angular speed, an acceleration, and the like of each joint portion during an action of the robot arm 304 and outputs information indicating quantification results to the controller 301. Control of the robot arm 304 is also performed on the basis of a measurement result obtained by the sensor 304B.

· Configuration of Computer

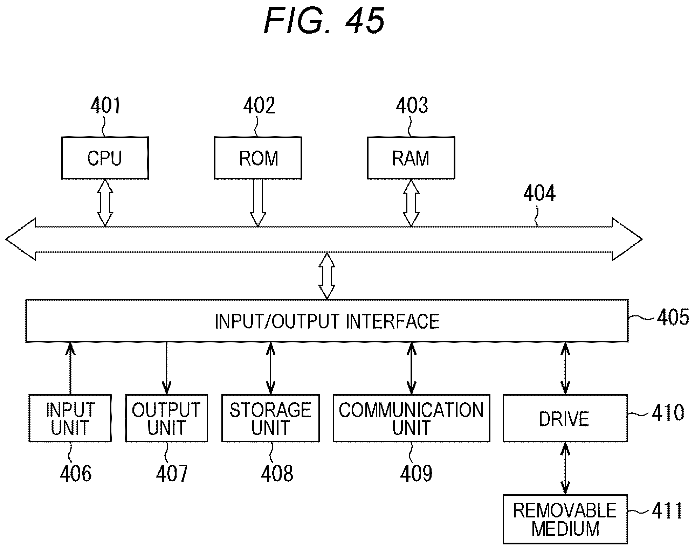

Fig. 45 is a block diagram illustrating a hardware configuration example of a computer. Each apparatus such as the cooking recording apparatus 1, the model generation apparatus 2, and the cooking assistance apparatus 101 is constituted by a computer having the configuration illustrated in Fig. 45.

A central processing unit (CPU) 401, a read only memory (ROM) 402, and a random access memory (RAM) 403 are interconnected by a bus 404.

An input/output interface 405 is further connected to the bus 404. An input unit 406 including a keyboard, a mouse, and the like, and an output unit 407 including a display, a speaker, and the like are connected to the input/output interface 405. In addition, a storage unit 408 including a hard disk, a nonvolatile memory, and the like, a communication unit 409 including a network interface and the like, and a drive 410 that drives a removable medium 411 are connected to the input/output interface 405.

· Configuration of Distribution System 33 (Fig. 12)

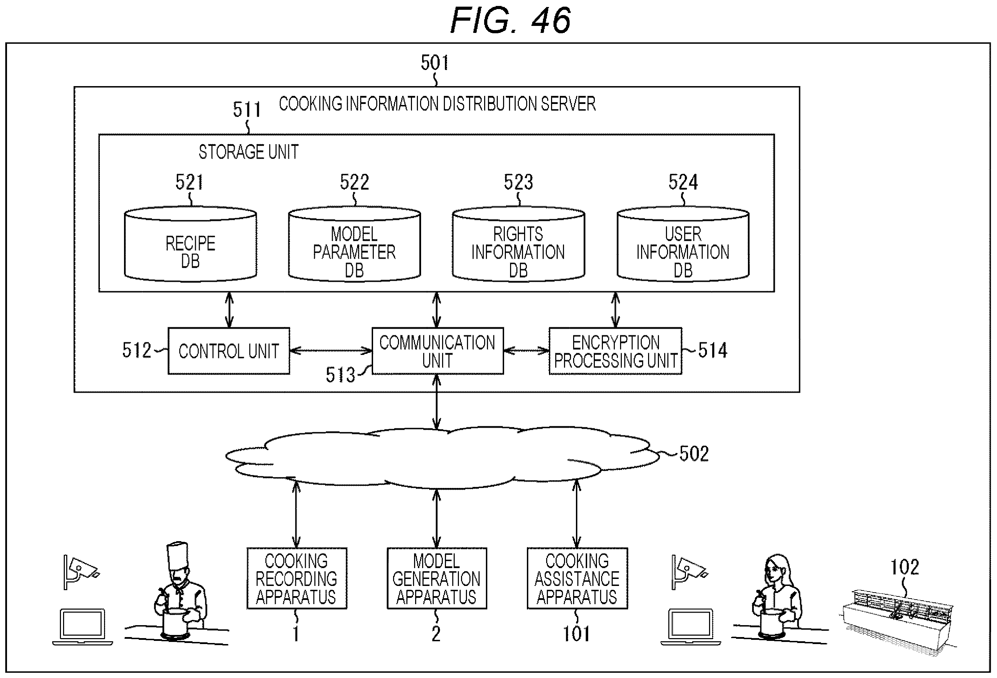

Fig. 46 is a block diagram illustrating a configuration example of the distribution system 33.

As illustrated in Fig. 46, the distribution system 33 includes a cooking information distribution server 501 that is a server connected to a network 502 such as the Internet. The cooking information distribution server 501 is also constituted by a computer as described with reference to Fig. 45. External apparatuses such as the cooking recording apparatus 1, the model generation apparatus 2, and the cooking assistance apparatus 101 are connected to the cooking information distribution server 501 via the network 502.

In the cooking information distribution server 501, a storage unit 511, a control unit 512, a communication unit 513, and an encryption processing unit 514 are implemented by executing a predetermined program. In the storage unit 511, a plurality of DBs including a recipe DB 521, a model parameter DB 522, a rights information DB 523, and a user information DB 524 are constructed. Each DB may be constructed in different servers.

The recipe DB 521 is a DB of recipes. Information on various recipes such as an existing recipe and a recipe newly created by a chef is stored in the recipe DB 521.

The model parameter DB 522 stores model parameters of the cooking process generation model generated by the model generation apparatus 2. The model parameters transmitted from the model generation apparatus 2 and received by the communication unit 513 are stored in the model parameter DB 522. A plurality of cooking process generation models according to conditions of the reproduction cooking, such as the type of dish, the number of dishes, and the type of ingredients, may be generated, and the model parameters of the respective cooking process generation models may be stored in the model parameter DB 522.

The rights information DB 523 stores rights information that is information regarding various rights related to the cooking process generation model, such as owner information and use condition information. The cooking process generation model and the rights information are managed in association with each other.

The user information DB 524 stores user information that is information regarding a cooking environment at the reproducing side. The user information includes information regarding entities that perform the reproduction cooking, such as the number of users that perform the reproduction cooking, the presence or absence of the cooking robot 102, and a function that the cooking robot 102 has. The user information DB 524 may be prepared in the cooking assistance apparatus 101 or may be prepared in the cooking information distribution server 501.

The control unit 512 controls the entire function of cooking information distribution server 501, such as the Copyright Control Management function, the ledger management function using the Block Chain network, and the Encryption function. The control unit 512 controls the communication unit 513 to communicate with an external apparatus via the network 502.

For example, in a case where information on conditions of the reproduction cooking set by the cooking process control unit 121 of the cooking assistance apparatus 101 is transmitted, the control unit 512 refers to the recipe DB 521 to search for a recipe for a dish to be reproduced. The control unit 512 reads and acquires the model parameters of the cooking process generation model corresponding to the recipe retrieved in the search, from model parameter DB 522, and transmits (distributes) the acquired model parameters to the cooking process control unit 121. The rights information stored in the rights information DB 523 is referred to, and the model parameters are encrypted, as necessary, for example.

The communication unit 513 communicates with an external apparatus via the network 502. The communication unit 513 transmits information supplied from each unit of the cooking information distribution server 501 to an external apparatus. In addition, the communication unit 513 receives information transmitted from an external apparatus and outputs the received information to each unit of the cooking information distribution server 501.

The encryption processing unit 514 performs encryption processing such as encryption of model parameters. The encrypted model parameters are supplied to the communication unit 513 and transmitted to the cooking assistance apparatus 101.

In this manner, the model parameters of the cooking process generation model may not be directly distributed by the model generation apparatus 2, but may be distributed by the cooking information distribution server 501. Not only the model parameters but also the cooking process data may be distributed by the cooking information distribution server 501. Some functions such as the ledger management function using the Block Chain network may be implemented in a server different from the cooking information distribution server 501.

<Modifications>

Although it has been assumed that one cooking recording apparatus 1 and one cooking assistance apparatus are provided in the cooking reproduction system, in practice, a plurality of cooking recording apparatuses 1 and a plurality of cooking assistance apparatuses 101 are provided. The same cooking process generation model may be provided to all the cooking assistance apparatuses 101, or a cooking process generation model customized according to the environment at the reproducing side in which the customized cooking process generation model is to be installed may be provided to the cooking assistance apparatus 101.

Although it has been assumed that the cooking process control unit 121 that predicts the process of the reproduction cooking using the cooking process generation model is provided in the cooking assistance apparatus 101, the function of the cooking process control unit 121 may be provided in a server on a network. In this case, navigation for the user and control of the action of the cooking robot 102 are performed by a server equipped with the function of the cooking process control unit 121 via a network. In this manner, the configuration of the cooking reproduction system can be modified in any way.

Although a case where there is one chef has been mainly described, there may be a plurality of chefs. Similarly, for the reproducing side, there may be a plurality of users, or a plurality of cooking robots may be provided. Although it has been assumed that the entity that performs the recording cooking is a chef, the cooking robot may perform the recording cooking.

Although it has been assumed that the prediction of the sensor data, the action data, the process data, and the chemical reaction is performed by one cooking process generation model that is a prediction model, the sensor data, the action data, the process data, and the chemical reaction may be predicted by prediction models different from each other.

· About Program

The series of processing steps described above can be executed by hardware or can also be executed by software. In a case where the series of processing steps is executed by software, a program constituting the software is installed to a computer incorporated in dedicated hardware, a general-purpose personal computer, or the like.

The program to be installed is provided by being recorded in the removable medium 411 illustrated in Fig. 45, including an optical disc (compact disc-read only memory (CD-ROM), a digital versatile disc (DVD), and the like), a semiconductor memory, or the like. In addition, the program may be provided via a wired or wireless transmission medium such as a local area network, the Internet, or digital broadcasting. The program can be preinstalled in the ROM 402 or the storage unit 408.

The program executed by the computer may be a program in which the processing is performed in time series in the order described in the present description, or may be a program in which the processing is performed in parallel or at a necessary timing such as when a call is made.

In the present description, a system means a set of a plurality of constituent elements (apparatuses, modules (parts), and the like), and it does not matter whether or not all the constituent elements are placed in the same housing. Therefore, a plurality of apparatuses housed in separate housings and connected to each other via a network and one apparatus in which a plurality of modules is housed in one housing are both systems.

The effects described in the present description are merely examples and are not limited, and other effects may also be provided.

Embodiments of the present technology are not limited to the embodiments described above, and various modifications can be made without departing from the scope of the present technology.

For example, the present technology may be embodied in cloud computing in which one function is shared and processed by a plurality of apparatuses in cooperation via a network.

In addition, each step described in the flowcharts described above can be executed by one apparatus or can be shared and executed by a plurality of apparatuses.

Moreover, in a case where a plurality of pieces of processing is included in one step, the plurality of pieces of processing included in the one step can be executed by one apparatus or executed by a plurality of apparatuses in a shared manner.

· Examples of Combinations of Configurations

The present technology can also be configured as follows.

(1) An information processing apparatus including
a control unit that generates process data configured to reproduce cooking according to a cooking condition, using a cooking process generation model trained on the basis of the process data of each process of the cooking, action data of a person who is cooking, and sensor data regarding a state of an ingredient.
(2) The information processing apparatus according to (1) above, in which

the process data includes information including information regarding time of each process and information indicating a content of work including information regarding the ingredient used in each process, and
the control unit predicts a process switching timing, using the cooking process generation model.

(3) The information processing apparatus according to (1) or (2) above, in which
the control unit generates the process data configured to reproduce the cooking, using the cooking process generation model further trained on the basis of information on a cooking utensil used for the cooking.
(4) The information processing apparatus according to any one of (1) to (3) above, in which
the cooking condition includes at least one piece of information regarding a type of the ingredient, a weight of the ingredient, a number of dishes to be cooked, a sensor prepared in a cooking environment, a facility in which the cooking is performed, or a person who performs the cooking.
(5) The information processing apparatus according to (2) above, in which
the process data includes information further including information indicating a chemical reaction occurring in the ingredient in each process.
(6) The information processing apparatus according to (4) above, in which
the control unit sets the work of each process as work performed by the person, work performed by a cooking robot, or work performed by the person and the cooking robot in cooperation on the basis of the cooking condition.
(7) The information processing apparatus according to any one of (1) to (6) above, further including
a navigation unit that presents information indicating the content of next work to the person who reproduces the cooking, on the basis of the generated process data.
(8) The information processing apparatus according to (7) above, in which
the navigation unit presents, as the information indicating the content of the next work, information configured to bring the state of the ingredient observed according to the work by the person closer to the state of the ingredient observed at the time of the cooking for the purpose of acquiring data used to train the cooking process generation model.
(9) The information processing apparatus according to any one of (1) to (8) above, further including
a robot control unit that outputs a control command according to the content of the next work to the cooking robot that reproduces the cooking, on the basis of the generated process data.
(10) The information processing apparatus according to (9) above, in which
the robot control unit outputs the control command configured to cause the cooking robot to execute an action of bringing the state of the ingredient observed according to the work by the cooking robot closer to the state of the ingredient observed at the time of the cooking for the purpose of acquiring data used to train the cooking process generation model.
(11) An information processing method including

generating, by an information processing apparatus,
process data configured to reproduce cooking according to a cooking condition, using a cooking process generation model trained on the basis of the process data of each process of the cooking, action data of a person who is cooking, and sensor data regarding a state of an ingredient.

(12) A program

for causing a computer to execute processing including
generating process data configured to reproduce cooking according to a cooking condition, using a cooking process generation model trained on the basis of the process data of each process of the cooking, action data of a person who is cooking, and sensor data regarding a state of an ingredient.

(13) An information processing apparatus including
a training unit that trains a cooking process generation model that generates process data configured to reproduce

**EP 4 660 902 A1**

cooking according to a cooking condition on the basis of the process data regarding each process of the cooking, action data of a person who is cooking, and sensor data regarding a state of an ingredient.

(14) The information processing apparatus according to (13) above, in which

the process data includes information including information regarding time of each process and information indicating a content of work including information regarding the ingredient used in each process.

(15) The information processing apparatus according to (13) or (14) above, in which

the process data includes information further including information indicating a chemical reaction occurring in the ingredient in each process.

(16) The information processing apparatus according to any one of (13) to (15) above, in which

the training unit trains the cooking process generation model that outputs respective predicted values of the process data, the action data, and the sensor data at a next time, with the process data, the action data, and the sensor data at a certain time as inputs, using the process data, the action data, and the sensor data used as inputs at the next time, as teaching data.

(17) The information processing apparatus according to any one of (13) to (16) above, in which

the training unit trains the cooking process generation model on the basis of data in which the process data, the action data, and the sensor data are synchronized with each other.

(18) An information processing method including

> training, by an information processing apparatus,
> a cooking process generation model that generates process data configured to reproduce cooking according to a cooking condition on the basis of the process data regarding each process of the cooking, action data of a person who is cooking, and sensor data regarding a state of an ingredient.

(19) A program

> for causing a computer to execute processing including
> training a cooking process generation model that generates process data configured to reproduce cooking according to a cooking condition on the basis of the process data regarding each process of cooking, action data of a person who is cooking, and sensor data regarding a state of an ingredient.

(20) A distribution system including:

> a storage unit that stores a model parameter of a cooking process generation model that has been trained on the basis of process data regarding each process of cooking, action data of a person who is cooking, and sensor data regarding a state of an ingredient, and is configured to generate the process data configured to reproduce the cooking according to a cooking condition; and
> a communication unit that distributes the model parameter to an apparatus that assists in reproduction of the cooking on the basis of the generated process data.

REFERENCE SIGNS LIST

| | |
|---|---|
| 1 | Cooking recording apparatus |
| 2 | Model generation apparatus |
| 11 | Sensor group |
| 12 | Sensor group |
| 21 | Training unit |
| 31 | Analysis apparatus |
| 32 | Cooking knowledge DB |
| 33 | Distribution system |
| 34 | Feedback apparatus |
| 101 | Cooking assistance apparatus |
| 111 | Sensor group |
| 112 | Sensor group |
| 121 | Cooking process control unit |
| 122 | Navigation unit |
| 123 | Robot control unit |

| 201 | Sensor data acquisition unit |
| 202 | Cooking record data generation unit |
| 203 | Recording unit |
| 211 | Cooking record data acquisition unit |
| 212 | Cooking process data generation unit |
| 213 | Distribution unit |

**Claims**

1. An information processing apparatus comprising
a control unit that generates process data configured to reproduce cooking according to a cooking condition, using a cooking process generation model trained on a basis of the process data of each process of the cooking, action data of a person who is cooking, and sensor data regarding a state of an ingredient.

2. The information processing apparatus according to claim 1, wherein

the process data includes information including information regarding time of each process and information indicating a content of work including information regarding the ingredient used in each process, and
the control unit predicts a process switching timing, using the cooking process generation model.

3. The information processing apparatus according to claim 1, wherein
the control unit generates the process data configured to reproduce the cooking, using the cooking process generation model further trained on a basis of information on a cooking utensil used for the cooking.

4. The information processing apparatus according to claim 1, wherein
the cooking condition includes at least one piece of information regarding a type of the ingredient, a weight of the ingredient, a number of dishes to be cooked, a sensor prepared in a cooking environment, a facility in which the cooking is performed, or a person who performs the cooking.

5. The information processing apparatus according to claim 2, wherein
the process data includes information further including information indicating a chemical reaction occurring in the ingredient in each process.

6. The information processing apparatus according to claim 4, wherein
the control unit sets the work of each process as work performed by the person, work performed by a cooking robot, or work performed by the person and the cooking robot in cooperation on a basis of the cooking condition.

7. The information processing apparatus according to claim 1, further comprising
a navigation unit that presents information indicating the content of next work to the person who reproduces the cooking, on a basis of the generated process data.

8. The information processing apparatus according to claim 7, wherein
the navigation unit presents, as the information indicating the content of the next work, information configured to bring the state of the ingredient observed according to the work by the person closer to the state of the ingredient observed at a time of the cooking for a purpose of acquiring data used to train the cooking process generation model.

9. The information processing apparatus according to claim 1, further comprising
a robot control unit that outputs a control command according to the content of the next work to the cooking robot that reproduces the cooking, on a basis of the generated process data.

10. The information processing apparatus according to claim 9, wherein
the robot control unit outputs the control command configured to cause the cooking robot to execute an action of bringing the state of the ingredient observed according to the work by the cooking robot closer to the state of the ingredient observed at a time of the cooking for a purpose of acquiring data used to train the cooking process generation model.

11. An information processing method comprising

generating, by an information processing apparatus,

process data configured to reproduce cooking according to a cooking condition, using a cooking process generation model trained on a basis of the process data of each process of the cooking, action data of a person who is cooking, and sensor data regarding a state of an ingredient.

12. A program

for causing a computer to execute processing comprising

generating process data configured to reproduce cooking according to a cooking condition, using a cooking process generation model trained on a basis of the process data of each process of the cooking, action data of a person who is cooking, and sensor data regarding a state of an ingredient.

13. An information processing apparatus comprising

a training unit that trains a cooking process generation model that generates process data configured to reproduce cooking according to a cooking condition on a basis of the process data regarding each process of the cooking, action data of a person who is cooking, and sensor data regarding a state of an ingredient.

14. The information processing apparatus according to claim 13, wherein

the process data includes information including information regarding time of each process and information indicating a content of work including information regarding the ingredient used in each process.

15. The information processing apparatus according to claim 14, wherein

the process data includes information further including information indicating a chemical reaction occurring in the ingredient in each process.

16. The information processing apparatus according to claim 13, wherein

the training unit trains the cooking process generation model that outputs respective predicted values of the process data, the action data, and the sensor data at a next time, with the process data, the action data, and the sensor data at a certain time as inputs, using the process data, the action data, and the sensor data used as inputs at the next time, as teaching data.

17. The information processing apparatus according to claim 13, wherein

the training unit trains the cooking process generation model on a basis of data in which the process data, the action data, and the sensor data are synchronized with each other.

18. An information processing method comprising

training, by an information processing apparatus,

a cooking process generation model that generates process data configured to reproduce cooking according to a cooking condition on a basis of the process data regarding each process of the cooking, action data of a person who is cooking, and sensor data regarding a state of an ingredient.

19. A program

for causing a computer to execute processing comprising

training a cooking process generation model that generates process data configured to reproduce cooking according to a cooking condition on a basis of the process data regarding each process of cooking, action data of a person who is cooking, and sensor data regarding a state of an ingredient.

20. A distribution system comprising:

a storage unit that stores a model parameter of a cooking process generation model that has been trained on a basis of process data regarding each process of cooking, action data of a person who is cooking, and sensor data regarding a state of an ingredient, and is configured to generate the process data configured to reproduce the cooking according to a cooking condition; and

a communication unit that distributes the model parameter to an apparatus that assists in reproduction of the cooking on a basis of the generated process data.

**Amended claims under Art. 19.1 PCT**

1. (Amended) An information processing apparatus comprising
a control unit that generates process data for use in reproduction that reproduces cooking according to a cooking condition, using a cooking process generation model trained on a basis of process data of each process of the cooking, action data of a person who is cooking, and sensor data regarding a state of an ingredient.

2. The information processing apparatus according to claim 1, wherein

the process data is information including information regarding time of each process and information indicating a content of work including information regarding the ingredient used in each process, and
the control unit predicts a switching timing of a process, using the cooking process generation model.

3. (Amended) The information processing apparatus according to claim 1, wherein
the control unit generates the process data for use in reproduction, using the cooking process generation model further trained on a basis of information on a cooking utensil used for the cooking.

4. (Amended) The information processing apparatus according to claim 1, wherein
the cooking condition includes at least any one piece of information regarding a type of the ingredient, a weight of the ingredient, a number of dishes to be cooked, a sensor prepared in a cooking environment, a facility in which the cooking is performed, and the person who performs the cooking.

5. The information processing apparatus according to claim 2, wherein
the process data is information further including information indicating a chemical reaction occurring in the ingredient in each process.

6. The information processing apparatus according to claim 4, wherein
the control unit sets the work of each process as work performed by the person, work performed by a cooking robot, or work performed by the person and the cooking robot together on a basis of the cooking condition.

7. (Amended) The information processing apparatus according to claim 1, further comprising
a navigation unit that presents information indicating the content of next work to a person who reproduces the cooking, on a basis of the generated process data for use in reproduction.

8. (Amended) The information processing apparatus according to claim 7, wherein
the navigation unit presents, as the information indicating the content of the next work, information used to bring the state of the ingredient observed according to the work by the person who reproduces the cooking closer to the state of the ingredient observed at a time of the cooking for a purpose of acquiring data used to train the cooking process generation model.

9. (Amended) The information processing apparatus according to claim 1, further comprising
a robot control unit that outputs a control command according to the content of the next work to the cooking robot that reproduces the cooking, on a basis of the generated process data for use in reproduction.

10. The information processing apparatus according to claim 9, wherein
the robot control unit outputs the control command used to execute an action of bringing the state of the ingredient observed according to the work by the cooking robot closer to the state of the ingredient observed at a time of the cooking for a purpose of acquiring data used to train the cooking process generation model.

11. (Amended) An information processing method comprising

generating, by an information processing apparatus,
process data for use in reproduction that reproduces cooking according to a cooking condition, using a cooking process generation model trained on a basis of process data of each process of the cooking, action data of a person who is cooking, and sensor data regarding a state of an ingredient.

12. (Amended) A program

for causing a computer to execute processing comprising

generating process data for use in reproduction that reproduces cooking according to a cooking condition, using a cooking process generation model trained on a basis of process data of each process of the cooking, action data of a person who is cooking, and sensor data regarding a state of an ingredient.

**13.** (Amended) An information processing apparatus comprising

a training unit that trains a cooking process generation model that generates process data for use in reproduction that reproduces cooking according to a cooking condition on a basis of process data regarding each process of the cooking, action data of a person who is cooking, and sensor data regarding a state of an ingredient.

**14.** The information processing apparatus according to claim 13, wherein

the process data is information including information regarding time of each process and information indicating a content of work including information regarding the ingredient used in each process.

**15.** The information processing apparatus according to claim 14, wherein

the process data is information further including information indicating a chemical reaction occurring in the ingredient in each process.

**16.** The information processing apparatus according to claim 13, wherein

the training unit trains the cooking process generation model that outputs respective predicted values of the process data, the action data, and the sensor data at a next time, with the process data, the action data, and the sensor data at a certain time as inputs, using the process data, the action data, and the sensor data used as inputs at the next time, as teaching data.

**17.** The information processing apparatus according to claim 13, wherein

the training unit trains the cooking process generation model on a basis of data in which the process data, the action data, and the sensor data are synchronized with each other.

**18.** (Amended) An information processing method comprising

training, by an information processing apparatus,

a cooking process generation model that generates process data for use in reproduction that reproduces cooking according to a cooking condition on a basis of process data regarding each process of the cooking, action data of a person who is cooking, and sensor data regarding a state of an ingredient.

**19.** (Amended) A program

for causing a computer to execute processing comprising

training a cooking process generation model that generates process data for use in reproduction that reproduces cooking according to a cooking condition on a basis of process data regarding each process of cooking, action data of a person who is cooking, and sensor data regarding a state of an ingredient.

**20.** (Amended) A distribution system comprising:

a storage unit that stores a model parameter of a cooking process generation model that has been trained on a basis of process data regarding each process of cooking, action data of a person who is cooking, and sensor data regarding a state of an ingredient, and generates process data for use in reproduction that reproduces the cooking according to a cooking condition; and

a communication unit that distributes the model parameter to an apparatus that assists in reproduction of the cooking on a basis of the generated process data for use in reproduction.

## FIG. 1

〈CHEF (PROFESSIONAL COOK)〉

〈ORDINARY COOK〉

PROCESS #1 → PROCESS #2 → ⋮ → PROCESS #N

DISH COMPLETED

PROCESS #1 → PROCESS #2 → ⋮ → PROCESS #N

DISH REPRODUCED

EP 4 660 902 A1

# FIG. 2

## ① RECIPE

**NICE-STYLE SALAD**

| INGREDIENTS (FOR THREE TO FOUR PEOPLE) | |
|---|---|
| LETTUCE | HALF |
| ONION | ONE |
| AVOCADO | ONE |
| CUCUMBER | ONE |
| PAPRIKA (RED, YELLOW) | ONE QUARTER EACH |
| GREEN PEPPER | ONE |
| CARROT | 50 g |
| LEMON | HALF |
| TOMATO | HALF |

**Steps**

1 CUT TOMATO, AND TEAR LETTUCE INTO BITE-SIZE PIECES WITH HANDS. OPEN CANNED TUNA.

2 SLICE CUCUMBER, AND CUT ONION INTO ROUND SLICES. CUT BOILED EGGS INTO BITE-SIZE PIECES.

3 SERVE ALL INGREDIENTS ON PLATE, PUT YOUR CHOICE OF DRESSING ON SALAD.

## ② SENSE AND RECORD COOKING OF CHEF

PROCESS 1 START HEATING → PROCESS 2 ADD INGREDIENT SET A → PROCESS 3 MIX → PROCESS 4 STOP MIXING → PROCESS 5 MODIFY THERMAL POWER → PROCESS 6 COVER → ... → PROCESS X COMPLETION

◀----- TIMING

## ③ COOKING RECORD DATA

| Camera (Color/Texture/Motion/Bubble/···) |
| Sound |
| Weight |
| Temperature |
| Time |
| Viscosity |
| Hardness |
| Taste (Sugar/Saltness/acidity/···) |
| Aroma (Smell) |

- TEMPERATURE, ETC. OF COOKING UTENSILS
- TEMPERATURE, ETC. OF INGREDIENTS
- ACTION OF CHEF
- UTTERANCE OF CHEF
  etc

EP 4 660 902 A1

# FIG. 3

③ COOKING RECORD DATA

④ MACHINE LEARNING

⑤ COMPLETION OF
COOKING ASSISTANCE SYSTEM

| Camera (Color/Texture/ Motion/Bubble/···) |
| Sound |
| Weight |
| Temperature |
| Time |
| Viscosity |
| Hardness |
| Taste (Sugar/Saltness/ acidity/···) |
| Aroma(Smell) |

- TEMPERATURE, ETC. OF COOKING UTENSILS
- TEMPERATURE, ETC. OF INGREDIENTS
- ACTION OF CHEF
- UTTERANCE OF CHEF
  etc

LEARNING CONTENTS
- SENSOR DATA
- ACTION OF CHEF
- UTTERANCE OF CHEF
- OMITTABLE SENSORS
- LINKAGE BETWEEN CHEMICAL REACTIONS AND SENSOR DATA
  etc

PROCESS1 START HEATING  PROCESS2 ADD INGREDIENT SET A  PROCESS3 MIX  PROCESS4 STOP MIXING  PROCESS5 MODIFY THERMAL POWER  PROCESS6 COVER ····· TIMING  ···  PROCESS X COMPLETION

EP 4 660 902 A1

# FIG. 4

CHEF

DETERMINE PROCESS SWITCHING POINT FROM STATE OF INGREDIENTS WITH IMPLICIT KNOWLEDGE

| PROCESS 1 START HEATING | PROCESS 2 ADD INGREDIENT SET A | PROCESS 3 MIX | PROCESS 4 STOP MIXING | PROCESS 5 MODIFY THERMAL POWER | PROCESS 6 COVER | · · · · | PROCESS X COMPLETION |

DETERMINATION BASED ON IMPLICIT KNOWLEDGE

(EXAMPLE)

Visual · Sound · Elasticity · Smell · Feel · Knowledge

PROCESS DATA

| PROCESS 1 START HEATING | PROCESS 2 ADD INGREDIENT SET A | PROCESS 3 MIX | PROCESS 4 STOP MIXING | PROCESS 5 MODIFY THERMAL POWER | PROCESS 6 COVER | · · · · | PROCESS X COMPLETION |

ACTION AND UTTERANCE OF CHEF

COOKING RECORD DATA

SENSOR DATA (TIME-SERIES DATA)

# FIG. 5

⟨ONLY PERSON⟩

A

⟨ONLY COOKING ROBOT⟩

B

⟨PERSON +COOKING ROBOT⟩

C

# FIG. 6

| PROCESS ID | WORK CONTENTS |
|---|---|
| PROCESS 1 | PUT ⟨SALAD OIL⟩ AND ⟨WHOLE SPICES⟩ TO POT |
| PROCESS 2 | SET FIRE AT THERMAL POWER 10 |
| PROCESS 3 | ADD AND MIX ⟨GG PASTE⟩ |
| PROCESS 4 | STOP MIXING |
| PROCESS 5 | ADD AND MIX ⟨ONION PASTE⟩ |
| PROCESS 6 | STOP MIXING |
| PROCESS 7 | ADD AND MIX ⟨POWDER SPICES AND SALT⟩ |
| PROCESS 8 | STOP MIXING |
| PROCESS 9 | ADD AND MIX ⟨CHICKEN THIGH⟩ |
| PROCESS 10 | STOP MIXING TO TURN UP THERMAL POWER TO 20, AND THEN MIX AGAIN |
| PROCESS 11 | ADD AND MIX ⟨CRUSHED TOMATO⟩ AND ⟨ROOM TEMPERATURE WATER⟩ |
| PROCESS 12 | STOP MIXING TO TURN DOWN THERMAL POWER TO 10, AND THEN COVER POT |
| PROCESS 13 | TURN DOWN THERMAL POWER TO 6 |
| PROCESS 14 | UNCOVER POT |
| PROCESS 15 | MIX |
| PROCESS 16 | STOP MIXING TO ADD AND MIX ⟨YOGURT + CASHEW NUT PASTE⟩ |
| PROCESS 17 | TURN UP THERMAL POWER TO 20, AND THEN MIX |
| PROCESS 18 | STOP FIRE (OFF) TO ADD AND MIX ⟨FRESH CREAM⟩ |
| PROCESS 19 | STOP MIXING, AND IT HAS BEEN COMPLETED |

# FIG. 7

⟨STATE CHANGES (COOKING MEANINGS) INTENDED BY CHEF IN EACH PROCESS⟩

1. MOISTURE EVAPORATION (CHANGE IN AMOUNT OF MOISTURE)

2. PROTEIN DENATURATION (ELASTICITY)

3. PROTEIN DENATURATION (AMINO ACID)

4. MAILLARD REACTION

5. CARAMÉLISER (CARAMELIZATION)

6. GELATINIZATION

7. EMULSIFICATION

8. INGREDIENT INTERACTION

9. MASS TRANSFER, TISSUE DESTRUCTION, EXTRACTION

10. FERMENTATION

11. GLUTEN FORMATION

12. THIXOTROPY, RHEOPEXY

:

# FIG. 8

<Sensor>

| | | |
|---|---|---|
| Camera (Color/Texture/Motion/Bubble/···) | ⇐ | RGB-D Camera |
| Sound | ⇐ | microphone |
| Weight | ⇐ | Weight Scale |
| Temperature | ⇐ | Thermometer |
| Time | ⇐ | Timer |
| Viscosity | ⇐ | Viscosity Sensor |
| Hardness | ⇐ | Hardness Sensor |
| Taste (Sugar/Saltness/acidity/···) | ⇐ | Taste Sensor |
| Aroma(Smell) | ⇐ | Aroma Sensor |

EP 4 660 902 A1

## FIG. 9

<COOKING MEANINGS>

1. CHANGE IN AMOUNT OF MOISTURE
2. PROTEIN DENATURATION (ELASTICITY)
3. PROTEIN DENATURATION (AMINO ACID)
4. MAILLARD REACTION
5. CARAMÉLISER (CARAMELIZATION)
6. GELATINIZATION
7. EMULSIFICATION
8. INGREDIENT INTERACTION
9. MASS TRANSFER, TISSUE DESTRUCTION, EXTRACTION
10. FERMENTATION
11. GLUTEN FORMATION
12. THIXOTROPY, RHEOPEXY

    ・
    ・
    ・
    ・

| Camera |
| Sound |
| Weight |
| Temperature |
| Time |
| Viscosity |
| Hardness |
| Taste |
| Aroma(Smell) |

| PROCESS ID | WORK CONTENTS |
|---|---|
| PROCESS 1 | PUT ⟨SALAD OIL⟩ AND ⟨WHOLE SPICES⟩ TO POT |
| PROCESS 2 | SET FIRE AT THERMAL POWER 10 |
| PROCESS 3 | ADD AND MIX ⟨GG PASTE⟩ |
| PROCESS 4 | STOP MIXING |
| PROCESS 5 | ADD AND MIX ⟨ONION PASTE⟩ |
| PROCESS 6 | STOP MIXING |
| PROCESS 7 | ADD AND MIX ⟨**POWDER SPICES** AND SALT⟩ |
| PROCESS 8 | STOP MIXING |
| PROCESS 9 | ADD AND MIX ⟨CHICKEN THIGH⟩ |
| PROCESS 10 | STOP MIXING TO TURN UP THERMAL POWER TO 20, AND THEN MIX AGAIN |
| PROCESS 11 | ADD AND MIX ⟨CRUSHED TOMATO⟩ AND ⟨ROOM TEMPERATURE WATER⟩ |
| PROCESS 12 | STOP MIXING TO TURN DOWN THERMAL POWER TO 10, AND THEN COVER POT |
| PROCESS 13 | TURN DOWN THERMAL POWER TO 6 |
| PROCESS 14 | UNCOVER POT |
| PROCESS 15 | MIX |
| PROCESS 16 | STOP MIXING TO ADD AND MIX ⟨YOGURT + **CASHEW NUT PASTE**⟩ |
| PROCESS 17 | TURN UP THERMAL POWER TO 20, AND THEN MIX |
| PROCESS 18 | STOP FIRE (OFF) TO ADD AND MIX ⟨FRESH CREAM⟩ |
| PROCESS 19 | STOP MIXING, AND IT HAS BEEN COMPLETED |

EP 4 660 902 A1

## FIG. 10

**11**

SENSOR GROUP (for human and environment)

| Vision(RGB video) x N | Voice | Temperature (room, near pod, etc) | Humidity (room, near pod, etc) | Sound |
|---|---|---|---|---|
| Vision(Depth) x M | Vision(Thermal) x L | Smell | Air flow | Time | Others |

A3

A2

A1

PROCESS DATA

COOKING RECORDING APPARATUS

~1

A4

**12**

SENSOR GROUP (for pod, pan, tools, ingredient)

| Vision(RGB video) x N | Sound | Temperature (pod, ingredients, etc) | Weight (ingredients, etc) | Time |
|---|---|---|---|---|
| Vision(Depth) x M | Vision(Thermal) x L | Aroma | Hardness | Viscosity | Taste (Sugar/saltness /acidity/···) | Others |

A5

EP 4 660 902 A1

# FIG. 11

111

**SENSOR GROUP (for human and environment)**

| Vision(RGB video)x N | Voice | Temperature (room, near pod, etc) | Humidity (room, near pod, etc) | Sound |
|---|---|---|---|---|

| Vision(Depth)x M | Vision(Thermal)x L | Smell | Air flow | Time | Others |
|---|---|---|---|---|---|

A15

A14

A13
Question, Confirmation

A11
Navigation /Action Command

COOKING ASSISTANCE APPARATUS

101

102

Control

A12

A17

112

**SENSOR GROUP (for pod, pan, tools, ingredient)**

| Vision(RGB video)x N | Sound | Temperature (pod, ingredients, etc) | Weight (ingredients, etc) | Time |
|---|---|---|---|---|

| Vision(Depth)x M | Vision(Thermal)x L | Aroma | Hardness | Viscosity | Taste (Sugar/saltness /acidity/…) | Others |
|---|---|---|---|---|---|---|

A16

EP 4 660 902 A1

FIG. 12

# FIG. 13

```
┌─────────────────────────────────┐
│   START OF PROCESSING OF         │
│   COOKING RECORDING APPARATUS    │
└─────────────────────────────────┘
              │
              ▼
┌─────────────────────────────────┐
│   ACQUIRE PROCESS DATA Rp(t)     │  S1
└─────────────────────────────────┘
              │
              ▼
┌─────────────────────────────────┐
│   ACQUIRE ACTION DATA Ad(t) ON BASIS OF   │  S2
│   SENSING RESULT FOR ACTION OF CHEF       │
└─────────────────────────────────┘
              │
              ▼
┌───────────────────────────────────────────────┐
│   ACQUIRE SENSOR DATA Sd(t) ON BASIS OF SENSING RESULTS   │  S3
│   FOR STATE OF INGREDIENTS AND STATE OF COOKING UTENSILS   │
└───────────────────────────────────────────────┘
              │
              ▼
┌───────────────────────────────────────────────┐
│   GENERATE COOKING RECORD DATA                 │  S4
│   BY SYNCHRONIZING PIECES OF DATA WITH EACH OTHER │
└───────────────────────────────────────────────┘
              │
              ▼
   ◁─────────────────────────────────▷  S5
        HAS DISH BEEN COMPLETED?         NO
              │
              │ YES
              ▼
        ┌───────────┐
        │    END    │
        └───────────┘
```

# FIG. 14

START OF TRAINING PROCESSING OF
MODEL GENERATION APPARATUS

ACQUIRE COOKING RECORD DATA — S11

PERFORM TRAINING ON BASIS OF
VARIOUS PIECES OF COOKING RECORD DATA AND
GENERATE COOKING PROCESS GENERATION MODEL — S12

RETRAIN COOKING PROCESS GENERATION MODEL
BY OMITTING SENSOR DATA — S13

DISTRIBUTE PARAMETERS OF
COOKING PROCESS GENERATION MODEL — S14

END

# FIG. 15

START OF COOKING PROCESS DATA GENERATION PROCESSING OF MODEL GENERATION APPARATUS

↓

ACQUIRE PROCESS DATA Rp(t) OF DISH TO BE REPRODUCED — S21

↓

GENERATE INITIAL VALUES OF ACTION DATA Ad(t) AND SENSOR DATA Sd(t) — S22

↓

DISTRIBUTE COOKING PROCESS DATA INCLUDING PROCESS DATA Rp(t) AND INITIAL VALUES — S23

↓

END

# FIG. 16

## COOKING PROCESS DATA

· PROCESS DATA Rp(t) (rpc^(t))

· INITIAL VALUE OF ACTION DATA Ad(t) (yc3^(t) t=t0, t1, t2, ···, t5)

· INITIAL VALUE OF SENSOR DATA Sd(t) (yc2^(t), yc1^(t) t=t0, t1, t2, ···, t5)

# FIG. 17

```
┌──────────────────────────────┐
│      START OF PROCESSING OF   │
│  COOKING ASSISTANCE APPARATUS │
└──────────────────────────────┘
                │
                ▼
┌──────────────────────────────┐ S101
│   ACQUIRE COOKING PROCESS DATA │
└──────────────────────────────┘
                │           ◄─────────── ( 1 )
                ▼
┌──────────────────────────────┐ S102
│      MAKE PREDICTION ON BASIS OF      │
│ COOKING PROCESS GENERATION MODEL │
└──────────────────────────────┘
                │
                ▼
┌──────────────────────────────┐ S103
│        SET WORK ENTITY        │
└──────────────────────────────┘
                │
                ▼
         IS WORK FOR USER?  S104 ──── NO ──────────┐
                │ YES                              │
                ▼                                  ▼
┌──────────────────────┐ S105    ┌──────────────────────────┐ S109
│   PERFORM NAVIGATION  │         │    CONTROL COOKING ROBOT  │
└──────────────────────┘         │  AND CAUSE COOKING ROBOT  │
                │                │       TO EXECUTE WORK      │
                ▼                └──────────────────────────┘
┌──────────────────────┐ S106                   │
│  ACQUIRE SENSING RESULT│                       ▼
│    FOR ACTION OF USER │         ┌──────────────────────────┐ S110
└──────────────────────┘         │   ACQUIRE SENSING RESULT   │
                │                │ FOR ACTION OF COOKING ROBOT │
                ▼                └──────────────────────────┘
┌──────────────────────┐ S107                   │
│   ACQUIRE SENSING RESULTS │                   ▼
│ FOR STATE OF INGREDIENTS AND │  ┌──────────────────────────┐ S111
│  STATE OF COOKING UTENSILS │    │   ACQUIRE SENSING RESULTS │
└──────────────────────┘         │ FOR STATE OF INGREDIENTS AND │
                │                │  STATE OF COOKING UTENSILS │
                ▼                └──────────────────────────┘
NO ── HAS PROCESS ENDED? S108                    │
                │ YES                            ▼
                ▼              HAS PROCESS ENDED? S112 ── NO ──┘
                │                                │ YES
                │◄───────────────────────────────┘
                ▼
   HAS DISH BEEN COMPLETED? S113 ── NO ──► ( 1 )
                │ YES
                ▼
          ┌──────────┐
          │    END   │
          └──────────┘
```

## FIG. 18

EP 4 660 902 A1

FIG. 19

EP 4 660 902 A1

FIG. 20

CHEF yc3 (t)
×(1−α3)
22-3
×α3

COOKING UTENSILS yc2 (t)
×(1−α2)
22-2
×α2

INGREDIENTS yc1 (t)
×(1−α1)
22-1
×α1

PROCESS rpc (t)
×(1−α0)
22-0
×α0

$Z^{-1}$

RNN

Back Propagation Through time

TEACHING DATA

yc3^ (t+1)    yc3 (t+1)
yc2^ (t+1)    yc2 (t+1)
yc1^ (t+1)    yc1 (t+1)
rpc^ (t+1)    rpc (t+1)

21

EP 4 660 902 A1

FIG. 21

## FIG. 22

$y3(t) = F3(x3(t))$

$y2(t) = H2(x2(t))$

$y1(t) = H1(x1(t))$

$u4p(t)$

$u4r(t)$

USER

COOKING ROBOT

$u3(t)$

COOKING UTENSILS
$x2(t+1) = F2(x2(t), u3(t))$

$u2(t)$

INGREDIENTS
$x1(t+1) = F1(x1(t), u2(t))$

# FIG. 23

EP 4 660 902 A1

# FIG. 24

## FIG. 25

# FIG. 26

y1j(t)
=VISCOSITY OF
INGREDIENTS

L11

L12

y2j(t)
=SPEED OF TURNING
STIRRING STICK

3

2

1

t0    t1    t2    T

# FIG. 27

ADJUSTMENT OF LEVEL OF HEATER
→TAKEN CHARGE BY USER

$y1i(t)$ = TEMPERATURE

$y2i(t)$ = LEVEL OF HEATER

4.0
3.5
3.0

t0  t1  t2  t3  T

STIRRING OF INGREDIENTS
→TAKEN CHARGE BY COOKING ROBOT

$y1j(t)$ = VISCOSITY OF INGREDIENTS

$y2j(t)$ = SPEED OF TURNING STIRRING STICK

3
2
1

t0  t1  t2  T

EP 4 660 902 A1

FIG. 28

Teaching data

Sd(t+1)  Ad(t+1)  Rp(t+1)  Cc(t+1)  A32

Teaching data

A28

A24 Sd^(t+1) Sensor data prediction

A25 Ad^(t+1) Action data prediction

A26 Rp^(t+1) Recipe Process Prediction

A31 Cc^(t+1) Cooking Condition Estimation/Prediction

Training

AI System (RNN/Transformer)

A27

Sd(t)  Ad(t)  Rp(t)

A21 Sensor data sequence

A22 Action data sequence

A23 Recipe Process sequence

Data Recorder

## FIG. 29

TAUGHT BY CHEF

$\downarrow$

$\text{rpc1}(t) = [\text{rpc}(t), [\text{COOKING MEANING}, \text{PROGRESS STATUS}]]$

$\uparrow$

One hot vector EXPRESSING CHEMICAL REACTIONS
(MOISTURE EVAPORATION, PROTEIN DENATURATION, MAILLARD REACTION, ...)

# FIG. 30

EP 4 660 902 A1

# FIG. 31

## FIG. 32

SENSOR DATA
FOR INGREDIENTS
(INCLUDING IMAGES)

$yc1(t)$

PROCESS DATA
(INCLUDING INFORMATION
ON INGREDIENTS
AND CONTENTS OF WORKS)

$rpc(t)$

131

INFORMATION PROCESSING UNIT

141

V&L
Foundation
Model

144

VQA

145

STATE
VERIFICATION UNIT

[STATE i, YES/NO, ...]

· PHENOMENON OCCURRING DUE
  TO CHEMICAL REACTION

· LINGUISTIC DESCRIPTION OF STATE AT
  TIME OF COMPLETION OF CHEMICAL REACTION

142

CHEMICAL REACTION
DETECTION UNIT
(COOKING DATABASE
OR LLM)

LIST OF
NAMES OF
CHEMICAL
REACTIONS

143

FEATURE
DETECTION UNIT
(COOKING DATABASE
OR LLM)

EP 4 660 902 A1

## FIG. 33

Q. WHAT IS CHEMICAL REACTION WHEN COOKING INGREDIENTS CONTAINING EGGS AND SUGAR WITH HEAT?

A. CHEMICAL REACTIONS WHEN COOKING INGREDIENTS CONTAINING EGGS AND SUGAR WITH HEAT INCLUDE CHEMICAL REACTIONS AS FOLLOWS.

1. GLYCOSYLATION REACTION: MOLECULES OF SUGAR ARE DECOMPOSED DUE TO HEATING, AND GLUCOSE, WHICH IS UNIT OF SUGAR, IS DISSOCIATED. GLUCOSE REACTS WITH AMINO ACIDS IN EGGS, AND GLYCOSYLATION REACTION TAKES PLACE.

2. MAILLARD REACTION: SUGAR AND PROTEINS REACT WITH EACH OTHER DUE TO HEATING, AND MAILLARD REACTION TAKES PLACE. THIS REACTION GENERATES BROWN TO GOLDEN PIGMENTS ON SURFACES OF INGREDIENTS AND PRODUCES ROASTING FLAVOR.

3. PROTEIN DENATURATION: PROTEINS IN EGGS ARE DENATURED DUE TO HEATING. STERIC STRUCTURE OF PROTEINS CHANGES, AND SOLIDIFICATION AND FIXATION TAKE PLACE.

4. CARAMÉLISER: CARAMÉLISER REACTION TAKES PLACE WHEN SUGAR IS HEATED. SUGAR IS DECOMPOSED, AND BROWN-BLACK CARAMEL IS GENERATED.

EP 4 660 902 A1

## FIG. 34

Q. IN CASE WHERE THERE ARE IMAGE SENSOR, TEMPERATURE SENSOR, WEIGHT SENSOR, AND VISCOSITY SENSOR, WHAT KIND OF CHANGE IS OBSERVED DUE TO MAILLARD REACTION?

A. CHANGES AS FOLLOWS ARE LIKELY TO BE OBSERVED DUE TO MAILLARD REACTION.

1. IMAGE SENSOR: SURFACES OF INGREDIENTS CHANGE TO BROWN TO GOLDEN COLOR DUE TO MAILLARD REACTION.

2. TEMPERATURE SENSOR: MAILLARD REACTION PROGRESSES WITH HEATING. CHANGES IN TEMPERATURE ARE MEASURED BY TEMPERATURE SENSOR IN COURSE OF HEATING.

3. WEIGHT SENSOR: DURING MAILLARD REACTION, SUGAR AND MOISTURE ARE SOMETIMES VOLATILIZED DUE TO REACTION. CHANGES IN WEIGHT OF INGREDIENTS ARE MEASURED BY WEIGHT SENSOR.

4. VISCOSITY SENSOR: PROTEINS ARE DENATURED DUE TO MAILLARD REACTION, AND VISCOSITY OF INGREDIENTS IS LIKELY TO CHANGE. CHANGES IN VISCOSITY OF INGREDIENTS ARE MEASURED BY VISCOSITY SENSOR.

FIG. 35

121 — COOKING PROCESS CONTROL UNIT

COOKING PROCESS GENERATION MODEL

INFORMATION PROCESSING UNIT — 131

$y3\hat{}(t+1)$ $y2\hat{}(t+1)$ $y1\hat{}(t+1)$ $rp\hat{}(t+1)$

$Z^{-1}$ $Z^{-1}$ $Z^{-1}$ $Z^{-1}$

$\times \alpha 3$ $\times \alpha 2$ $\times \alpha 1$ $\times \alpha 0$

$\times (1-\alpha 3)$ $\times (1-\alpha 2)$ $\times (1-\alpha 1)$ $\times (1-\alpha 0)$

121-3 121-2 121-1 121-0

ROBOT CONTROL UNIT — 123

CONTROL COMMAND

COOKING ROBOT

NAVIGATION UNIT

122

Visual, VOICE

USER

$y3(t)$

COOKING UTENSILS $y2(t)$

INGREDIENTS $y1(t)$

PROCESS $rp(t)$

101

## FIG. 36

SENSOR GROUP (for human and environment)

| Vision(RGB video)x N | Voice | Temperature (room, near pod, etc) | Humidity (room, near pod, etc) | Sound |
| Vision(Depth)x M | Vision(Thermal)x L | Smell | Air flow | Time | Others |

111

A15

A13 Question, Confirmation

A14

A11 Navigation /Action Command

COOKING ASSISTANCE APPARATUS

101

102

Control

A12

112

A16

A17

SENSOR GROUP (for pod, pan, tools, ingredient)

| Vision(RGB video)x N | Sound | Temperature (pod, ingredients, etc) | Weight (ingredients, etc) | Time |
| Vision(Depth)x M | Vision(Thermal)x L | Aroma | Hardness | Viscosity | Taste (Sugar/saltness /acidity/…) | Others |

EP 4 660 902 A1

## FIG. 37

COOKING ASSISTANCE APPARATUS — 101

A101 Srd(t) Reduced Sensor data sequence

A108 — Sd^(t+1)

Interpolation — A104

A102 Ad(t) Action data sequence

A103 Rp(t) Recipe Process sequence

Trained AI System (RNN/Transformer)

Sd^(t+1)...Sd^(t+Ti) Sensor data prediction — A105

Ad^(t+1)...Ad^(t+Ti) Action data prediction — A106

Rp^(t+1)...Rp^(t+Ti) Recipe Process Prediction — A107

UI System

Question Confirmation

Navigation /Action Command

Control

EP 4 660 902 A1

FIG. 38

101

COOKING ASSISTANCE APPARATUS

A108

A101 Srd(t) Reduced Sensor data sequence

Interpolation A104

Sd^(t+1)

A102 Ad(t) Action data sequence

A103 Rp(t) Recipe Process sequence

Trained AI System (RNN/Transformer)

Sd^(t+1)...Sd^(t+Ti) Sensor data prediction A105

Ad^(t+1)...Ad^(t+Ti) Action data prediction A106

Rp^(t+1)...Rp^(t+Ti) Recipe Process Prediction A107

Cc^(t+1)...Cc^(t+Ti) Cooking Condition Estimation/Prediction A121

UI System

Question, Confirmation

Navigation/Action Command

Control

Condition Presentation

## FIG. 39

EP 4 660 902 A1

# FIG. 40

Output
Probabilities

Softmax

Linear

Add & Norm

Feed
Forward

Add & Norm

Multi-Head
Attention

Add & Norm

Masked
Multi-Head
Attention

Nx

Add & Norm

Feed
Forward

N=6 LAYERS

Nx

Add & Norm

Multi-Head
Attention

Positional
Encoding

Input
Embedding

Inputs

Positional
Encoding

Output
Embedding

Outputs
(shifted right)

# FIG. 41

EP 4 660 902 A1

# FIG. 42

FIG. 43

*FIG. 44*

*FIG. 45*

EP 4 660 902 A1

## FIG. 46

# INTERNATIONAL SEARCH REPORT

| International application No. |
|---|
| **PCT/JP2023/030737** |

**A. CLASSIFICATION OF SUBJECT MATTER**

*G06N 20/00*(2019.01)i; *A23L 5/10*(2016.01)i; *A47J 44/00*(2006.01)i; *B25J 9/22*(2006.01)i
FI:  G06N20/00 130; A23L5/10; A47J44/00; B25J9/22 Z

According to International Patent Classification (IPC) or to both national classification and IPC

**B. FIELDS SEARCHED**

Minimum documentation searched (classification system followed by classification symbols)

G06N20/00; A23L5/10; A47J44/00; B25J9/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/071150 A1 (SONY CORPORATION) 09 April 2020 (2020-04-09)<br>paragraphs [0028]-[0050], [0366]-[0443] | 1-4, 6-14, 16-20 |
| Y | WO 2020/179407 A1 (SONY CORPORATION) 10 September 2020 (2020-09-10)<br>paragraphs [0031]-[0047], [0121]-[0126], [0455]-[0460] | 1-4, 6-14, 16-20 |
| A | JP 2022-098762 A (GIANT CO., LTD.) 04 July 2022 (2022-07-04)<br>paragraphs [0048]-[0060] | 5, 15 |
| A | JP 2020-131339 A (CONNECTED ROBOTICS INC.) 31 August 2020 (2020-08-31)<br>paragraphs [0027], [0031]-[0034] | 5, 15 |
| A | JP 2020-166557 A (NTT DATA CORP.) 08 October 2020 (2020-10-08)<br>paragraphs [0022], [0039], [0063]-[0064] | 5, 15 |
| A | JP 2021-140711 A (FUJI INDUSTRIAL CO., LTD.) 16 September 2021 (2021-09-16)<br>paragraphs [0102]-[0149] | 1-20 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **06 November 2023** | **14 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/030737**

| Patent document cited in search report | | | Publication date (day/month/year) | Patent family member(s) | | | Publication date (day/month/year) |
|---|---|---|---|---|---|---|---|
| WO | 2020/071150 | A1 | 09 April 2020 | US | 2022/0118605 | A1 | |
| | | | | paragraphs [0135]-[0158], [0495]-[0574] | | | |
| | | | | EP | 3861906 | A1 | |
| | | | | CN | 112788972 | A | |
| | | | | KR | 10-2021-0066805 | A | |
| WO | 2020/179407 | A1 | 10 September 2020 | US | 2022/0091586 | A1 | |
| | | | | paragraphs [0077]-[0096], [0185]-[0190], [0541]-[0547] | | | |
| | | | | JP | 2022-063884 | A | |
| JP | 2022-098762 | A | 04 July 2022 | (Family: none) | | | |
| JP | 2020-131339 | A | 31 August 2020 | WO | 2020/171085 | A1 | |
| | | | | paragraphs [0027], [0031]-[0034] | | | |
| JP | 2020-166557 | A | 08 October 2020 | (Family: none) | | | |
| JP | 2021-140711 | A | 16 September 2021 | (Family: none) | | | |

Form PCT/ISA/210 (patent family annex) (January 2015)

83

## REFERENCES CITED IN THE DESCRIPTION

**Patent documents cited in the description**

- JP 2020075301 A
- JP 2020075302 A
- JP 2022063884 A
- JP 2020057331 A

**Non-patent literature cited in the description**

- **A. RADFORD**. Learning Transferable Visual Models From Natural Language Supervision. *CoRR*, March 2021, https://arxiv.org/abs/2103.00020
- **H. ZHANG**. GLIPv2: Unifying Localization and Vision-Language Understanding. *arXiv*, 2022, https://arxiv.org/abs/2206.05836
- **ASHISH VASWANI**. *Attention is All You Need*, June 2017, https://arxiv.org/abs/1706.03762
- **ALEXEY DOSXOVISKIY**. *An Image is Worth 16x16 Words*, October 2022
- **ANTHONY BROHAN**. *RT-1:Robotics Transformer for Real-World Control at Scale*, https://robotics-transformer.github.io